(19) Europäisches Patentamt

European Patent Office

Office européen des brevets

(11) **EP 4 472 201 A1**

(12) **EUROPEAN PATENT APPLICATION**
published in accordance with Art. 153(4) EPC

(43) Date of publication:
**04.12.2024 Bulletin 2024/49**

(21) Application number: **22922632.9**

(22) Date of filing: **25.01.2022**

(51) International Patent Classification (IPC):
**H04N 19/186** (2014.01)   **H04N 19/50** (2014.01)
**H04N 19/159** (2014.01)

(52) Cooperative Patent Classification (CPC):
**H04N 19/186; H04N 19/50;** H04N 19/159

(86) International application number:
**PCT/CN2022/073876**

(87) International publication number:
**WO 2023/141781 (03.08.2023 Gazette 2023/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **HUO, Junyan
  Dongguan, Guangdong 523860 (CN)**

• **MA, Yanzhuo
  Dongguan, Guangdong 523860 (CN)**
• **YANG, Fuzheng
  Dongguan, Guangdong 523860 (CN)**
• **WANG, Danni
  Dongguan, Guangdong 523860 (CN)**
• **DU, Hongqing
  Dongguan, Guangdong 523860 (CN)**
• **LI, Ming
  Dongguan, Guangdong 523860 (CN)**

(74) Representative: **Taor, Simon Edward William et al
Venner Shipley LLP
200 Aldersgate
London EC1A 4HD (GB)**

(54) **ENCODING AND DECODING METHOD AND APPARATUS, ENCODING DEVICE, DECODING DEVICE AND STORAGE MEDIUM**

(57)    A coding method and apparatus, an encoding device, a decoding device, and a storage medium are provided. The method includes the following. A reference sample for a current block is determined. A weighting factor is determined according to the reference sample. A prediction value of a first colour component of a sample to-be-predicted in the current block is determined by weighting a first colour component value of the reference sample according to the weighting factor. In this way, it is possible to improve accuracy of chroma prediction, save bit rate, and improve coding performance.

EP 4 472 201 A1

```
┌─────────────────────────────────────────────────┐
│  DETERMINE REFERENCE SAMPLE FOR CURRENT BLOCK     │──── S501
└─────────────────────────────────────────────────┘
                      │
                      ▼
┌─────────────────────────────────────────────────┐
│  DETERMINE WEIGHTING FACTOR ACCORDING TO REFERENCE│──── S502
│                    SAMPLE                          │
└─────────────────────────────────────────────────┘
                      │
                      ▼
┌─────────────────────────────────────────────────┐
│  DETERMINE PREDICTION VALUE OF FIRST COLOUR COMPONENT│── S503
│  OF SAMPLE TO-BE-PREDICTED IN CURRENT BLOCK BY     │
│  WEIGHTING FIRST COLOUR COMPONENT VALUE OF REFERENCE│
│  SAMPLE ACCORDING TO WEIGHTING FACTOR              │
└─────────────────────────────────────────────────┘
```

FIG. 5

**Description**

TECHNICAL FIELD

Embodiments of the disclosure relate to the field of video coding technology, and more particularly, to a coding method and apparatus, an encoding device, a decoding device, and a storage medium.

BACKGROUND

With increase in people's requirements on video display quality, new video application forms such as high definition video and ultra high definition video emerge. H.265/high efficiency video coding (HEVC) is currently unable to satisfy needs of rapid development of video applications. Joint video exploration team (JVET) proposes a next-generation video coding standard, namely H.266/versatile video coding (WC), with a corresponding test model of WC test model (VTM).

At present, a cross-component linear model (CCLM)-based component prediction method is already applied in H.266/VVC, and a chroma component of a current block can be predicted according to a luma component of the current block. However, in an existing CCLM technology, for some coding blocks, a deviation between a prediction value and an original value is large, which results in low prediction accuracy and quality degradation, thus degrading coding performance.

SUMMARY

Embodiments of the disclosure provide a coding method and apparatus, an encoding device, a decoding device, and a storage medium, which can improve accuracy of chroma prediction, save bit rate, and improve coding performance.

The technical solutions of embodiments of the disclosure can be implemented as follows.

In a first aspect, a decoding method is provided in embodiments of the disclosure. The method includes the following. A reference sample for a current block is determined. A weighting factor is determined according to the reference sample. A prediction value of a first colour component of a sample to-be-predicted in the current block is determined by weighting a first colour component value of the reference sample according to the weighting factor.

In a second aspect, an encoding method is provided in embodiments of the disclosure. The method includes the following. A reference sample for a current block is determined. A weighting factor is determined according to the reference sample. A prediction value of a first colour component of a sample to-be-predicted in the current block is determined by weighting a first colour component value of the reference sample according to the weighting factor.

In a third aspect, an encoding apparatus is provided in embodiments of the disclosure. The encoding apparatus includes a first determining unit, a first calculating unit and a first predicting unit. The first determining unit is configured to determine a reference sample for a current block. The first calculating unit is configured to determine a prediction value of a first colour component of a sample to-be-predicted in the current block by weighting a first colour component value of the reference sample according to the weighting factor.

In a fourth aspect, an encoding device is provided in embodiments of the disclosure. The encoding device includes a first memory and a first processor. The first memory is configured to store computer programs executable by the first processor. The first processor is configured to execute the computer programs to perform the method described in the second aspect.

In a fifth aspect, a decoding apparatus is provided in embodiments of the disclosure. The decoding apparatus includes a second determining unit, a second calculating unit, and a second predicting unit. The second determining unit is configured to determine a reference sample for a current block. The second calculating unit is configured to determine a weighting factor according to the reference sample. The second predicting unit is configured to determine a prediction value of a first colour component of a sample to-be-predicted in the current block by weighting a first colour component value of the reference sample according to the weighting factor.

In a sixth aspect, a decoding device is provided in embodiments of the disclosure. The decoding device includes a second memory and a second processor. The second memory is configured to store computer programs executable by the second processor. The second processor is configured to execute the computer programs to perform the method described in the first aspect.

In a seventh aspect, a computer-readable storage medium is provided in embodiments of the disclosure. The computer-readable storage medium is configured to store computer programs which, when executed, are operable to perform the method described in the first aspect or perform the method described in the second aspect.

Embodiments of the disclosure provide a coding method and apparatus, an encoding device, a decoding device, and a storage medium. At an encoding end or a decoding end, the reference sample for the current block is determined, the weighting factor is determined according to the reference sample, and the prediction value of the first colour component of

EP 4 472 201 A1

the sample to-be-predicted in the current block is determined by weighting the first colour component value of the reference sample according to the weighting factor. In this way, according to colour component information of the reference sample for the current block and colour component information of the sample to-be-predicted in the current block, the weighting factor corresponding to the sample to-be-predicted in the current block can be calculated. In addition, different samples to-be-predicted may correspond to different weighting factors. By using the weighting factor for chroma prediction of the sample to-be-predicted in the current block, it is possible to improve accuracy of chroma prediction, save bit rate, and improve coding performance.

BRIEF DESCRIPTION OF THE DRAWINGS

FIG. 1 is a schematic diagram illustrating distribution of valid neighbouring areas.

FIG. 2 is a schematic diagram illustrating distribution of selection areas in different prediction modes.

FIG. 3 is a schematic flowchart of a model parameter derivation scheme.

FIG. 4A is a schematic block diagram of an encoder provided in embodiments of the disclosure.

FIG. 4B is a schematic block diagram of a decoder provided in embodiments of the disclosure.

FIG. 5 is schematic flowchart I of a decoding method provided in embodiments of the disclosure.

FIG. 6 is a schematic diagram illustrating selected locations of reference samples provided in embodiments of the disclosure.

FIG. 7 is schematic flowchart II of a decoding method provided in embodiments of the disclosure.

FIG. 8 is schematic flowchart III of a decoding method provided in embodiments of the disclosure.

FIG. 9 is schematic flowchart I of an encoding method provided in embodiments of the disclosure.

FIG. 10 is schematic flowchart II of an encoding method provided in embodiments of the disclosure.

FIG. 11 is a schematic structural diagram of an encoding apparatus provided in embodiments of the disclosure.

FIG. 12 is a schematic structural diagram illustrating hardware of an encoding device provided in embodiments of the disclosure.

FIG. 13 is a schematic structural diagram of a decoding apparatus provided in embodiments of the disclosure.

FIG. 14 is a schematic structural diagram illustrating hardware of a decoding device provided in embodiments of the disclosure.

FIG. 15 is a schematic structural diagram of a coding system provided in embodiments of the disclosure.

DETAILED DESCRIPTION

In order for more comprehensive understanding of the features and technical contents of embodiments of the disclosure, the implementation of the embodiments of the disclosure will be described in detail below with reference to the accompanying drawings. The accompanying drawings are only intended for illustration rather than limiting the embodiments of the disclosure.

Unless defined otherwise, all technology and terminology used herein have the same meaning as that commonly understood by those of skilled in the technical field of the disclosure. The terminology used herein is only for the purpose of describing embodiments of the disclosure rather than limiting the disclosure.

In the following elaborations, "some embodiments" refers to a sub-set of all possible embodiments, but it can be understood that "some embodiments" can be the same sub-set or different sub-sets of all possible embodiments, and can be combined with each other without conflict. It should also be noted that, the terms "first/second/third" in the embodiments of the disclosure are merely intended for distinguishing similar objects, and do not mean a specific ordering of the objects. It can be understood that, the order or sequence of "first/second/third" can be changed when allowed, so that the embodiments of the disclosure described herein can be implemented in an order other than that illustrated or described herein.

In a video picture, a first colour component, a second colour component, and a third colour component are usually used to represent a coding block (CB). The three colour components are a luma component, a blue chroma component, and a red chroma component respectively. Specifically, the luma component is usually represented by a symbol Y, the blue chroma component is usually represented by a symbol Cb or U, and the red chroma component is usually represented by a symbol Cr or V. In this way, the video picture can be expressed in the format of YCbCr or YUV.

It can be understood that, in a current video picture or video coding process, a cross-component prediction technology mainly includes a cross-component linear model (CCLM) prediction mode and a multi-directional linear model (MDLM) prediction mode. No matter whether it is a model parameter derived according to the CCLM prediction mode or a model parameter derived according to the MDLM prediction mode, the prediction model corresponding thereto can be used to implement cross-colour-component prediction, for example, from the first colour component to the second colour component, from the second colour component to the first colour component, from the first colour component to the third colour component, from the third colour component to the first colour component, from the second colour component to the third colour component, or from the third colour component to the second colour component, etc.

Taking prediction from the first colour component to the second colour component as an example, assuming that the first colour component is a luma component and the second colour component is a chroma component, in order to reduce redundancy between the luma component and the chroma component, the CCLM prediction mode is used in versatile video coding (WC), that is, a chroma prediction value is constructed according to a reconstructed luma value of the same coding block, such as $Pred_C(i,j) = \alpha \cdot Rec_L(i,j) + \beta$.

$i, j$ represents a location coordinate of a sample to-be-predicted in a coding block, where $i$ represents a horizontal direction, and $j$ represents a vertical direction. $Pred_C(i,j)$ represents a chroma prediction value corresponding to the sample to-be-predicted at the location coordinate $(i,j)$ in the coding block, and $Rec_L(i,j)$ represents a reconstructed luma (after downsampling) value corresponding to the sample to-be-predicted at the location coordinate $(i, j)$ in the same coding block. In addition, $\alpha$ and $\beta$ represent model parameters, and the model parameters can be derived according to a reference sample.

A neighbouring area of the coding block may include five parts: a left neighbouring area, a top neighbouring area, a bottom-left neighbouring area, a top-left neighbouring area, and a top-right neighbouring area. In H.266A/VVC, there are three CCLM prediction modes, i. e. a neighbouring left and top intra-CCLM prediction mode (which can be represented by INTRA_LT_CCLM), a neighbouring left and bottom-left intra-CCLM prediction mode (which can be represented by INTRA_L_CCLM), and a neighbouring top and top-right intra-CCLM prediction mode (which can be represented by INTRA_T_CCLM). For each of the three prediction modes, a preset number (for example, four) of reference samples can be selected for derivation of the model parameters $\alpha$ and $\beta$, and the major difference between the three prediction modes lies in that selection areas corresponding to the reference sample for derivation of the model parameters $\alpha$ and $\beta$ are different.

Specifically, for a coding block with a size of W × H corresponding to a chroma component, assuming that a top selection area corresponding to the reference sample is W' and a left selection area corresponding to the reference sample is H', then for the INTRA LT_CCLM mode, the reference sample can be selected from the top neighbouring area and the left neighbouring area, i. e. W' = W and H' = H; for the INTRA_L_CCLM mode, the reference sample can be selected from a left neighbouring area and a bottom-left neighbouring area, i. e. H' = W + H and W' = 0; for the INTRA_T_CCLM mode, the reference sample can be selected from a top neighbouring area and a top-right neighbouring area, i. e. W' = W + H and H' = 0.

It should be noted that, in WC test model (VTM) 5.0, for the top-right neighbouring area, at most samples within the range W are stored, and for the bottom-left neighbouring area, at most samples within the range H are stored. Therefore, although the range of the selection area for the INTRA L_CCLM mode or the INTRA T_CCLM mode is defined as W + H, in practice, the selection area for the INTRA_L_CCLM mode is limited to H + H, and the selection area for the INTRA T_CCLM mode is limited to W + W. In this way, for the INTRA_L_CCLM mode, the reference sample can be selected from the left neighbouring area and the bottom-left neighbouring area, where H' = min{W + H, H + H}; for the INTRA T_CCLM mode, the reference sample can be selected from the top neighbouring area and the top-right neighbouring area, where W' = min{W + H, W + W}.

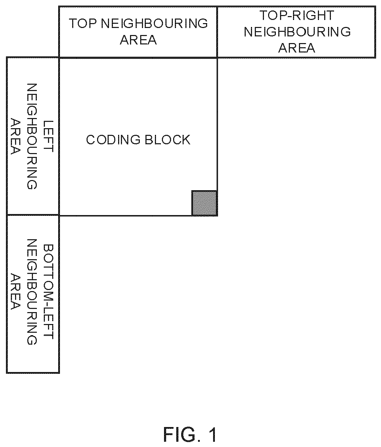

Referring to FIG. 1, FIG. 1 is a schematic diagram illustrating distribution of valid neighbouring areas. In FIG. 1, the left neighbouring area, the bottom-left neighbouring area, the top neighbouring area, and the top-right neighbouring area are all valid. In addition, the gray-filled block represents the sample to-be-predicted whose location coordinate is $(i,j)$ in the coding block.

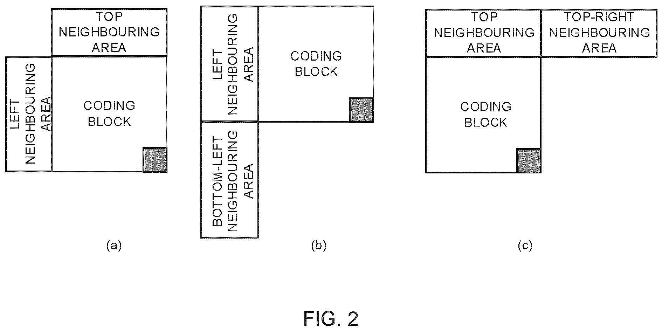

In this way, on the basis of FIG. 1, selection areas for the three prediction modes are illustrated in FIG. 2. In FIG. 2, (a) illustrates the selection area for the INTRA LT_CCLM mode, which includes the left neighbouring area and the top neighbouring area; (b) illustrates the selection area for the INTRA_L_CCLM mode, which includes the left neighbouring area and the bottom-left neighbouring area; (c) illustrates the selection area for the INTRA T_CCLM mode, which includes the top neighbouring area and the top-right neighbouring area. After the selection areas for the three prediction modes are determined, a sample for model parameter derivation can be selected from the selection areas. The sample thus selected can be referred to as a reference sample, and the number of reference samples is usually four. In addition, for a coding block with the size of W × H, the location of the reference sample thereof is usually fixed.

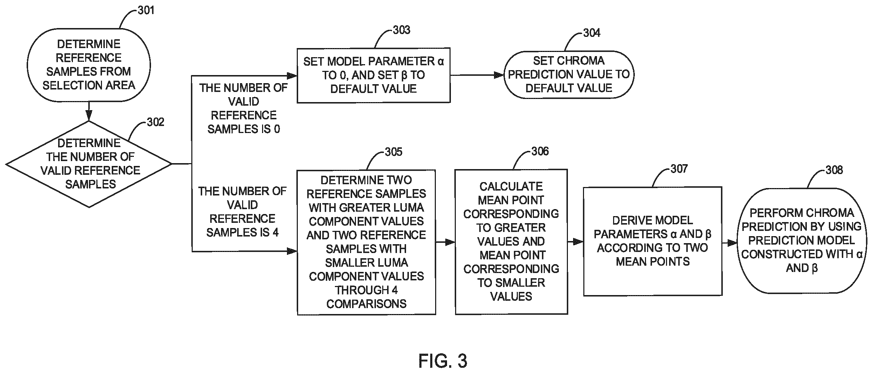

After the preset number of reference samples are determined, at present, chroma prediction is performed according to a schematic flowchart of a model parameter derivation scheme illustrated in FIG. 3. Assuming that the preset number is four, then according to the flows illustrated in FIG. 3, the process may include the following.

S301, reference samples are determined from a selection area.

S302, the number of valid reference samples are determined.

S303, if the number of valid reference samples is 0, model parameter $\alpha$ is set to 0 and model parameter $\beta$ is set to a default value.

S304, a chroma prediction value is set to the default value.

S305, if the number of valid reference samples is four, two reference samples with greater luma component values and two reference samples with smaller luma component values are determined through four comparisons.

S306, a mean point corresponding to the greater values and a mean point corresponding to the smaller values are calculated.

S307, the model parameters $\alpha$ and $\beta$ are derived according to the two mean points.

S308, chroma prediction is performed by using a prediction model constructed with $\alpha$ and $\beta$.

It should be noted that, in WC, the determination that the number of valid reference samples is 0 is made according to validity of the neighbouring area.

It should be further noted that, the prediction model is constructed based on the principle of "two points determines one straight line", where the two points can be referred to as fitting points. In an existing technical solution, after four reference samples are determined, two reference samples with greater luma component values and two reference samples with smaller luma component values are determined through four comparisons. Then a mean point (which can be represented by $mean_{max}$) is calculated according to the two reference samples with greater values, and another mean point (which can be represented by $mean_{min}$) is calculated according to the two reference samples with smaller values, so as to obtain the two mean points $mean_{max}$ and $mean_{min}$. Then $mean_{max}$ and $mean_{min}$ are taken as two fitting points, so as to derive the model parameters (represented by $\alpha$ and $\beta$). The prediction model is constructed according to $\alpha$ and $\beta$, and a chroma component is predicted with the prediction model.

However, in the related art, for each coding block, a simple linear model $Pred_C(i,j) = \alpha \cdot Rec_L(i,j) + \beta$ is used to predict a chroma component, and a sample at any location in the coding block is predicted with the same model parameters $\alpha$ and $\beta$. This may cause the following disadvantages. On one hand, for coding blocks with different content characteristics, a simple linear model is used for luma-to-chroma mapping so as to implement chroma prediction, but for some coding blocks, a luma-to-chroma mapping function cannot be fitted accurately with the simple linear model, and as a result, prediction effect for some coding blocks is not accurate enough. On the other hand, during prediction, the same model parameters $\alpha$ and $\beta$ are used for samples at different locations in the coding block, and prediction accuracy at different locations in the coding block also has big difference. That is, in the existing CCLM technology, for some coding blocks, a deviation between a prediction value and an original value is large, which results in low prediction accuracy and quality degradation, thus degrading coding performance.

To this end, embodiments of the disclosure provide a coding method. At an encoding end or a decoding end, a reference sample for a current block is determined, a weighting factor is determined according to the reference sample, and a prediction value of a first colour component of a sample to-be-predicted in the current block is determined by weighting a first colour component value of the reference sample according to the weighting factor. In this way, according to colour component information of the reference sample for the current block and colour component information of the sample to-be-predicted in the current block, the weighting factor corresponding to the sample to-be-predicted in the current block can be calculated. In addition, different samples to-be-predicted may correspond to different weighting factors. By using the weighting factor for chroma prediction of the sample to-be-predicted in the current block, it is possible to improve accuracy of chroma prediction, save bit rate, and improve coding performance.

Embodiments of the disclosure will be described in detail below with reference to the accompanying drawings.

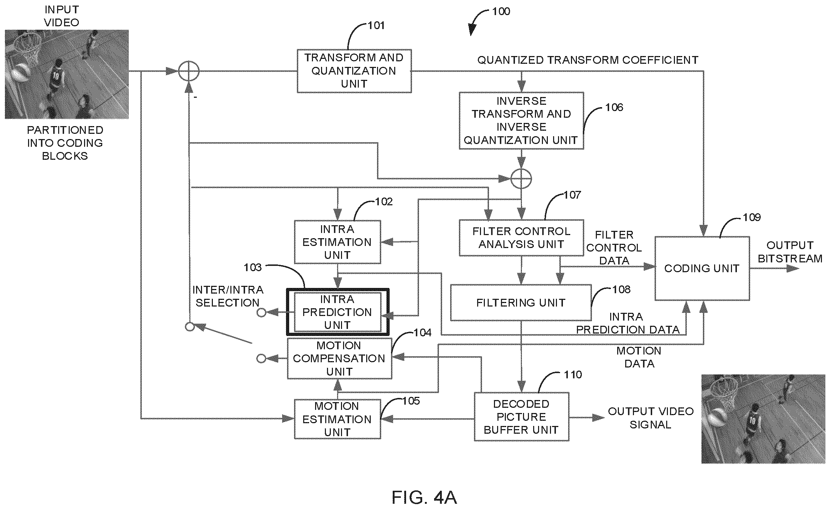

Referring to FIG. 4A, FIG. 4A is a schematic block diagram of an encoder provided in embodiments of the disclosure. As illustrated in FIG. 4A, the encoder (which is specifically a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, a coding unit 109, a decoded picture buffer unit 110, and the like. The filtering unit 108 can implement deblocking filtering and sample adaptive offset (SAO) filtering. The coding unit 109 can implement header information encoding and context-based adaptive binary arithmetic coding (CABAC). For an input original video signal, one video coding block can be obtained through partitioning of a coding tree unit (CTU). Then, for residual sample information obtained after intra prediction or inter prediction, the video coding block is transformed by the transform and quantization unit 101, including transforming the residual information from the sample domain to the transform domain, and the obtained transform coefficients are quantized, so as to further reduce bit rate. The intra estimation unit 102 and the intra prediction unit 103 are used to perform intra prediction on the coding block. Specifically, the intra estimation unit 102 and the intra prediction unit 103 are used to determine an intra prediction mode to-be-used to encode the coding block. The motion compensation unit 104 and the motion estimation unit 105 are used to perform inter prediction encoding on the received coding block relative to one or more blocks in one or more reference pictures, to provide temporal prediction information. The motion estimation performed by the motion estimation unit 105 is a process of generating a motion vector, where the motion vector can be used to estimate motion of the coding block. The motion compensation unit 104 is used to perform motion compensation based on the motion vector determined by the motion estimation unit 105. After the intra prediction mode is determined, the intra prediction unit 103 is used to provide the selected intra prediction data to the coding unit 109, and the motion estimation unit 105 is used to send the calculated motion vector data to the coding unit 109. In addition, the inverse transform and inverse quantization unit 106 is used for reconstruction of the coding block. A residual block is reconstructed in the sample domain, and blockiness artifacts of the reconstructed residual block are removed by the filter control analysis unit 107 and the filtering unit 108, and then the reconstructed residual block is added to a prediction block of a picture in the decoded picture buffer unit 110, to generate a reconstructed coding block. The coding unit 109 is used to encode various coding parameters and quantized transform coefficients. In the CABAC-based encoding algorithm, the context can be based on neighbouring coding blocks, and the coding unit 109 can be used to encode information indicating the determined intra prediction mode and output a bitstream of the video signal. The decoded picture buffer unit 110 is used to store reconstructed coding blocks in order for prediction reference. As the picture encoding progresses, reconstructed coding blocks will be continuously generated, and these reconstructed coding blocks will be stored into the decoded picture buffer unit 110.

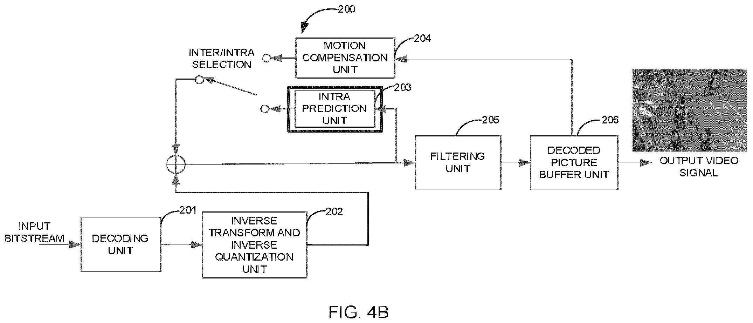

Referring to FIG. 4B, FIG. 4B is a schematic block diagram a decoder provided in embodiments of the disclosure. As illustrated in FIG. 4B, the decoder (which is specifically a "video decoder") 200 includes a decoding unit 201, an inverse transform and inverse quantization unit 202, an intra prediction unit 203, a motion compensation unit 204, a filtering unit 205, a decoded picture buffer unit 206, and the like. The decoding unit 201 can implement header information decoding and CABAC. The filtering unit 205 can implement deblocking filtering and SAO filtering. After the input video signal is encoded (as illustrated in FIG. 4A), the bitstream of the video signal is output. The bitstream is input into the decoder 200. First, decoded transform coefficients are obtained by the decoding unit 201. The decoded transform coefficients are processed by the inverse transform and inverse quantization unit 202, so as to generate a residual block in the sample domain. The intra prediction unit 203 can be used to generate prediction data of the current video coding block based on the determined intra prediction mode and data from the previous decoded block of the current frame or picture. The motion compensation unit 204 is used to determine prediction information for the coding block by analyzing motion vectors and other associated syntax elements, and use the prediction information to generate a prediction block of the video coding block that is being decoded. The decoded video block is formed by summing the residual block from the inverse transform and inverse quantization unit 202 and the corresponding prediction block generated by the intra prediction unit 203 or the motion compensation unit 204. The blockiness artifacts of the decoded video signal are removed by the filtering unit 205, which can improve quality of the video. The decoded video block is then stored into the decoded picture buffer unit 206. The decoded picture buffer unit 206 is used to store reference pictures used for subsequent intra prediction or motion compensation, and is also used to output the video signal, that is, the restored original video signal is obtained.

It should be noted that, the method in embodiments of the disclosure is mainly applied to the intra prediction unit 103 illustrated in FIG. 4A and the intra prediction unit 203 illustrated in FIG. 4B. That is, embodiments of the disclosure can be applied to an encoder, a decoder, or even both an encoder and a decoder, but embodiments of the disclosure are not limited in this regard.

It should be further noted that, when applied to the intra prediction unit 103, the "current block" specifically refers to a coding block on which intra prediction is currently to be performed. When applied to the intra prediction unit 203, the "current block" specifically refers to a coding block on which intra prediction is currently to be performed.

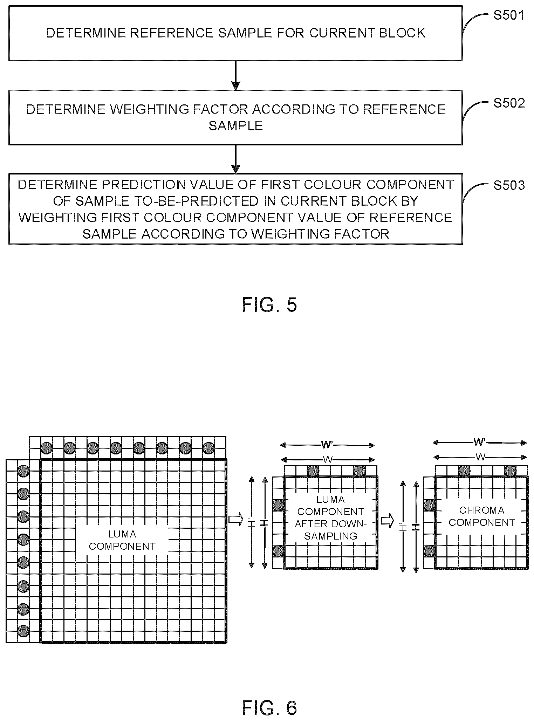

In an embodiment of the disclosure, referring to FIG. 5, FIG. 5 illustrates schematic flowchart I of a decoding method provided in embodiments of the disclosure. As illustrated in FIG. 5, the method may include the following.

S501, a reference sample(s) for a current block is determined.

It should be noted that, the decoding method in the embodiment of the disclosure is applied to a decoder. In addition, the decoding method may specifically refer to an intra prediction method, and more specifically, refers to a colour component prediction method. A video picture can be partitioned into a multiple coding blocks, and each coding block may include a first colour component, a second colour component, and a third colour component. However, the current block in the embodiment of the disclosure refers to a coding block on which intra prediction is currently to be performed in the video picture.

Here, when the first colour component needs to be predicted, a component to-be-predicted is the first colour component. When the second colour component needs to be predicted, the component to-be-predicted is the second colour component. When the third colour component needs to be predicted, the component to-be-predicted is the third colour component. In addition, assuming that a first colour component of the current block is to be predicted and the first colour component is a luma component, that is, the colour component to-be-predicted is a luma component, the current block can also be called a luma block. Alternatively, assuming that the second colour component of the current block is to be predicted and the second colour component is a chroma component, that is, the colour component to-be-predicted is a chroma component, the current block can also be called a chroma block.

It should be further noted that, in the embodiment of the disclosure, the reference sample for the current block may refer to a reference sample neighbouring the current block. Here, "neighbouring" can be spatially neighbouring, but is not limited thereto. For example, "neighbouring" can also be temporally neighbouring or spatially and temporally neighbouring. Alternatively, the reference sample for the current block can also be a reference sample obtained through some processing on a spatially neighbouring reference sample, a temporally neighbouring reference sample, or a spatially and temporally neighbouring reference sample, etc., and embodiments of the disclosure are not limited in this regard.

In some embodiments, the reference sample for the current block can be determined as follows. The reference sample is determined from samples in a neighbouring area of the current block, where the neighbouring area includes at least one of: a top neighbouring area, a top-right neighbouring area, a left neighbouring area, or a bottom-left neighbouring area.

Specifically, in the embodiment of the disclosure, the reference sample can be determined from the samples in the neighbouring area of the current block as follows. A first reference sample set is determined from the samples in the neighbouring area of the current block. Then the reference sample is determined from the first reference sample set. In this way, when the left neighbouring area, the bottom-left neighbouring area, the top neighbouring area, and the top-right neighbouring area are all valid areas, for an INTRA LT_CCLM mode, the first reference sample set may consist of samples in the left neighbouring area and the top neighbouring area of the current block, as illustrated in (a) of FIG. 2; for an INTRA_L_CCLM mode, the first reference sample set may consist of samples in the left neighbouring area and the bottom-left neighbouring area of the current block, as illustrated in (b) of FIG. 2; for an INTRA T_CCLM mode, the first reference sample set may consist of samples in the top neighbouring area and the top-right neighbouring area of the current block, as illustrated in (c) of FIG. 2.

It should be further noted that, in the embodiment of the disclosure, the neighbouring area of the current block can be multiple rows or multiple columns. For example, the left neighbouring area or the bottom-left neighbouring area may include one or more columns, and the top neighbouring area or the top-right neighbouring area may include one or more rows.

It should be further noted that, in the embodiment of the disclosure, samples in some neighbouring areas rather than all neighbouring areas can be used for colour component prediction of the current block, which can be, for example, only the top neighbouring area; or only the left neighbouring area; or only the top neighbouring area and the top-right neighbouring area; or only the left neighbouring area and the bottom-left neighbouring area; or only the top neighbouring area and the left neighbouring area, or only the top neighbouring area, the top-right neighbouring area, and the left neighbouring area; or only the left neighbouring area, the bottom-left neighbouring area, and the top neighbouring area, or the like. In this way, for the current block, reference samples in the four neighbouring areas, i. e. left, bottom-left, top, and top-right, can be obtained for colour component prediction of the current block.

It should be further noted that, in the embodiment of the disclosure, the manner for selecting the neighbouring area can also be determined according to a prediction mode for the current block. In an embodiment, if the prediction mode for the current block is a horizontal mode, the reference sample is determined from samples in the top neighbouring area and/or the top-right neighbouring area; if the prediction mode for the current block is a vertical mode, the reference sample is determined from samples in the left neighbouring area and/or the bottom-left neighbouring area.

Exemplarily, if a luma prediction mode for the current block is the horizontal mode, the neighbouring area for chroma component prediction can be only the top neighbouring area and/or the top-right neighbouring area. If the luma prediction mode for the current block is a vertical mode, the neighbouring area for chroma component prediction can be only the left neighbouring area and/or the bottom-left neighbouring area.

Further, in some embodiments, the method may further include the following. The reference sample is determined by selecting from the samples in the neighbouring area.

Specifically, in the embodiment of the disclosure, the first reference sample set is formed from the samples in the neighbouring area of the current block. In this case, the reference sample can be determined by selecting from the first reference sample set. Here, the number of reference samples can be $N$, where N is an integer and N>0. In other words, N reference samples can be selected from the samples in the neighbouring area. The value of N can be four, but is not limited thereto.

It should be further noted that, among the samples in the neighbouring area of the current block, there can be some unimportant samples (for example, these samples are in weak correlation) or some abnormal samples. To ensure accuracy of prediction, these samples need to be removed, so as to obtain valid reference samples.

In one implementation, the reference sample can be determined by selecting from the samples in the neighbouring area as follows. A sample location(s) to-be-selected is determined according to a location and/or a colour component intensity of the sample in the neighbouring area. The reference sample is determined from the samples in the neighbouring area according to the sample location to-be-selected.

It should be noted that, the colour component intensity can be represented by a colour component value, such as a luma component value and a chroma component value. Here, a greater colour component value represents a higher colour component intensity. In this way, selection can be performed from the samples in the neighbouring area according to the location of the sample, or can be performed according to the colour component intensity, so as to determine the reference sample for the current block according to the sample chosen. The selection process will be described below by taking locations of samples as an example.

Exemplarily, for the INTRA LT_CCLM mode, it is assumed that locations of samples in a top selection area W' are S[0, -1], ..., S[W' -1,-1], and locations of samples in a left selection area H' are S[-1,0], ..., S[-1, H' -1]. Then, the manner for selecting at most four reference samples is as follows.

When the top neighbouring area and the left neighbouring area are both valid, two samples can be selected from the top selection area W', and locations corresponding thereto are S[W'/4,-1] and S[3W'/4,-1] respectively; two samples can be chosen from the left selection area H' , and locations corresponding thereto are S[-1,H'/4] and S[-1, 3H'/4] respectively; and the four samples are determined to be the reference samples for the current block, as illustrated in FIG. 6. In FIG. 6, the left neighbouring area and the top neighbouring area of the current block are both valid. In addition, in order to keep a luma component and a chroma component to have the same resolution, downsampling needs to be performed on the luma component, so that the luma component after downsampling has the same resolution as the chroma component.

S502, a weighting factor is determined according to the reference sample.

It should be noted that, in the embodiment of the disclosure, after the reference sample is determined, the weighting factor can be determined according to a location of the sample to-be-predicted in the current block and the reference sample.

In some embodiments, the weighting factor can be determined according to the reference sample as follows. A first-reference-colour-component parameter (that is, parameter of a first reference colour component) is determined according to a first-reference-colour-component relationship between the sample to-be-predicted in the current block and the reference sample. The weighting factor is determined according to the first reference colour component parameter by using a preset first mapping.

It should be noted that, the first-reference-colour-component parameter can be determined directly according to a difference between a first-reference-colour-component value of the reference sample and a first-reference-colour-component value of the sample to-be-predicted. Therefore, in some embodiments, the first-reference-colour-component parameter can be determined according to the first-reference-colour-component relationship between the sample to-be-predicted in the current block and the reference sample as follows. The difference between the first-reference-colour-component value of the reference sample and the first-reference-colour-component value of the sample to-be-predicted is determined. The first-reference-colour-component parameter is determined according to the difference.

In an embodiment, the first-reference-colour-component parameter can be determined according to the difference as follows. The first-reference-colour-component parameter is set to be equal to an absolute value of the difference.

In another embodiment, the first-reference-colour-component parameter can be determined according to the difference as follows. The first-reference-colour-component parameter is set to be equal to a product of an absolute value of the difference and a preset multiplier.

It should be noted that, in the embodiment of the disclosure, the first reference colour component can be a first colour component. Alternatively, the first reference colour component can be a second colour component, where the second colour component is different from the first colour component.

It should be further noted that, the first colour component is the component to-be-predicted in the embodiment of the disclosure. That is, if the first colour component is a chroma component and the second colour component is a luma component, the first-reference-colour-component parameter can be chroma component information or luma component information.

Exemplarily, assuming that the first colour component is a chroma component and the second colour component is a luma component, and the embodiment of the disclosure mainly aims at predicting a chroma component of the sample to-be-predicted in the current block. Firstly, at least one sample to-be-predicted with significant colour difference in the current block is selected, and a chroma difference (represented by $|\Delta C_k|$) between the chrominance thereof and reconstructed chrominance of the neighbouring area is calculated. Chroma differences of samples to-be-predicted at different locations relative to the neighbouring area are different. The location of the reference sample with the minimum chroma difference will vary according to the sample to-be-predicted in the current block. Generally, the chroma difference represents the degree of similarity between chrominance. A smaller $|\Delta C_k|$ indicates higher similarity between chroma values, and the corresponding weighting factor (represented by $w_k$) can be given a greater value; on the contrary, a greater $|\Delta C_k|$ indicates lower similarity between chroma values, and $w_k$ can be given a smaller value. That is, the relationship between $w_k$ and $|\Delta C_k|$ is in approximately inverse proportion. In this way, a preset mapping can be established according to $|\Delta C_k|$, as illustrated below:

$$w_k = f(|\Delta C_k|) \qquad (1)$$

That is, in some embodiments, the weighting factor can be determined according to the first-reference-colour-component parameter by using the preset first mapping as follows. A value corresponding to the first-reference-colour-component parameter in a preset function relationship of the first mapping is determined. The weighting factor is set to be equal to the value.

Here, taking formula (1) as an example, $|\Delta C_k|$ represents the first-reference-colour-component parameter, $f(|\Delta C_k|)$ represents the value corresponding to the first-reference-colour-component parameter in the preset function relationship of the first mapping, and $w_k$ represents the weighting factor, that is, $w_k$ is set to be equal to $f(|\Delta C_k|)$.

It should be further noted that, in the embodiment of the disclosure, if the number of reference samples is $N$, the number of weighting factors is $N$ accordingly, where the sum of the $N$ weighting factors is equal to 1 and each of the weighting factors is a value greater than or equal to 0 and less than or equal to 1, i. e. $0 \leq w_k \leq 1$. However, it should be noted that, "the sum of the $N$ weighting factors is equal to 1" is only a theoretical concept, and in actual implementation of fixed-point, the absolute value of the weighting factor can be greater than 1.

It can be understood that, in the probability theory and related fields, a normalized exponential function, or referred to as a Softmax function, is a generalization of a logic function. It can "convert" an N-dimensional vector z of arbitrary real numbers into another $N$-dimensional vector $\sigma(z)$ such that the range of each element is within $(0, 1)$, and the sum of all the elements is 1. The Softmax function is often used as a non-linear activation function for a multi-class classification neural network. The Softmax function is as follows:

$$\mathrm{Softmax}(x_i) = \frac{e^{x_i}}{\sum_j e^{x_j}} \qquad (2)$$

However, although the Softmax function can satisfy conditional constraints of $w_k$, its function value increases as the value of the vector element increases, which does not comply with the approximately inverse proportion between $w_k$ and $|\Delta C_k|$. Therefore, in order to adapt to the design of $w_k$ and meet requirements for nonlinearity of $w_k$, the $f$ function of formula (1) can be implemented by a Softmax function with parameter $\gamma$, as illustrated in detail below:

$$f(x_i) = \frac{e^{\gamma x_i}}{\sum_j e^{\gamma x_j}} \qquad (3)$$

In order to comply with the approximately inverse proportion between $w_k$ and $|\Delta C_k|$, $\gamma$ can be defined as a negative number. That is, if the first-reference-colour-component parameter is $|\Delta C_k|$, the mapping between $|\Delta C_k|$ and $w_k$ can be expressed as:

$$w_k = f(\gamma, |\Delta C_k|) = \frac{e^{\gamma|\Delta C_k|}}{\sum_j e^{\gamma|\Delta C_j|}} \qquad (4)$$

According to formula (4), in some embodiments, the value corresponding to the first-reference-colour-component parameter in the preset function relationship of the first mapping can be determined as follows. A first factor is determined. A first product value is determined according to the first factor and the first-reference-colour-component parameter. A value corresponding to the first product value in the preset function relationship of the first mapping is determined.

It should be noted that, in the embodiment of the disclosure, the first factor is a constant value less than zero. Taking the Softmax function as an example, in formula (4), $\gamma$ represents the first factor, $|\Delta C_k|$ represents the first-reference-colour-component parameter, $\gamma|\Delta C_k|$ represents the first product value, and $w_k$ represents the weighting factor, where k = 1,2, ..., $N$.

In an embodiment, the first factor can be determined as follows. The first factor is a preset constant value.

It should be noted that, in this case, with regard to $\gamma$, a distribution of weighting factors for neighbouring chrominance can be adjusted according to relatively flat characteristics of chromimance, so as to determine a distribution of weighting factors that is suitable for chroma prediction of a natural picture. In order to determine parameter $\gamma$ suitable for

chroma prediction of a natural picture, a given set of $\gamma$ is traversed, and whether $\gamma$ is suitable or not is determined according to differences between prediction chromimance and original chromimance with respect to different $\gamma$. Exemplarily, $\gamma$ can be $-2^{\varepsilon}$, where $\varepsilon \in \{1, 0, -1, -2, -3\}$. It is found from experiments that in this set of $\gamma$, the optimal value of $\gamma$ is -0.25. Therefore, in an embodiment, $\gamma$ can be set to -0.25, but the embodiment of the disclosure is not limited thereto.

In another embodiment, the first factor can be determined as follows. A value of the first factor is determined according to a size parameter of the current block.

Further, in some embodiments, the method may further include the following. The value of the first factor is determined according to a preset mapping look-up table between the size parameter of the current block and the value of the first factor.

Here, the size parameter of the current block may include at least one of: a width of the current block or a height of the current block.

It should be noted that, in the embodiment of the disclosure, the value of the first factor can be set by means of classification. For example, the size parameter of the current block is classified into three categories, and the value of the first factor corresponding to each category is determined. In this case, in the embodiment of the disclosure, the preset mapping look-up table between the size parameter of the current block and the value of the first factor can also be pre-stored, and then the value of the first factor can be determined according to the look-up table. Exemplarily, Table 1 shows a correspondence between the first factor and the size parameter of the current block provided in the embodiment of the disclosure. It should be noted that, Table 1 is merely an exemplary look-up table, and is not intended for limitation.

Table 1

| Size parameter of current block | First factor |
|---|---|
| Min(W, H)<=4 | -0.125 |
| Min(W, H)>4&& Min(W, H)<=16 | -0.0833 |
| Min(W, H)>16 | -0.0625 |

In yet another embodiment, the first factor can be determined as follows. A value of the first factor is determined according to the number of reference samples for the current block.

Further, in some embodiments, the method may further include the following. The value of the first factor is determined according to a preset mapping look-up table between the number of reference samples for the current block and the value of the first factor.

It should be noted that, in the embodiment of the disclosure, the number of reference samples can be classified into three categories, and the value of the first factor can also be set by means of classification. For example, the number of reference samples for the current block is classified into three categories, and the value of the first factor corresponding to each category is determined. In this case, in the embodiment of the disclosure, the mapping look-up table between the number of reference samples for the current block and the value of the first factor can also be pre-stored, and then the value of the first factor can be determined according to the look-up table. Exemplarily, Table 2 shows a correspondence between the first factor and the number of reference samples for the current block provided in the embodiment of the disclosure. It should be noted that, Table 2 is only an exemplary look-up table, and is not intended for limitation.

Table 2

| Number of reference samples | First factor |
|---|---|
| 0<R<16 | - 0.1113 |
| 16<=R<32 | - 0.0773 |
| R>=32 | - 0.0507 |

Further, for the first product value, in a possible implementation, the first product value can be determined according to the first factor and the first-reference-colour-component parameter as follows. The first product value is set to be equal to a product of the first factor and the first-reference-colour-component parameter.

In another possible implementation, the first product value can be determined according to the first factor and the first-reference-colour-component parameter as follows. The first product value is set to be equal to a numerical value obtained by right-shifting the first-reference-colour-component parameter, where the number of bits right shifted is equal to the first factor.

In yet another possible implementation, the first product value can be determined according to the first factor and the first-reference-colour-component parameter as follows. The first product value is determined by performing addition and bit shift on the first-reference-colour-component parameter according to the first factor.

It should be noted that, in the embodiment of the disclosure, the first product value can be equal to the product of the first factor and the first-reference-colour-component parameter, or can be equal to the value obtained by right-shifting the first-reference-colour-component parameter, or can be obtained by performing addition and bit shift on the first-reference-colour-component parameter according to the first factor.

Exemplarily, assuming that the first factor is equal to 0.25 and the first-reference-colour-component parameter is represented by $S$, then the first product value is equal to $0.25 \times S$, and $0.25 \times S$ can also be represented by $S/4$, that is, $S\gg2$. In addition, in fixed-point computation, a floating-point number can be converted into addition and shift operations. That is, there is no limitation on the manner for calculation of the first product value.

In still another possible implementation, the first product value is determined according to the first factor and the first-reference-colour-component parameter as follows. A second factor is determined according to the first colour component value of the reference sample and the first-reference-colour-component value of the reference sample. The first product value is set to a product of the first factor, the first-reference-colour-component parameter, and the second factor.

It should be noted that, when the first reference colour component is the component to-be-predicted (namely, chroma component), since a chroma component value of the sample to-be-predicted cannot be directly determined, an absolute chroma difference $|\Delta C_k|$ between the reference sample and the sample to-be-predicted cannot be directly obtained. In this case, $|\Delta C_k|$ can be derived according to an absolute luma difference $|\Delta Y_k|$ between the reference sample and the sample to-be-predicted. That is, $|\Delta C_k|$ can be obtained according to the product of $|\Delta Y_k|$ and the second factor. In this way, the first product value is equal to the product of the first factor and $|\Delta C_k|$.

Specifically, in actual prediction, $|\Delta C_k|$ is unknown, but there is strong correlation between components within a local area in the current block. In the CCLM technology in VVC, a prediction model is established with aid of local correlation between lumiance and chrominance, which can achieve satisfactory compression effect. For the current block, the chroma component value $C_{ij}$ of the current sample to-be-predicted *(i, j)* can be estimated according to a reconstructed luma value $Y_{ij}$ of the current sample to-be-predicted, as illustrated below:

$$C_{ij} = \alpha\, Y_{ij} + \beta \qquad\qquad (5)$$

By the same reasoning, neighbouring chrominance $C_k$ can also be estimated according to a reconstructed luma value $Y_k$ corresponding thereto, as illustrated below:

$$C_k = \alpha\, Y_k + \beta \qquad\qquad (6)$$

Then, the relationship between $|\Delta C|$ and $|\Delta Y|$ can be obtained through subtraction between formula (5) and formula (6):

$$\left|\Delta C_k\right| = \left|C_{ij} - C_k\right| = \left|\left(\alpha\, Y_{ij} + \beta\right) - \left(\alpha\, Y_k + \beta\right)\right| = \left|\alpha\,(Y_{ij} - Y_k)\right| = \left|\alpha\, \Delta Y_k\right| \quad (7)$$

That is, in the embodiment of the disclosure, the first-reference-colour-component parameter can be $|\Delta C_k|$, that is, the absolute value of the difference between the first colour component value of the reference sample and the first colour component value of the sample to-be-predicted. Alternatively, the first-reference-colour-component parameter can be $|\Delta Y_k|$, that is, an absolute value of a difference between a second colour component value of the reference sample and a second colour component value of the sample to-be-predicted. Alternatively, the first-reference-colour-component parameter can be $|\alpha\, \Delta Y_k|$, that is, a product of a preset multiplier and the absolute value of the difference between the second colour component value of the reference sample and the second colour component value of the sample to-be-predicted. Here, the preset multiplier is the second factor described in the embodiment of the disclosure.

Further, for the second factor, in a possible implementation, the second factor can be determined according to the first colour component value of the reference sample and the first-reference-colour-component value of the reference sample as follows. The second factor is determined by performing least squares calculation on the first colour component value of the reference sample and the first-reference-colour-component value of the reference sample.

That is, assuming that the number of reference samples is $N$, the first colour component is a chroma component, and the first reference colour component is a luma component, then least squares calculation can be performed on chroma component values and luma component values of the $N$ reference samples, so as to obtain the second factor. Exemplarily, the least squares regression calculation is as follows:

$$\alpha = \frac{N \sum_k L_k \cdot C_k - \sum_k C_k \sum_k L_k}{N \sum_k L_k \cdot L_k - \sum_k L_k \sum_k L_k} \qquad (8)$$

$L_k$ represents a luma component value of a $k^{th}$ reference sample. $C_k$ represents a chroma component value of the $k^{th}$ reference sample. $N$ represents the number of reference samples. $\alpha$ represents the second factor, which can be calculated by means of least squares regression.

Further, in addition to determining the first-reference-colour-component parameter directly according to the absolute value of the difference between the first-reference-colour-component value of the reference sample and the first-reference-colour-component value of the sample to-be-predicted, the first-reference-colour-component parameter can also be determined with a neural network. Therefore, in some embodiments, the first-reference-colour-component parameter can be determined according to the first-reference-colour-component relationship between the sample to-be-predicted in the current block and the reference sample as follows. The first-reference-colour-component parameter is determined by using a first neural network model.

In an embodiment, the method may include the following. An input of the first neural network model includes the first-reference-colour-component value of the reference sample and the first-reference-colour-component value of the sample to-be-predicted. An output of the first neural network model includes the first-reference-colour-component parameter.

It should be noted that, in the embodiment of the disclosure, a preset neural network model can be a convolutional neural network, a deep learning neural network, or the like. The first-reference-colour-component value of the reference sample and the first-reference-colour-component value of the sample to-be-predicted can be the input of the preset neural network model, and accordingly, the output of the preset neural network model is the first-reference-colour-component parameter.

Further, for the second factor, in another possible implementation, the method may further include the following. The number of first colour component values is determined according to the number of reference samples for the current block. An initial value of the second factor is determined according to the number of first colour component values. The second factor is determined according to the initial value of the second factor.

It should be noted that, in some embodiments, the second factor can be determined according to the initial value of the second factor as follows. The initial value of the second factor is taken directly as the second factor, or the initial value of the second factor is adjusted to obtain the second factor.

It should be further noted that, in some embodiments, the initial value of the second factor can be determined according to the number of first colour component values as follows. If the number of the first colour component values is greater than zero and less than 16, the initial value of the second factor is determined to be 0.445. If the number of the first colour component values is greater than or equal to 16 and less than 32, the initial value of the second factor is determined to be 0.3091. If the number of the first colour component values is greater than or equal to 32, the initial value of the second factor is determined to be 0.2026.

That is, in the embodiment of the disclosure, for the second factor, $\alpha$ can be obtained by performing linear least squares regression calculation on the reference sample(s) in the neighbouring area. However, on one hand, there is a deviation between $\alpha$ and the theoretically optimal value; on the other hand, if $\alpha$ is estimated by means of linear least squares regression, additional calculation is needed at both an encoding end and a decoding end. Therefore, in order to further reduce complexity of calculation of the weighting factor, $\alpha$ can be classified according to size characteristics of the current block, and the value of $\alpha$ can be set accordingly, so as to eliminate linear least squares regression calculation.

In VVC, a flexible block partitioning technology is used, which supports binary tree partitioning, ternary tree partitioning, and quadtree partitioning. The minimum block size of a chroma coding unit only needs to satisfy that the total number of samples is greater than or equal to 16. Therefore, there are square blocks and rectangular blocks of various sizes in chroma coding units in the same video picture, and the number of reference samples involved in estimation varies with the block size. In order to make classification of $\alpha$ and determination of the value of $\alpha$ simple and valid and comply with actual coding characteristics, the number of reference samples is classified into three categories, and each category corresponds to a fixed $\alpha$ value. An average $\alpha$ (namely, the initial value of the second factor described herein) corresponding to each of the three categories of the number of reference samples is calculated according to a block subject to WC encoding, then fine adjustment is conducted based on the average $\alpha$ as the center, and finally, three categories of $\alpha$ after fine adjustment that can lead to better coding performance can be used as the final $\alpha$. Table 3 shows a correspondence between the number $R$ of chrominance corresponding to the reference samples and the average $\alpha$.

Table 3

| The number $R$ of chrominance corresponding to reference samples | Average $\alpha$ |
| --- | --- |
| 0<R<16 | 0.445 |

(continued)

| The number $R$ of chrominance corresponding to reference samples | Average $\alpha$ |
|---|---|
| 16<=R<32 | 0.3091 |
| R>=32 | 0.2026 |

It should be further noted that, after $\gamma$ and $\alpha$ are determined, the weighting factor can be determined according to the first-reference-colour-component parameter by using the preset first mapping.

In an embodiment, the first mapping can be a mapping look-up table between the first-reference-colour-component parameter and a value of the weighting factor. That is, the decoder may pre-store the mapping look-up table between the first-reference-colour-component parameter and the value of the weighting factor, and in this way, after the first-reference-colour-component parameter is obtained, the weighting factor can be determined directly according to the look-up table.

In another embodiment, a value corresponding to the first-reference-colour-component parameter in the preset function relationship of the first mapping is determined, and then the weighting factor is set to be equal to the value.

It should be noted that, for the preset function relationship of the first mapping, the preset function relationship of the first mapping can be a Softmax function. The Softmax function is a normalized exponential function. However, in the embodiment of the disclosure, normalization may not be needed, and the value thereof is not limited to the range of [0, 1].

Exemplarily, after $\gamma$ and $\alpha$ are determined, since $\Delta Y_k$ is known and $|\Delta C_k|$ can be approximated by $|\alpha \Delta Y_k|$, the weighting factor $w_k$ corresponding to the $k^{th}$ reference sample can be calculated according to the following formula, which is specifically as follows:

$$w_k = f\left(\gamma, \alpha, |\Delta Y_k|\right) = \frac{e^{\gamma|\alpha \Delta Y_k|}}{\sum_j e^{\gamma|\alpha \Delta Y_j|}} \qquad (9)$$

where $\gamma < 0$. In addition, assuming $s = \gamma \cdot \alpha$, then formula (9) can be simplified as follows:

$$w_k = f\left(\gamma, \alpha, |\Delta Y_k|\right) = \frac{e^{s|\Delta Y_k|}}{\sum_j e^{s|\Delta Y_j|}} \qquad (10)$$

where $s < 0$. In this way, a corresponding scaling factor (represented by *scale*) can be selected according to the size parameter of the current block, where $s = -1/scale$.

Exemplarily, for the size parameter of the current block, if the minimum value between the length and the height is less than or equal to 4, the value of *scale* is equal to 8. If the minimum value between the length and the height is greater than 4 and less than or equal to 16, the value of *scale* is equal to 12. If the minimum value between the length and the height is greater than 16, the value of *scale* is equal to 16.

It should be noted that, for the preset function relationship of the first mapping, other than the Softmax function, in other embodiments, the preset function relationship of the first mapping can be a weighting function that is inverse proportion with the first-reference-colour-component parameter.

The softmax function of formula (10) can be replaced with the formula below:

$$w_k = f\left(\gamma, \alpha, |\Delta Y_k|\right) = \frac{\frac{1}{s|\Delta Y_k|+offset}}{\sum_{j=1}^{N}\left(\frac{1}{s|\Delta Y_j|+offset}\right)} \qquad (11)$$

where k = 1,2, ... N, and offset = 1 or 2 or 0.5 or 0.25.

Alternatively, in another possible implementation, the softmax function of formula (10) can also be replaced with the formula below:

$$w_k = f\left(\gamma, \alpha, |\Delta Y_k|\right) = \frac{\frac{1}{e^{s|\Delta Y_k|}+offset}}{\sum_{j=1}^{N}\left(\frac{1}{e^{s|\Delta Y_j|}+offset}\right)} \qquad (12)$$

where k = 1,2, ... N, and offset = 1 or 2 or 0.5 or 0.25.

In this way, the preset function relationship of the first mapping can be as illustrated in formula (10), or can be as illustrated in formula (11), or can be as illustrated in formula (12), or can even be another function model of the weighting factor that is constructed by fitting the tendency that higher similarity between luma information of reference sample *x* and luma information of the sample to-be-predicted in the current block leads to higher importance of the chrominance of the reference sample to the sample to-be-predicted in the current block. The embodiment of the disclosure is not limited in this regard.

In this way, the weighting factor can be determined according to the location of the sample to-be-predicted in the current block and the reference sample. The weighting factor may specifically include $N$ weighting factors $w_1$, $w_2$, ..., $w_N$, where $N$ represents the number of reference samples. Theoretically, the sum of the $N$ weighting factors is equal to 1, and each of the weighting factors is a value greater than or equal to 0 and less than or equal to 1.

S503, a prediction value of a first colour component of the sample to-be-predicted in the current block is determined by weighting the first colour component value of the reference sample according to the weighting factor.

It should be noted that, after the weighting factor is determined, the first colour component value of the reference sample can be weighted according to the weighting factor, so as to obtain the prediction value of the first colour component of the sample to-be-predicted in the current block.

It should be further noted that, in some embodiments, the prediction value of the first colour component of the sample to-be-predicted in the current block can be determined by weighting the first colour component value of the reference sample according to the weighting factor as follows. A weighted value of the first colour component value of the reference sample multiplied by the corresponding weighting factor is determined. The prediction value of the first colour component of the sample to-be-predicted in the current block is set to be equal to the sum of $N$ weighted values, where $N$ represents the number of the reference samples, and $N$ is a positive integer.

That is, if the number of reference samples is $N$, a weighted value (namely, $w_k C_k$) of a first colour component value of each reference sample multiplied by a corresponding weighting factor is determined, and then the sum of the $N$ weighted values is taken as the prediction value of the first colour component of the sample to-be-predicted in the current block. Specifically, the formula for calculation is specifically as follows:

$$C_{i,j}^{\text{pred}} = \sum_{k=1}^{N} w_k C_k = w_1 C_1 + w_2 C_2 + \cdots + w_N C_N \qquad (13)$$

Exemplarily, the first reference colour component is a luma component, and then an absolute luma difference is calculated according to a luma component at location (i, j) in the current block and a luma component of the reference sample, and then the weighting factor is calculated according to the Softmax function, so as to obtain the prediction value of a chroma component at location (i, j) in the current block according to formula (13). In particular, it should be noted that, as such, it is conducive to parallel processing and higher calculation speed.

In addition, it can also be understood that, assuming that the component to-be-predicted (namely, the first colour component) is a chroma component and the first reference colour component (namely, the second colour component) is a luma component, considering inconsistency in resolution, in the embodiment of the disclosure, the method may further include the following. Downsampling is performed on a first reference colour component of the reference sample and a first reference colour component of the sample to-be-predicted in the current block, so that the first reference colour component has the same resolution as the component to-be-predicted.

That is, for the case where the resolution of the luma component is different from the resolution of the chroma component, downsampling can be performed on the luma component to make the resolution of the luma component be consistent with the resolution of the chroma component. The method for downsampling can be a traditional filter coefficient or a neural network, which is not specifically limited in embodiments of the disclosure.

To summarize, embodiments of the disclosure provide a new chroma prediction technology, which can improve accuracy of chroma prediction. Specifically, the weighting factor is calculated according to the luma information of the reference sample in the neighbouring area and the luma information of the sample to-be-predicted in the current block, and the weighting factor is used for chroma prediction of the sample to-be-predicted in the current block. In addition, during prediction of the current block, the luminance of the current block can also be obtained besides the luminance/chrominance of the neighbouring area. In embodiments of the disclosure, the correlation between the current block and the neighbouring area in terms of luma information is fully utilized for chroma prediction of the current block, thereby improving accuracy of chroma prediction. The method is applied to the latest reference software enhanced compression model (ECM) 3.1, and tested under an All Intra condition at 48 frame intervals. Bjøntegaard-Delta rate (BD-rate) changes (i. e. average bit rate changes under the same peak signal to noise ratio (PSNR)) of -0.10%, - 0.74%, and - 0.61% can be obtained in Y, Cb, and Cr respectively. There will be better performance for a higher resolution sequence, and a BD-rate change of up to - 0.24% in Y can be achieved for Class A1.

Embodiments of the disclosure provide a decoding method. The reference sample for the current block is determined. The weighting factor is determined according to the reference sample. The prediction value of the first colour component of the sample to-be-predicted in the current block is determined by weighting the first colour component value of the reference sample according to the weighting factor. In this way, according to colour component information of the reference sample and colour component information of the sample to-be-predicted in the current block, the weighting factor corresponding to the sample to-be-predicted in the current block can be calculated. In addition, different samples to-be-predicted may correspond to different weighting factors. By using the weighting factor for chroma prediction of the sample to-be-predicted in the current block, it is possible to improve accuracy of chroma prediction, save bit rate, and improve coding performance.

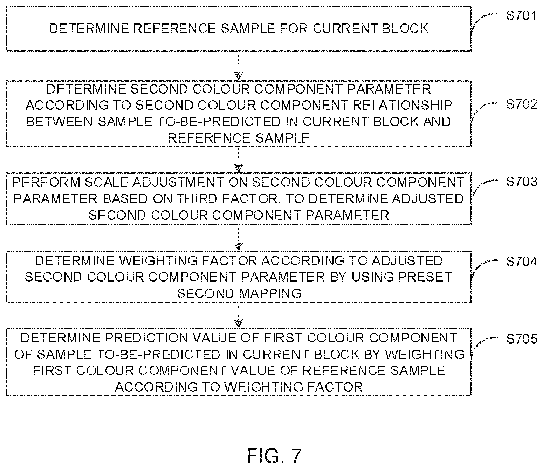

In another embodiment of the disclosure, referring to FIG. 7, FIG. 7 is schematic flowchart II of a decoding method provided in embodiments of the disclosure. As illustrated in FIG. 7, the method may include the following.

S701, a reference sample(s) for a current block is determined.

It should be noted that, in the embodiment of the disclosure, the reference sample may refer to a reference sample neighbouring the current block. In this way, according to the schematic distribution of the neighbouring areas illustrated in FIG. 1, in the embodiment of the disclosure, the reference sample can be determined from samples in a left neighbouring area, a bottom-left neighbouring area, a top neighbouring area, and a top-right neighbouring area that are available for the current block, and then colour component prediction of the current block is performed according to the reference sample.

It should also be noted that, in the embodiment of the disclosure, taking prediction of a chroma component of the current block as an example, and the reference sample can also be obtained as follows. (1) The neighbouring area can be multiple rows/multiple columns. (2) A reference sample(s) in some of the neighbouring areas can be used for chroma component prediction of the current block, for example, only the top neighbouring area, or only the left neighbouring area, or only the top neighbouring area + the top-right neighbouring area, or only the left neighbouring area + the bottom-left neighbouring area, or only the top neighbouring area + the left neighbouring area, or only the top neighbouring area + the top-right neighbouring area + the left neighbouring area, or only the left neighbouring area + the bottom-left neighbouring area + the top neighbouring area, etc. That is, for the current block, reference samples in the left neighbouring area, the bottom-left neighbouring area, the top neighbouring area, or the top-right neighbouring area can be obtained for chroma component prediction of the current block. (3) The manner for selecting the neighbouring area can also be determined based on a luma prediction mode for the current block. For example, if the luma prediction mode for the current block is a horizontal mode, the neighbouring area for chroma prediction may only include the top neighbouring area or the top-right neighbouring area; if the luma prediction mode for the current block is a vertical mode, the neighbouring area for chroma prediction may include only the left neighbouring area or the bottom-left neighbouring area. However, embodiments of the disclosure are not limited in this regard.

S702, a second colour component parameter is determined according to a second colour component relationship between a sample to-be-predicted in the current block and the reference sample.

It should be noted that, for the determination of the second colour component parameter, in a possible implementation, the second colour component parameter can be determined according to the second colour component relationship between the sample to-be-predicted in the current block and the reference sample as follows. A difference between a second colour component value of the reference sample and a second colour component value of the sample to-be-predicted is determined. The second colour component parameter is set to be equal to an absolute value of the difference.

Exemplarily, assuming that the first colour component is a chroma component and the second colour component is a luma component, the second colour component parameter can also be referred to as luma information. In terms of obtaining the luma information, after the reference sample for the current block is determined, an absolute value of a difference between a luma component of the reference sample and a luma component of a sample (i, j) to-be-predicted in the current block is taken as the second colour component parameter (namely, an absolute luma difference $|\Delta Y_{kij}|$), where k represents a $k^{th}$ reference sample. $|\Delta Y_{kij}|$ is calculated as follows:

$$\left|\triangle Y_{kij}\right| = \mathrm{abs}\left(Y_{ij} - Y_k\right), \quad k = 1, 2, \dots N \quad (14)$$

In another possible implementation, the second colour component parameter can be determined according to the second colour component relationship between the sample to-be-predicted in the current block and the reference sample as follows. The second colour component value of the reference sample and the second colour component value of the sample to-be-predicted are input into a preset neural network, and the second colour component parameter is output at the preset neural network.

In yet another possible implementation, the second colour component parameter can be determined according to the second colour component relationship between the sample to-be-predicted in the current block and the reference sample as follows. Similarity between the second colour component value of the reference sample and the second colour component value of the sample to-be-predicted is determined, and the second colour component parameter is determined according to a comparison result.

Still taking obtaining the luma information as an example, for the case where the resolution of the Y component is different from the resolution of the U or V component, downsampling can be performed on the Y component to make the resolution of the Y component be consistent with the resolution of the U or V component. The method for downsampling herein can be a traditional filter coefficient or a neural network.

In addition, when obtaining the luma information, other than using directly the absolute value of the difference between the luma component value of the reference sample and the luma component value of the sample to-be-predicted in the current block as the luma information obtained, the luma component value of the reference sample and the luma component value of the sample to-be-predicted in the current block can also be taken as an input of the preset neural network, and an output of the preset neural network is taken as the luma information obtained.

Alternatively, when the obtaining luma information, other than using directly the absolute value of the difference between luminance of the reference sample and luminance of the sample to-be-predicted in the current block as the luma information obtained, similarity between a luma component value of a $k^{th}$ reference sample and the luma component value of the sample to-be-predicted in the current block can be determined, that is, whether the $k^{th}$ reference sample is the most similar reference sample to the sample to-be-predicted in the current block in terms of luma component value is determined and the determination result is taken as the luma information obtained. For example, if the $k^{th}$ reference sample is the most similar, the luma information of the $k^{th}$ reference sample is set to 1; otherwise, the luma information of the $k^{th}$ reference sample is set to 0.

S703, scale adjustment is performed on the second colour component parameter based on a third factor, to determine the adjusted second colour component parameter.

It should be noted that, after the luma information is obtained, scale adjustment can be performed. Here, $|\Delta Y_{kij}|$ is taken as an example of the luma information, and then scale adjustment can be performed on $N$ pieces of $|\Delta Y_{kij}|$ based on the third factor.

In a possible implementation, for an absolute luma difference $|\Delta Y_{kij}|$ corresponding to a sample to-be-predicted in current blocks with different size parameters, scale adjustment can be performed based on different third factors. Specifically, in some embodiments, the method may further include the following. The size parameter of the current block is determined. The third factor is determined according to the size parameter of the current block, where the size parameter of the current block includes at least one of: a width of the current block or a height of the current block.

In an embodiment, the third factor can be determined according to the size parameter of the current block as follows. If the minimum value between the height and the width of the current block is less than or equal to 4, the third factor is determined to be 8. If the minimum value between the height and width of the current block is greater than 4 and less than or equal to 16, the third factor is determined to be 12. If the minimum value between the height and the width of the current block is greater than 16, the third factor is determined to be 16.

It should be noted that, in the embodiment of the disclosure, a value of the third factor (represented by $\vartheta$) can be set by means of classification. In addition, the height of the current block is represented by *H*, and the width of the current block is represented by *W*. Table 4 shows a correspondence between the third factor $\vartheta$ and the size parameter of the current block provided in embodiments of the disclosure.

Table 4

| Size parameter of current block | Third factor |
|---|---|
| Min(W, H)<=4 | 8 |
| Min(W, H)>4&& Min(W, H)<=16 | 12 |
| Min(W, H)>16 | 16 |

In another embodiment, during scale adjustment, fine adjustment can be performed on the foregoing correspondence between the third factor $\vartheta$ and the size parameter of the current block. Table 5 shows another correspondence between the third factor $\vartheta$ and the size parameter of the current block provided in embodiments of the disclosure.

Table 5

| Size parameter of current block | Third factor |
|---|---|
| Min(W, H)<=4 | 8 |
| Min(W, H)>4&& Min(W, H)< 16 | 12 |

(continued)

| Size parameter of current block | Third factor |
|---|---|
| Min(W, H)>=16 | 16 |

In another embodiment, during scale adjustment, fine adjustment can also be performed on the value of the third factor $\vartheta$. In some embodiments, the third factor can be determined according to the size parameter of the current block as follows. If the minimum value between the height and the width of the current block is less than or equal to 4, the third factor is determined to be 7. If the minimum value between the height and the width of the current block is greater than 4 and less than or equal to 16, the third factor is determined to be 11. If the minimum value between the height and the width of the current block is greater than 16, the third factor is determined to be 15.

That is, Table 6 shows another correspondence between the third factor $\vartheta$ and the size parameter of the current block provided in embodiments of the disclosure after fine adjustment of the value of the third factor $\vartheta$.

Table 6

| Size parameter of current block | Third factor |
|---|---|
| Min(W, H)<=4 | 7 |
| Min(W, H)>4&& Min(W, H)< =16 | 11 |
| Min(W, H)>16 | 15 |

In another possible implementation, during scale adjustment, the third factor can also be classified according to the number of reference samples for the current block. Here, $N$ represents the number of reference samples, and in some embodiments, the method may further include the following. If the value of $N$ is less than 16, the third factor is determined to be 8. If the value of $N$ is greater than or equal to 16 and less than 32, the third factor is determined to be 12. If the value of $N$ is greater than or equal to 32, the third factor is determined to be 16.

That is, classification is performed according to the number of reference samples for the current block. Table 7 shows a correspondence between the third factor $\vartheta$ and the number of reference samples provided in embodiments of the disclosure.

Table 7

| Number of reference samples | Third factor |
|---|---|
| N<16 | 8 |
| N >=16&& N < 32 | 12 |
| N >=32 | 16 |

In another possible implementation, during scale adjustment, the third factor can also be calculated in another manner. In some embodiments, the method may further include the following. A first model parameter for the current block is determined. Scaling is performed on the first model parameter to obtain a scaled first model parameter. A reciprocal of the scaled first model parameter is calculated to obtain the third factor.

That is, in embodiments of the disclosure, a prediction model is constructed according to the luminance and the chrominance of the reference sample for the current block (the prediction model can be constructed by using a CCLM linear model construction scheme in the related art, or can be constructed by means of a least squares method or a weighted least squares method), so as to calculate the first model parameter (namely, a slope parameter, which is represented by $\alpha$ ) for the prediction model. The parameter $\alpha$ is scaled and then a reciprocal of the scaled parameter $\alpha$ is taken as the third factor $\vartheta$ for the current block. For example, $\alpha/4$ is scaled and then a reciprocal thereof is taken as the value of the third factor $\vartheta$.

It should be further noted that, during scale adjustment, the number of categories of the third factor $\vartheta$ can be adjusted according to performance requirements. For example, classification of $\vartheta$ can be finer to increase the number of categories of $\vartheta$, so as to improve prediction accuracy. Alternatively, the number of categories of $\vartheta$ can be decreased; or even the same $\vartheta$ can be used for any current block or $\vartheta$ can be an average value of the foregoing multiple categories of $\vartheta$ and no classification is needed. As such, operations can be simplified, but prediction accuracy is degraded.

S704, a weighting factor is determined according to the adjusted second colour component parameter by using a preset second mapping.

It should be noted that, after the luma information is obtained and scale adjustment is performed, the weighting factor can be calculated according to the preset second mapping, where the preset second mapping is a non-linear mapping. Assuming that the number of reference samples for the current block is $N$, then $N$ second colour component parameters can be obtained; and after scale adjustment, $N$ adjusted second colour component parameters can be obtained; in this way, the number of weighting factors calculated through non-linear mapping is $N$ accordingly.

Specifically, in the embodiment of the disclosure, a function model (namely, the preset second mapping, represented by $f$) for weighting factor calculation can be constructed according to the tendency that higher similarity between the luma information of the reference sample and the luma information of the sample $(i,j)$ to-be-predicted in the current block leads to higher importance of the chrominance of the reference sample to the sample $(i, j)$ to-be-predicted. Here, the Softmax function is used as the $f$ model, and after scale adjustment is performed on the absolute luma difference, the absolute luma difference subject to scale adjustment is mapped to a weighting factor for the chrominance through the Softmax function. Specifically, scale adjustment is performed on the $N$ absolute luma differences $|\Delta Y_{kij}|$ corresponding to the sample $(i, j)$ to-be-predicted, and then take the negative values thereof. In this way, the negative values of the $N$ absolute luma differences $|\Delta Y_{kij}|$ subject to scale adjustment are mapped to weighting factors $w_{kij}$ corresponding to the $N$ reference samples respectively through the Softmax function, and the formula for calculation is as follows:

$$w_{kij} = \frac{e^{\frac{-|\Delta Y_{kij}|}{\vartheta}}}{\sum_{k=1}^{N} e^{\frac{-|\Delta Y_{kij}|}{\vartheta}}}, \qquad k = 1,2, \dots N \qquad (15)$$

It should be further noted that, in the embodiment of the disclosure, for the $f$ model, other function models for weighting factor calculation can also be used, where the function model can be constructed by fitting the tendency that higher similarity between the luma information of reference sample and the luma information of the sample to-be-predicted in the current block leads to higher importance of the chrominance of the reference sample to the sample to-be-predicted in the current block.

For example, in a possible implementation, the Softmax function of formula (15) can be replaced with the formula below:

$$w_{kij} = \frac{\frac{1}{\frac{|\Delta Y_{kij}|}{\vartheta} + \text{offset}}}{\sum_{k=1}^{N} \left( \frac{1}{\frac{|\Delta Y_{kij}|}{\vartheta} + \text{offset}} \right)} \qquad (16)$$

where k = 1,2, ... N, and offset = 1 or 2 or 0.5 or 0.25.

Alternatively, in another possible implementation, the Softmax function of formula (15) can be replaced with the formula below:

$$w_{kij} = \frac{\frac{1}{e^{\frac{|\Delta Y_{kij}|}{\vartheta}} + \text{offset}}}{\sum_{k=1}^{N} \left( \frac{1}{e^{\frac{|\Delta Y_{kij}|}{\vartheta}} + \text{offset}} \right)} \qquad (17)$$

where k = 1,2, ... N, and offset = 1 or 2 or 0.5 or 0.25.

In this way, the preset second mapping can be as illustrated in formula (15), or can be as illustrated in formula (16), or can be as illustrated in formula (17), or can even be another function model for weighting factor calculation that can be constructed by fitting the foregoing tendency, which is not specifically limited in embodiments of the disclosure.

In addition, in some embodiments, no matter whether a preset first mapping or the preset second mapping is used, operations can be simplified, for example, it is possible to eliminate some calculations by means of an array element look-up table. For the first mapping, an array element value can be determined according to a preset mapping look-up table between a first-reference-colour-component parameter, a first factor, and an array element; a value corresponding to the array element value in a preset function relationship of the first mapping can be determined; and then the weighting factor can be set to be equal to the value.

For the second mapping, an array element value can be determined according to a preset mapping look-up table between the second colour component parameter, the third factor, and an array element; a value corresponding to the array element value in a preset function relationship of the second mapping can be determined; and then the weighting factor can be set to be equal to the value.

Specifically, taking the second mapping as an example, the *f* model for weighting factor calculation can be implemented through simplified operations, for example, by means of a look-up table. The weighting factor is calculated with the *f* model, i. e. $w_{kij} = f(|\Delta Y_{rij}|)$. Here, a numerator in the *f* model can be stored by taking the independent variable $|\Delta Y_{rij}|$ and the number of categories of $\vartheta$ as an array index(es). Subsequent operations that are the same as calculation of the numerator in the *f* model are implemented by means of the look-up table, so as to eliminate calculations on the numerator and a denominator.

It should be noted that, in the embodiment of the disclosure, the storage can be full storage or partial storage.

In an embodiment, the full storage means storing all numerators corresponding to the range of $|\Delta Y_{rij}|$ and the number of categories of $\vartheta$, and an array space with a size of the range of $|\Delta Y_{rij}|$ multiplied by the number of categories of $\vartheta$ is required for full storage. The size of the array that needs to be stored is the size of the range of $|\Delta Y_{rij}|$, and in this case, the performance remains unchanged.

Exemplarily, taking a 10-bit sample and formula (15) as an example, the range of the variable $|\Delta Y_{rij}|$ is integers within 0-1023, the number of categories of $\vartheta$ is 3, and the numerators are fully stored by taking $|\Delta Y_{rij}|$ and the number of categories of $\vartheta$ as indexes for a two-dimensional array storMole:

$$\text{flag}_\vartheta = \begin{cases} 0, & \vartheta = 8 \\ 1, & \vartheta = 12 \\ 2, & \vartheta = 16 \end{cases} \qquad (18)$$

In this case, the weighting factor calculation of formula (15) can be simplified into:

$$w_{kij} = \frac{\text{storMole}[|\Delta Y_{kij}|][\text{flag}_\vartheta]}{\sum_{k=1}^{N} \text{storMole}[|\Delta Y_{kij}|][\text{flag}_\vartheta]}, \qquad k = 1, 2, \dots N \qquad (19)$$

In this way, elements in the two-dimensional array storMole[index 1][index 2] are illustrated in Table 8.

Table 8

| Index 1 ($|\Delta Y_{rij}|$) | Index 2 ($\text{flag}_\vartheta$) | Array element |
|---|---|---|
| 0 | 0 | $e^{\frac{-0}{8}}$ |
| 1 | 0 | $e^{\frac{-1}{8}}$ |
| ... | ... | ... |
| 1023 | 0 | $e^{\frac{-1023}{8}}$ |
| 0 | 1 | $e^{\frac{-0}{12}}$ |
| 1 | 1 | $e^{\frac{-1}{12}}$ |
| ... | ... | ... |
| 1023 | 1 | $e^{\frac{-1023}{12}}$ |
| 0 | 2 | $e^{\frac{-0}{16}}$ |
| 1 | 2 | $e^{\frac{-1}{16}}$ |
| ... | ... | ... |
| 1023 | 2 | $e^{\frac{-1023}{16}}$ |

Further, for full storage, a corresponding array offset can also be set according to the categories of $\vartheta$, and then the numerators are fully stored by taking $|\Delta Y_{rij}|$ plus offset as an index for a one-dimensional array ostorMole, which is specifically as follows:

$$\text{offset}_\vartheta = \begin{cases} 0, & \vartheta = 8 \\ 1024, & \vartheta = 12 \\ 2048, & \vartheta = 16 \end{cases} \tag{20}$$

In this case, the weighting factor calculation of formula (15) can be simplified into:

$$w_{kij} = \frac{\text{ostorMole}\left[|\Delta Y_{kij}|+\text{offset}_\vartheta\right]}{\sum_{k=1}^N \text{ostorMole}\left[|\Delta Y_{kij}|+\text{offset}_\vartheta\right]}, \qquad k = 1, 2, \ldots N \tag{21}$$

In this way, elements in the one-dimensional array ostorMole[index] are illustrated in Table 9.

Table 9

| Index ($|\Delta Y_{kij}|$ + offset$_\vartheta$) | Array element |
|---|---|
| 0 | $e^{\frac{-0}{8}}$ |
| 1 | $e^{\frac{-1}{8}}$ |
| ... | ... |
| 1023 | $e^{\frac{-1023}{8}}$ |
| 0+1024 | $e^{\frac{-0}{12}}$ |
| 1+1024 | $e^{\frac{-1}{12}}$ |
| ... | ... |
| 1023+1024 | $e^{\frac{-1023}{12}}$ |
| 0+2048 | $e^{\frac{-0}{16}}$ |
| 1+2048 | $e^{\frac{-1}{16}}$ |
| ... | ... |
| 1023+2048 | $e^{\frac{-1023}{16}}$ |

In another embodiment, partial storage refers to storing part of numerator values for weighting factor calculation. Numerator values corresponding to part of the range of $|\Delta Y_{rij}|$ and/or part of the categories of $\vartheta$ can be stored, the value of the $f$ model which is not chosen for storage can be 0 by default, and the size of the array that needs to be stored is the size of the selected range of $|\Delta Y_{rij}|$ multiplied by the number of the selected categories of $\vartheta$.

Exemplarily, taking a 10-bit sample and formula (15) as an example, assuming that numerator values corresponding to integers within the range of 0-99 for $|\Delta Y_{rij}|$ and three categories of $\vartheta$ are selected for partial storage, then the range of $|\Delta Y_{rij}|$ is integers within 0-99, the number of categories of $\vartheta$ is 3, and the numerators are stored by taking such $|\Delta Y_{rij}|$ and such number of categories of $\vartheta$ as indexes for a two-dimensional array partstorMole:

$$\text{pflag}_\vartheta = \begin{cases} 0, & \vartheta = 8 \\ 1, & \vartheta = 12 \\ 2, & \vartheta = 16 \end{cases} \tag{22}$$

In this case, the weighting factor calculation of formula (15) can be simplified into:

$$w_{kij} = \begin{cases} \dfrac{\text{partstorMole}[|\Delta Y_{kij}|][\text{pflag}_\vartheta]}{\sum_{k=1}^{N} \text{partstorMole}[|\Delta Y_{kij}|][\text{pflag}_\vartheta]} &, |\Delta Y_{kij}| \leq 99 \\ 0 &, |\Delta Y_{kij}| > 99, \end{cases} \qquad (23)$$

As such, elements in the two-dimensional array partstorMole[index 1][index 2] are illustrated in Table 10.

Table 10

| Index 1 ($|\Delta Y_{rij}|$) | Index 2 (flag$\gamma$) | Array element |
|---|---|---|
| 0 | 0 | $e^{\frac{-0}{8}}$ |
| 1 | 0 | $e^{\frac{-1}{8}}$ |
| ... | ... | ... |
| 99 | 0 | $e^{\frac{-99}{8}}$ |
| 0 | 1 | $e^{\frac{-0}{12}}$ |
| 1 | 1 | $e^{\frac{-1}{12}}$ |
| ... | ... | ... |
| 99 | 1 | $e^{\frac{-99}{12}}$ |
| 0 | 2 | $e^{\frac{-0}{16}}$ |
| 1 | 2 | $e^{\frac{-1}{16}}$ |
| ... | ... | ... |
| 99 | 2 | $e^{\frac{-99}{16}}$ |

That is, the storage range of partial storage can be determined according to actual needs, and is not limited to integers within 100 for $|\Delta Y_{rij}|$ and 3 categories of $\vartheta$ in the example. Likewise, for partial storage, a corresponding offset can also be set for the selected categories of $\vartheta$, so as to open up a one-dimensional storage space for storage, and embodiments of the disclosure are not limited in this regard.

S705, a prediction value of the first colour component of the sample to-be-predicted in the current block is determined by weighting a first colour component value of the reference sample according to the weighting factor.

It should be noted that, after obtaining the luma information, performing scale adjustment, and calculating the weighting factor through non-linear mapping, the chroma prediction value of the sample to-be-predicted can be calculated. Specifically, chroma component values $C_k$ of $N$ reference samples can be weighted according to the weighting factors obtained in the foregoing steps, so as to obtain a chroma prediction value $C_{ij}^{\text{pred}}$ of the sample (i, j) to-be-predicted in the current block, which is specifically as follows:

$$C_{ij}^{\text{pred}} = \sum_{k=1}^{N} w_{kij} C_k \qquad (24)$$

It should be further noted that, $w_{kij}$ needs to be satisfy $w_{1ij} + w_{2ij} + \cdots + w_{Nij} = 1$ and $0 \leq w_{kij} \leq 1$, and $w_{kij}$ can be determined according to an absolute luma difference and have non-linear characteristics. In this way, it is possible to fully take into consideration not only difference between different sizes of blocks in terms of luma information and chroma information, but also the tendency that higher similarity between the luma information of the reference sample and the luma information of the sample to-be-predicted in the current block leads to higher importance of the chrominance of the reference sample to the sample to-be-predicted, thereby improving accuracy of chroma prediction.

In addition, in embodiments of the disclosure, a weight can be allocated to the sample in the neighbouring area according to luma information of the sample in the neighbouring area and luma information of the current block, and CCLM prediction can be performed based on a first model parameter and a second model parameter derived by performing weighted least mean square (LMS) on the reference sample(s) having weight characteristics, thereby improving accuracy of chroma prediction.

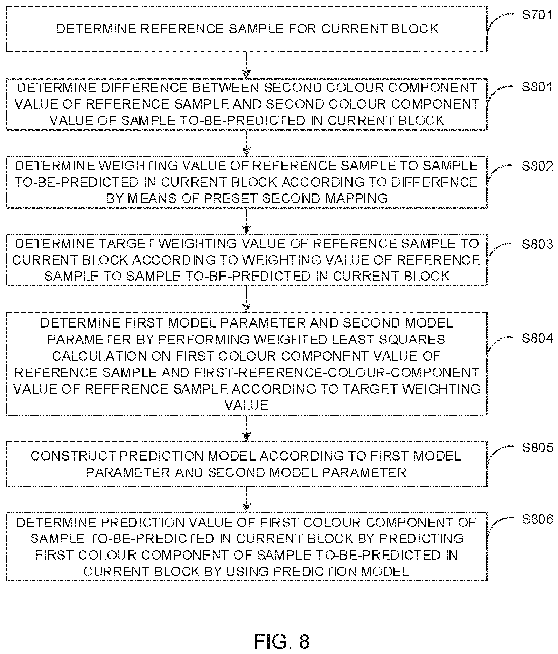

Specifically, in some embodiments, FIG. 8 is schematic flowchart III of a decoding method provided in embodiments of the disclosure. As illustrated in FIG. 8, the first reference colour component is exemplarily the second colour component, and after S701, the method may further include the following.

S801, a difference between the second colour component value of the reference sample and the second colour component value of the sample to-be-predicted in the current block is determined.

S802, a weighting value(s) of the reference sample(s) to the sample to-be-predicted in the current block is determined according to the difference by means of a preset second mapping.

S803, a target weighting value of the reference sample to the current block is determined according to the weighting value of the reference sample to the sample to-be-predicted in the current block.

S804, a first model parameter and a second model parameter are determined by performing weighted least squares calculation on the first colour component value of the reference sample and the first-reference-colour-component value of the reference sample according to the target weighting value.

S805, a prediction model is constructed according to the first model parameter and the second model parameter.

S806, the prediction value of the first colour component of the sample to-be-predicted in the current block is determined by predicting the first colour component of the sample to-be-predicted in the current block by using the prediction model.

It should be noted that, in the embodiment of the disclosure, the first model parameter is represented by $\alpha$, and the second model parameter is represented by $\beta$. Exemplarily, in the following elaborations, the first colour component is a chroma component and the second colour component is a luma component, that is, the chroma component of the current block is to be predicted.

Firstly, the two model parameters $\alpha$ and $\beta$ need to be refined, and the steps are as follows.

(1) Luma information is obtained.
$N$ reference samples used for deriving $\alpha$ and $\beta$ in the CCLM technology are obtained, and an absolute value of a difference between luminance of each of the $N$ reference samples and luminance of the sample (i, j) to-be-predicted in the current block is calculated, so as to obtain $N$ absolute luma differences $|\Delta Y_{rij}|$, where $r$ represents an $r^{th}$ reference sample used for deriving $\alpha$ and $\beta$:

$$\left|\triangle Y_{rij}\right| = \mathrm{abs}\left(Y_{ij} - Y_r\right), \ r = 1, 2, \ldots, N \qquad (25)$$

(2) An importance weight $w_{rij}$ of each reference sample to each sample to-be-predicted is calculated through non-linear mapping.
A function model $f$ is constructed according to the tendency that higher similarity bewteen the luma information of the reference sample and the luma information of the sample (i, j) to-be-predicted in the current block leads to higher importance of the chrominance of the reference sample to the sample (i, j) to-be-predicted, so as to calculate the importance weight of the reference sample at the $r^{th}$ reference point to the sample (i, j) to-be-predicted, which is specifically as follows:

$$w_{rij} = \frac{\frac{1}{\left|\Delta Y_{rij}\right| + \mathrm{offset}}}{\sum_{r=1}^{N}\left(\frac{1}{\left|\Delta Y_{rij}\right| + \mathrm{offset}}\right)}, \qquad r = 1, 2, \ldots, N \qquad (26)$$

(3) An importance weight $w_r$ of each reference sample to the current block is calculated.
The importance weight $w_{rij}$ of each reference sample to each sample to-be-predicted is calculated according to formula (18), and the importance weight $w_r$ of the $r^{th}$ reference sample to the current block can be obtained by averaging $w_{rij}$, which is specifically as follows:

$$w_r = \frac{1}{W \times H}\sum_{i=1}^{i=H}\sum_{j=1}^{j=W} w_{rij}, \qquad r = 1, 2 \ldots, N \qquad (27)$$

(4) The model parameters $\alpha$ and $\beta$ are derived by performing weighted LMS.

According to the importance weight of each reference sample to the current block obtained based on formula (21), $\alpha$ and $\beta$ are obtained by performing weighted least squares on luminance and chrominance of the $N$ reference samples, which is specifically as follows:

$$\alpha = \frac{\sum_{r=1}^{r=N} w_r \sum_{r=1}^{r=N}(w_r \times L_r \times C_r) - \sum_{r=1}^{r=N}(w_r \times L_r)\sum_{r=1}^{r=N}(w_r \times C_r)}{\sum_{r=1}^{r=N} w_r \sum_{r=1}^{r=N}(w_r \times L_r \times L_r) - \left(\sum_{r=1}^{r=N} w_r L_r\right)^2} \qquad (28)$$

$$\beta = \frac{\sum_{r=1}^{r=N}(w_r \times C_r) - \alpha \times \sum_{r=1}^{r=N}(w_r \times L_r)}{\sum_{r=1}^{r=N} w_r} \qquad (29)$$

$L_r$ and $C_r$ are luma component values and chroma component values of the $N$ reference samples obtained in the CCLM technology.

Secondly, CCLM prediction is performed based on $\alpha$ and $\beta$ derived by performing weighted LMS on the reference sample having weight characteristics.

Specifically, in order to reduce redundancy between the luma component and the chroma component, a CCLM prediction method is used in WC, that is, a chroma prediction value is constructed based on a reconstructed luma value of the same current block, as illustrated below:

$$\text{Pred}_C(i, j) = \alpha \cdot \text{Rec}_L(i, j) + \beta \qquad (30)$$

$\text{Pred}_C(i, j)$ represents a chroma prediction value of the current block, and $\text{Rec}_L(i, j)$ represents a reconstructed luma (after downsampling) value of the same current block. In addition, $\alpha$ and $\beta$ are model parameters, and can be derived from the reference sample in the neighbouring area by means of the foregoing weight allocation scheme and weighted LMS.

It should be further noted that, for the second mapping, the foregoing function model $f$ for calculating $w_{rij}$ can also be another function capable of fitting the tendency that higher similarity between the luma information of the reference sample and the luma information of the sample to-be-predicted in the current block leads to higher importance of the chrominance of the reference sample to the sample to-be-predicted. For example, the function model $f$ can be replaced with the formula below:

$$w_{rij} = \frac{e^{-|\Delta Y_{rij}|}}{\sum_{k=1}^{N} e^{-|\Delta Y_{rij}|}}, \qquad r = 1, 2, \dots M \qquad (31)$$

Further, in some embodiments, for S803, the target weighting value of the reference sample to the current block can be determined according to the weighting value of the reference sample to the sample to-be-predicted in the current block as follows. The target weighting value of the reference sample to the current block is determined by performing averaging calculation on the weighting value of the reference sample to the sample to-be-predicted in the current block. Alternatively, the target weighting value of the reference sample to the current block is determined by performing summing calculation on the weighting value of the reference sample to the sample to-be-predicted in the current block.

Further, in some embodiments, for S803, the method may further include the following. The number of minimum values among absolute values of the differences is determined based on the difference between the first-reference-colour-component value of the reference sample and the first-reference-colour-component value of the sample to-be-predicted in the current block. The number of minimum values is taken as the target weighting value of the reference sample to the current block.

That is, regarding the importance weight (namely, the "target weighting value", which can be represented by $w_r$) for the current block, other than averaging calculation illustrated in formula (27), the importance weight $w_r$ for the current block can also be a sum obtained through summing calculation, which is specifically as follows:

$$w_r = \sum_{i=1}^{i=H} \sum_{j=1}^{j=W} w_{rij}, \qquad r = 1, 2 \dots M \qquad (32)$$

In addition, regarding the importance weight $w_r$ of each reference sample to the current block, the number of minimum differences between the luma component value of each reference sample for the current block and the luma component value of the sample to-be-predicted can be calculated and taken as the importance weight $w_r$ for the current block, which is specifically as follows:

$$CNT_{rij} = \begin{cases} 1, & True \left( \min_{r \in \{N\}} \left( abs(Y_{ij} - Y_r) \right) \right) \\ 0, & False \left( \min_{r \in \{N\}} \left( abs(Y_{ij} - Y_r) \right) \right) \end{cases} \qquad (33)$$

$$w_r = \sum_{i=1}^{i=H} \sum_{j=1}^{j=W} CNT_{rij}, \qquad r = 1, 2 \dots N \qquad (34)$$

Further, in some embodiments, for derivation of $\alpha$ and $\beta$, before constructing the prediction model according to the first model parameter and the second model parameter, the method may further include the following. Second colour component values of the *N* reference samples are compared. According to a comparison result, a first reference sample sub-set with greater second colour component values and a second reference sample sub-set with smaller second colour component values are determined. A first fitting sample is obtained by performing averaging calculation on the first reference sample sub-set, and a second fitting sample is obtained by performing averaging calculation on the second reference sample sub-set. The first model parameter and the second model parameter are obtained by performing model parameter calculation according to the first fitting sample and the second fitting sample.

That is, in the current CCLM technology, two reference sample sub-sets, i. e. a reference sample sub-set with greater luma component values and a reference sample sub-set with smaller luma component values, can be determined by means of comparison, two average reference samples (namely, two fitting samples) are obtained by performing averaging calculation on each of the two reference sample sub-sets, and the model parameters $\alpha$ and $\beta$ can also be derived according to the two fitting samples.

Specifically, after two fitting samples $(L_{min}, C_{min})$ and $(L_{max}, C_{max})$ are obtained, the model parameters can be obtained according to the two fitting samples by means of calculation based on "two points determines one straight line". Specifically, the model parameters $\alpha$ and $\beta$ are calculated as follows:

$$\begin{cases} \alpha = \frac{C_{max} - C_{min}}{L_{max} - L_{min}} \\ \beta = C_{min} - \alpha \cdot L_{min} \end{cases} \qquad (35)$$

Further, in some embodiments, the first model parameter and the second model parameter can be obtained by performing model parameter calculation according to the first fitting sample and the second fitting sample as follows. After the target weighting value of each of *N* reference samples to the current block is determined, a target weighting value set corresponding to the first reference sample sub-set and a target weighting value set corresponding to the second reference sample sub-set are determined. A first weighting average value is obtained by performing normalization on the target weighting value set corresponding to the first reference sample sub-set, and a second weighting average value is obtained by performing normalization on the target weighting value set corresponding to the second reference sample sub-set. The first model parameter and the second model parameter are obtained by performing weighted least squares calculation on the first fitting sample and the second fitting sample according to the first weighting average value and the second weighting average value.

That is, the importance weight $w_r$ of each reference sample to the current block is calculated according to the foregoing steps, and the importance weights of the reference samples are also classified into two importance weight sub-sets by means of the classification scheme in the current CCLM technology. Weights corresponding to reference samples in each reference sample sub-set are obtained by performing normalization on weights in each importance weight sub-set. Then two weighted average reference samples are obtained by performing weighted average calculation on each of the two reference sample sub-sets according to normalized weights in the corresponding importance weight sub-set. $\alpha$ and $\beta$ are derived from the two weighted average reference samples.

It should also be noted that, in embodiments of the disclosure, the CCLM technology has experienced many times of evolution, from deriving $\alpha$ and $\beta$ by means of LMS according to luminance and chrominance of the reference sample in the neighbouring area, such as top, top-right, left, and bottom-left at an early stage, to selecting only reference samples at four locations in the neighbouring area to obtain $\alpha$ and $\beta$ by means of the maximum-minimum method at present. In addition, the weight calculation method described in the foregoing embodiments can be applied to derivation of the model parameters $\alpha$ and $\beta$ in any version of CCLM technology.

In addition, before constructing the prediction model according to the first model parameter and the second model parameter, the method may further include the following. A bitstream is parsed to determine the first model parameter and the second model parameter.

That is, the encoder can determine the model parameters $\alpha$ and $\beta$ according to the foregoing scheme, and signal the model parameters $\alpha$ and $\beta$ into the bitstream. In this way, for the decoder, the model parameters $\alpha$ and $\beta$ can be obtained directly by decoding without performing model parameter calculation.

Further, in some embodiments, the method may further include the following. The bitstream is parsed to determine a residual value of the first colour component of the sample to-be-predicted in the current block. A reconstructed value of the first colour component of the sample to-be-predicted in the current block is determined according to the residual value of the first colour component and the prediction value of the first colour component.

It should be noted that, after the prediction value of the first colour component of the sample to-be-predicted in the current block is determined, the residual value of the first colour component of the sample to-be-predicted in the current block can be obtained by parsing the bitstream. In this way, the reconstructed value of the first colour component of the sample to-be-predicted in the current block can be determined according to the residual value of the first colour component and the prediction value of the first colour component, specifically, by performing addition calculation on the residual value of the first colour component and the prediction value of the first colour component.

As can be seen, embodiments of the disclosure provide a chroma prediction technology, which is specifically a chroma intra prediction technology. The principle is to calculate the weighting factor according to the luma information of the reference sample and the luma information of the current block that are known, and to perform chroma prediction of the current block by using the weighting factor. Here, a chroma component value of the reference sample is weighted for prediction to obtain a prediction value of a chroma component of the sample to-be-predicted in the current block, where a weighting factor corresponding to the chroma component value of the reference sample can be obtained by performing scale adjustment and non-linear mapping on the luma information of the sample to-be-predicted in the current block and the luma information of the reference sample. In this way, in embodiments of the disclosure, on one hand, the weighting factor corresponding to the chroma component value of the reference sample can be calculated according to the luma information of the reference sample and the luma information of the current block; on the other hand, considering difference in luma information and chroma information of different sizes of blocks, scale adjustment is performed on the luma information according to the size parameter of the current block, which is more conducive to validity of the weighting factor; in addition, considering the tendency that higher similarity between the luma information of the reference sample and the luma information of the sample to-be-predicted in the current block leads to higher importance of the chrominance of the reference sample to the sample to-be-predicted, a valid and accurate mapping model $f$ is constructed, and as such, different weighting factors corresponding to chrominance of the reference sample can be designed for different samples to-be-predicted, thereby improving accuracy of chroma prediction.

The embodiment provides the decoding method. The implementations of the foregoing embodiments are described in detail with reference to the embodiment. As can be seen, according to the technical solutions of the foregoing embodiments, the weighting factor corresponding to the sample to-be-predicted can be calculated according to colour component information of the reference sample and colour component information of the sample to-be-predicted. In addition, different samples to-be-predicted may correspond to different weighting factors. By using the weighting factor for chroma prediction of the sample to-be-predicted in the current block, it is possible to improve accuracy of chroma prediction, save bit rate, and improve coding performance.

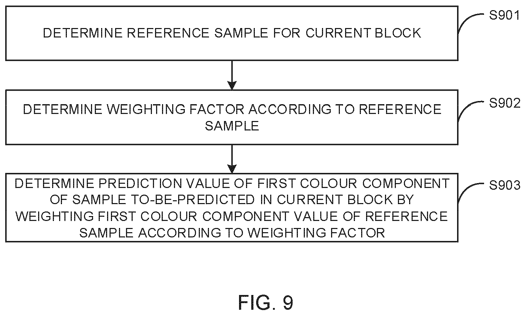

In another embodiment of the disclosure, referring to FIG. 9, FIG. 9 is schematic flowchart I of an encoding method provided in embodiments of the disclosure. As illustrated in FIG. 9, the method may include the following.

S901, a reference sample(s) for a current block is determined.

It should be noted that, the encoding method in the embodiment of the disclosure is applied to an encoder. In addition, the encoding method may specifically refer to an intra prediction method, and more specifically, refers to a colour component prediction method. A video picture can be partitioned into a multiple coding blocks, and each coding block may include a first colour component, a second colour component, and a third colour component. However, the current block in the embodiment of the disclosure refers to a coding block on which intra prediction is currently to be performed in the video picture.

Here, when the first colour component needs to be predicted, a component to-be-predicted is the first colour component. When the second colour component needs to be predicted, the component to-be-predicted is the second colour component. When the third colour component needs to be predicted, the component to-be-predicted is the third colour component. In addition, assuming that a first colour component of the current block is to be predicted and the first colour component is a luma component, that is, the colour component to-be-predicted is a luma component, the current block can also be called a luma block. Alternatively, assuming that the second colour component of the current block is to be predicted and the second colour component is a chroma component, that is, the colour component to-be-predicted is a chroma component, the current block can also be called a chroma block.

It should be further noted that, in the embodiment of the disclosure, the reference sample for the current block may refer to a reference sample neighbouring the current block. Here, "neighbouring" can be spatially neighbouring, but is not limited thereto. For example, "neighbouring" can also be temporally neighbouring or spatially and temporally neighbouring. Alternatively, the reference sample for the current block can also be a reference sample obtained through some processing on a spatially neighbouring reference sample, a temporally neighbouring reference sample, or a spatially and temporally neighbouring reference sample, etc., and embodiments of the disclosure are not limited in this regard.

In some embodiments, the reference sample for the current block can be determined as follows. The reference sample is determined from samples in a neighbouring area of the current block, where the neighbouring area includes at least one of: a top neighbouring area, a top-right neighbouring area, a left neighbouring area, or a bottom-left neighbouring area.

Specifically, in the embodiment of the disclosure, the reference sample can be determined from the samples in the neighbouring area of the current block as follows. A first reference sample set is determined from the samples in the neighbouring area of the current block. Then the reference sample is determined from the first reference sample set. In this way, when the left neighbouring area, the bottom-left neighbouring area, the top neighbouring area, and the top-right neighbouring area are all valid areas, for an INTRA LT_CCLM mode, the first reference sample set may consist of samples in the left neighbouring area and the top neighbouring area of the current block, as illustrated in (a) of FIG. 2; for an INTRA_L_CCLM mode, the first reference sample set may consist of samples in the left neighbouring area and the bottom-left neighbouring area of the current block, as illustrated in (b) of FIG. 2; for an INTRA T_CCLM mode, the first reference sample set may consist of samples in the top neighbouring area and the top-right neighbouring area of the current block, as illustrated in (c) of FIG. 2.

It should be further noted that, in the embodiment of the disclosure, the neighbouring area of the current block can be multiple rows or multiple columns. For example, the left neighbouring area or the bottom-left neighbouring area may include one or more columns, and the top neighbouring area or the top-right neighbouring area may include one or more rows.

It should be further noted that, in the embodiment of the disclosure, samples in some neighbouring areas rather than all neighbouring areas can be used for colour component prediction of the current block, which can be, for example, only the top neighbouring area; or only the left neighbouring area; or only the top neighbouring area and the top-right neighbouring area; or only the left neighbouring area and the bottom-left neighbouring area; or only the top neighbouring area and the left neighbouring area, or only the top neighbouring area, the top-right neighbouring area, and the left neighbouring area; or only the left neighbouring area, the bottom-left neighbouring area, and the top neighbouring area, or the like. In this way, for the current block, reference samples in the four neighbouring areas, i. e. left, bottom-left, top, and top-right, can be obtained for colour component prediction of the current block.

It should be further noted that, in the embodiment of the disclosure, the manner for selecting the neighbouring area can also be determined according to a prediction mode for the current block. In an embodiment, if the prediction mode for the current block is a horizontal mode, the reference sample is determined from samples in the top neighbouring area and/or the top-right neighbouring area; if the prediction mode for the current block is a vertical mode, the reference sample is determined from samples in the left neighbouring area and/or the bottom-left neighbouring area.

Exemplarily, if a luma prediction mode for the current block is the horizontal mode, the neighbouring area for chroma component prediction can be only the top neighbouring area and/or the top-right neighbouring area. If the luma prediction mode for the current block is a vertical mode, the neighbouring area for chroma component prediction can be only the left neighbouring area and/or the bottom-left neighbouring area.

Further, in some embodiments, the method may further include the following. The reference sample is determined by selecting from the samples in the neighbouring area.

Specifically, in the embodiment of the disclosure, the first reference sample set is determined from the samples in the neighbouring area of the current block. In this case, the reference sample can be determined by selecting from the first reference sample set. Here, the number of reference samples can be $N$, where $N$ is an integer and N>0. In other words, $N$ reference samples can be selected from the samples in the neighbouring area. The value of $N$ can be four, but is not limited thereto.

It should be further noted that, among the samples in the neighbouring area of the current block, there can be some unimportant samples (for example, these samples are in weak correlation) or some abnormal samples. To ensure accuracy of prediction, these samples need to be removed, so as to obtain valid reference samples.

In an embodiment, the reference sample can be determined by selecting from the samples in the neighbouring area as follows. A sample location(s) to-be-selected is determined according to a location and/or a colour component intensity of the sample in the neighbouring area. The reference sample is determined from the samples in the neighbouring area according to the sample location to-be-selected.

It should be noted that, the colour component intensity can be represented by a colour component value, such as a luma component value and a chroma component value. Here, a greater colour component value represents a higher colour component intensity. In this way, selection can be performed from the samples in the neighbouring area according to the location of the sample, or can be performed according to the colour component intensity, and embodiments of the disclosure are not limited in this regard. In this way, the reference sample for the current block can be determined according to the sample chosen.

S902, a weighting factor is determined according to the reference sample.

It should be noted that, in the embodiment of the disclosure, after the reference sample is determined, the weighting factor can be determined according to a location of the sample to-be-predicted in the current block and the reference sample.

In some embodiments, the weighting factor can be determined according to the reference sample as follows. A first-reference-colour-component parameter is determined according to a first-reference-colour-component relationship between the sample to-be-predicted in the current block and the reference sample. The weighting factor is determined according to the first-reference-colour-component parameter by using a preset first mapping.

It should be noted that, the first-reference-colour-component parameter can be determined directly according to a difference between a first-reference-colour-component value of the reference sample and a first-reference-colour-component value of the sample to-be-predicted. Therefore, in some embodiments, the first-reference-colour-component parameter can be determined according to the first-reference-colour-component relationship between the sample to-be-predicted in the current block and the reference sample as follows. The difference between the first-reference-colour-component value of the reference sample and the first-reference-colour-component value of the sample to-be-predicted is determined. The first-reference-colour-component parameter is determined according to the difference.

In an embodiment, the first-reference-colour-component parameter can be determined according to the difference as follows. The first-reference-colour-component parameter is set to be equal to an absolute value of the difference.

In another embodiment, the first-reference-colour-component parameter can be determined according to the difference as follows. The first-reference-colour-component parameter is set to be equal to a product of an absolute value of the difference and a preset multiplier.

In the embodiment of the disclosure, the first reference colour component can be a first colour component. Alternatively, the first reference colour component can be a second colour component, where the second colour component is different from the first colour component.

It should be further noted that, the first colour component is the component to-be-predicted in the embodiment of the disclosure. That is, if the first colour component is a chroma component and the second colour component is a luma component, the first-reference-colour-component parameter can be chroma component information or luma component information.

Exemplarily, assuming that the first colour component is a chroma component and the second colour component is a luma component, and the embodiment of the disclosure mainly aims at predicting a chroma component of the sample to-be-predicted in the current block. Firstly, at least one sample to-be-predicted with significant colour difference in the current block is selected, and a chroma difference (represented by $|\Delta C_k|$) between the chrominance thereof and reconstructed chrominance of the neighbouring area is calculated. Chroma differences of samples to-be-predicted at different locations relative to the neighbouring area are different. The location of the reference sample with the minimum chroma difference will vary according to the sample to-be-predicted in the current block. Generally, the chroma difference represents the degree of similarity between chrominance. A smaller $|\Delta C_k|$ indicates higher similarity between chroma values, and the corresponding weighting factor (represented by $w_k$) can be given a greater value; on the contrary, a greater $|\Delta C_k|$ indicates lower similarity between chroma values, and $w_k$ can be given a smaller value. That is, the relationship between $w_k$ and $|\Delta C_k|$ is in approximately inverse proportion. In this way, a preset mapping can be established according to $|\Delta C_k|$, as illustrated in the foregoing formula (1).

That is, in some embodiments, the weighting factor can be determined according to the first-reference-colour-component parameter by using the preset first mapping as follows. A value corresponding to the first-reference-colour-component parameter in a preset function relationship of the first mapping is determined. The weighting factor is set to be equal to the value.

Here, taking formula (1) as an example, $|\Delta C_k|$ represents the first-reference-colour-component parameter, $f(|\Delta C_k|)$ represents the value corresponding to the first-reference-colour-component parameter in the preset function relationship of the first mapping, and $w_k$ represents the weighting factor, that is, $w_k$ is set to be equal to $f(|\Delta C_k|)$.

It should be further noted that, in the embodiment of the disclosure, if the number of reference samples is $N$, the number of weighting factors is $N$ accordingly, where the sum of the $N$ weighting factors is equal to 1 and each of the weighting factors is a value greater than or equal to 0 and less than or equal to 1, i. e. $0 \leq w_k \leq 1$. However, it should be noted that, "the sum of the $N$ weighting factors is equal to 1" is only a theoretical concept, and in actual implementation of fixed-point, the absolute value of the weighting factor can be greater than 1.

It can be understood that, in the probability theory and related fields, a normalized exponential function, or referred to as a Softmax function, is a generalization of a logic function. It can "convert" an N-dimensional vector z of arbitrary real numbers into another N-dimensional vector $\sigma(z)$ such that the range of each element is within (0, 1), and the sum of all the elements is 1. The Softmax function is often used as a non-linear activation function for a multi-class classification neural network. The Softmax function is illustrated in the foregoing formula (2).

However, although the softmax function can satisfy conditional constraints of $w_k$, its function value increases as the value of the vector element increases, which does not comply with the approximately inverse proportion between $w_k$ and $|\Delta C_k|$. Therefore, in order to adapt to the design of $w_k$ and meet requirements for nonlinearity of $w_k$, it can be implemented by a Softmax function with parameter $\gamma$, as illustrated in the foregoing formula (3).

In order to comply with the approximately inverse proportion between $w_k$ and $|\Delta C_k|$, $\gamma$ can be defined as a negative number. That is, if the first-reference-colour-component parameter is $|\Delta C_k|$, the mapping between $|\Delta C_k|$ and $w_k$ can be expressed as illustrated in the foregoing formula (4). Therefore, in some embodiments, the value corresponding to the first-reference-colour-component parameter in the preset function relationship of the first mapping can be determined as follows. A first factor is determined. A first product value is determined according to the first factor and the first-reference-colour-component parameter. A value corresponding to the first product value in the preset function relationship of the first mapping is determined.

It should be noted that, in the embodiment of the disclosure, the first factor is a constant value less than zero. Taking the Softmax function as an example, in formula (4), $\gamma$ represents the first factor, $|\Delta C_k|$ represents the first-reference-colour-component parameter, $\gamma|\Delta C_k|$ represents the first product value, and $w_k$ represents the weighting factor, where $k = 1, 2, ..., N$.

In an embodiment, the first factor can be determined as follows. The first factor is a preset constant value.

It should be noted that, in this case, with regard to $\gamma$, a distribution of weighting factors for neighbouring chrominance can be adjusted according to relatively flat characteristics of chrominance, so as to determine a distribution of weighting factors that is suitable for chroma prediction of a natural picture. In order to determine parameter $\gamma$ suitable for chroma prediction of a natural picture, a given set of $\gamma$ is traversed, and whether $\gamma$ is suitable or not is determined according to differences between prediction chrominance and original chrominance with respect to different $\gamma$. Exemplarily, $\gamma$ can be $-2^\varepsilon$, where $\varepsilon \in \{1, 0, -1, -2, -3\}$. It is found from experiments that in this set of $\gamma$, the optimal value of $\gamma$ is -0.25. Therefore, in an embodiment, $\gamma$ can be set to -0.25, but the embodiment of the disclosure is not limited thereto.

In another embodiment, the first factor can be determined as follows. A value of the first factor is determined according to a size parameter of the current block.

Further, in some embodiments, the method may further include the following. The value of the first factor is determined according to a preset mapping look-up table between the size parameter of the current block and the value of the first factor.

Here, the size parameter of the current block may include at least one of: a width of the current block or a height of the current block.

It should be noted that, in the embodiment of the disclosure, the value of the first factor can be set by means of classification. For example, the size parameter of the current block is classified into three categories, and the value of the first factor corresponding to each category is determined. In this case, in the embodiment of the disclosure, the preset mapping look-up table between the size parameter of the current block and the value of the first factor can also be pre-stored, and then the value of the first factor can be determined according to the look-up table. Table 1 is a schematic table illustrating a correspondence between the first factor and the size parameter of the current block provided in the embodiment of the disclosure.

In yet another embodiment, the first factor can be determined as follows. A value of the first factor is determined according to the number of reference samples for the current block.

Further, in some embodiments, the method may further include the following. The value of the first factor is determined according to a preset mapping look-up table between the number of reference samples for the current block and the value of the first factor.

It should be noted that, in the embodiment of the disclosure, the number of reference samples can be classified into three categories, and the value of the first factor can also be set by means of classification. For example, the number of reference samples for the current block is classified into three categories, and the value of the first factor corresponding to each category is determined. In this case, in the embodiment of the disclosure, the mapping look-up table between the number of reference samples for the current block and the value of the first factor can also be pre-stored, and then the value of the first factor can be determined according to the look-up table. Table 2 is a schematic table illustrating a correspondence between the first factor and the number of reference samples for the current block provided in the embodiment of the disclosure.

Further, for the first product value, in a possible implementation, the first product value can be determined according to the first factor and the first-reference-colour-component parameter as follows. The first product value is set to be equal to a product of the first factor and the first-reference-colour-component parameter.

In another possible implementation, the first product value can be determined according to the first factor and the first-reference-colour-component parameter as follows. The first product value is set to be equal to a numerical value obtained by right-shifting the first-reference-colour-component parameter, where the number of bits right shifted is equal to the first factor.

In yet another possible implementation, the first product value can be determined according to the first factor and the first-reference-colour-component parameter as follows. The first product value is determined by performing addition and bit shift on the first-reference-colour-component parameter according to the first factor.

It should be noted that, in the embodiment of the disclosure, the first product value can be equal to the product of the first factor and the first-reference-colour-component parameter, or can be equal to the value obtained by right-shifting the first-reference-colour-component parameter, or can be obtained by performing addition and bit shift on the first-reference-colour-component parameter according to the first factor.

Exemplarily, assuming that the first factor is equal to 0.25 and the first-reference-colour-component parameter is represented by S, then the first product value is equal to $0.25 \times S$, and $0.25 \times S$ can also be represented by S/4, that is, S»2. In addition, in fixed-point computation, a floating-point number can be converted into addition and shift operations. That is, there is no limitation on the manner for calculation of the first product value.

In still another possible implementation, the first product value is determined according to the first factor and the first-reference-colour-component parameter as follows. A second factor is determined according to the first colour component value of the reference sample and the first-reference-colour-component value of the reference sample. The first product value is set to a product of the first factor, the first-reference-colour-component parameter, and the second factor.

It should be noted that, when the first reference colour component is the component to-be-predicted (namely, chroma component), since a chroma component value of the sample to-be-predicted cannot be directly determined, an absolute chroma difference $|\Delta C_k|$ between the reference sample and the sample to-be-predicted cannot be directly obtained. In this case, $|\Delta C_k|$ can be derived according to an absolute luma difference $|\Delta Y_k|$ between the reference sample and the sample to-be-predicted. That is, $|\Delta C_k|$ can be obtained according to the product of $|\Delta Y_k|$ and the second factor. In this way, the first product value is equal to the product of the first factor and $|\Delta C_k|$.

Specifically, for the current block, the chroma component value $C_{ij}$ of the current sample to-be-predicted (i, j) can be estimated according to a reconstructed luma value $Y_{ij}$ of the current sample to-be-predicted, as illustrated in the foregoing formula (5). By the same reasoning, neighbouring chrominance $C_k$ can also be estimated according to a reconstructed luma value $Y_k$ corresponding thereto, as illustrated in the foregoing formula (6). Then, the relationship between $|\Delta C|$ and $|\Delta Y|$ can be obtained through subtraction between formula (5) and formula (6), as illustrated in the foregoing formula (7).

That is, in the embodiment of the disclosure, the first-reference-colour-component parameter can be $|\Delta C_k|$, that is, the absolute value of the difference between the first colour component value of the reference sample and the first colour component value of the sample to-be-predicted. Alternatively, the first-reference-colour-component parameter can be $|\Delta Y_k|$, that is, an absolute value of a difference between a second colour component value of the reference sample and a second colour component value of the sample to-be-predicted. Alternatively, the first-reference-colour-component parameter can be $|\alpha \Delta Y_k|$, that is, a product of a preset multiplier and the absolute value of the difference between the second colour component value of the reference sample and the second colour component value of the sample to-be-predicted. Here, the preset multiplier is the second factor described in the embodiment of the disclosure.

Further, for the second factor, in a possible implementation, the second factor can be determined according to the first colour component value of the reference sample and the first-reference-colour-component value of the reference sample as follows. The second factor is determined by performing least squares calculation on the first colour component value of the reference sample and the first-reference-colour-component value of the reference sample.

That is, assuming that the number of reference samples is N, the first colour component is a chroma component, and the first reference colour component is a luma component, then least squares calculation can be performed on chroma component values and luma component values of the N reference samples, so as to obtain the second factor. Exemplarily, the least squares regression calculation is illustrated in formula (8) above.

Further, in addition to determining the first-reference-colour-component parameter directly according to the absolute value of the difference between the first-reference-colour-component value of the reference sample and the first-reference-colour-component value of the sample to-be-predicted, the first-reference-colour-component parameter can also be determined with a neural network. Therefore, in some embodiments, the first-reference-colour-component parameter can be determined according to the first-reference-colour-component relationship between the sample to-be-predicted in the current block and the reference sample as follows. The first-reference-colour-component parameter is determined by using a first neural network model.

In an embodiment, the method may include the following. An input of the first neural network model includes the first-reference-colour-component value of the reference sample and the first-reference-colour-component value of the sample to-be-predicted. An output of the first neural network model includes the first-reference-colour-component parameter.

It should be noted that, in the embodiment of the disclosure, a preset neural network model can be a convolutional neural network, a deep learning neural network, or the like. The first-reference-colour-component value of the reference sample and the first-reference-colour-component value of the sample to-be-predicted can be the input of the preset neural network model, and accordingly, the output of the preset neural network model is the first-reference-colour-component parameter.

Further, for the second factor, in another possible implementation, the method may further include the following. The number of first colour component values is determined according to the number of reference samples for the current block. An initial value of the second factor is determined according to the number of first colour component values. The second factor is determined according to the initial value of the second factor.

It should be noted that, in some embodiments, the second factor can be determined according to the initial value of the second factor as follows. The initial value of the second factor is taken directly as the second factor, or the initial value of the second factor is adjusted to obtain the second factor.

It should be further noted that, in some embodiments, the initial value of the second factor can be determined according to the number of first colour component values as follows. If the number of the first colour component values is greater than zero and less than 16, the initial value of the second factor is determined to be 0.445. If the number of the first colour component values is greater than or equal to 16 and less than 32, the initial value of the second factor is determined to be 0.3091. If the number of the first colour component values is greater than or equal to 32, the initial value of the second factor is determined to be 0.2026.

That is, in the embodiment of the disclosure, for the second factor, $\alpha$ can be obtained by performing linear least squares regression calculation on the reference sample(s) in the neighbouring area. However, on one hand, there is a deviation between $\alpha$ and the theoretically optimal value; on the other hand, if $\alpha$ is estimated by means of linear least squares regression, additional calculation is needed at both an encoding end and a decoding end. Therefore, in order to further reduce complexity of calculation of the weighting factor, $\alpha$ can be classified according to size characteristics of the current block, and the value of $\alpha$ can be set accordingly, so as to be eliminate linear least squares regression calculation.

In VVC, a flexible block partitioning technology is used, which supports binary tree partitioning, ternary tree partitioning, and quadtree partitioning. The minimum block size of a chroma coding unit only needs to satisfy that the total number of samples is greater than or equal to 16. Therefore, there are square blocks and rectangular blocks of various sizes in chroma coding units in the same video picture, and the number of reference samples involved in estimation varies with the block size. In order to make classification of $\alpha$ and determination of the value of $\alpha$ simple and valid and comply with actual coding characteristics, the number of reference samples is classified into three categories, and each category corresponds to a fixed $\alpha$ value. An average $\alpha$ (namely, the initial value of the second factor described herein) corresponding to each of the three categories of the number of reference samples is calculated according to a block subject to WC encoding, then fine adjustment is performed based on the average $\alpha$ as the center, and finally, the three categories of $\alpha$ after fine adjustment that can lead to better coding performance can be used as the final $\alpha$. Table 3 is a schematic table illustrating a correspondence between the number R of chrominance corresponding to the reference samples and the average $\alpha$.

It should be further noted that, after $\gamma$ and $\alpha$ are determined, the weighting factor can be determined according to the first-reference-colour-component parameter by using the preset first mapping.

In an embodiment, the first mapping can be a mapping look-up table between the first-reference-colour-component parameter and a value of the weighting factor. That is, the decoder may pre-store the mapping look-up table between the first-reference-colour-component parameter and the value of the weighting factor, and in this way, after the first-reference-colour-component parameter is obtained, the weighting factor can be determined directly according to the look-up table.

In another embodiment, a value corresponding to the first-reference-colour-component parameter in the preset function relationship of the first mapping is determined, and then the weighting factor is set to be equal to the value.

It should be noted that, for the preset function relationship of the first mapping, the preset function relationship of the first mapping can be a Softmax function. The Softmax function is a normalized exponential function. However, in the embodiment of the disclosure, normalization may not be needed, and the value thereof is not limited to the range of [0, 1].

Exemplarily, after $\gamma$ and $\alpha$ are determined, since $\Delta Y_k$ is known and $|\Delta C_k|$ can be approximated by $|\alpha \Delta Y_k|$, the weighting factor $w_k$ corresponding to the kth reference sample can be calculated according to the following formula, as illustrated in the foregoing formula (9) or formula (10).

It should be noted that, for the preset function relationship of the first mapping, other than the Softmax function, in other embodiments, the preset function relationship of the first mapping can be a weighting function that is inverse proportion with the first-reference-colour-component parameter.

That is, regarding the preset function relationship of the first mapping, in addition to replacing the Softmax function of formula (10) with formula (11) or formula (12) described above, the preset function relationship of the first mapping can even be another function model of the weighting factor that is constructed by fitting the tendency that higher similarity between luma information of reference sample *x* and luma information of the sample to-be-predicted in the current block leads to higher importance of the chrominance of the reference sample to the sample to-be-predicted in the current block. The embodiment of the disclosure is not limited in this regard.

In this way, the weighting factor can be determined according to the location of the sample to-be-predicted in the current block and the reference sample. The weighting factor may specifically include *N* weighting factors $w_1$, $w_2$, ..., $w_N$,

where $N$ represents the number of reference samples. Theoretically, the sum of the $N$ weighting factors is equal to 1, and each of the weighting factors is a value greater than or equal to 0 and less than or equal to 1.

S903, a prediction value of a first colour component of the sample to-be-predicted in the current block is determined by weighting the first colour component value of the reference sample according to the weighting factor.

It should be noted that, after the weighting factor is determined, the first colour component value of the reference sample can be weighted according to the weighting factor, so as to obtain the prediction value of the first colour component of the sample to-be-predicted in the current block.

It should be further noted that, in some embodiments, the prediction value of the first colour component of the sample to-be-predicted in the current block can be determined by weighting the first colour component value of the reference sample according to the weighting factor as follows. A weighted value of the first colour component value multiplied by the reference sample with the corresponding weighting factor is determined. The prediction value of the first colour component of the sample to-be-predicted in the current block is set to be equal to the sum of $N$ weighted values, where $N$ represents the number of the reference samples, and $N$ is a positive integer.

That is, if the number of reference samples is $N$, a weighted value (namely, $w_k C_k$) of a first colour component value of each reference sample multiplied by a corresponding weighting factor is determined, and then the sum of the $N$ weighted values is taken as the prediction value of the first colour component of the sample to-be-predicted in the current block. Specifically, the formula for calculation is that illustrated in the foregoing formula (13). It should be noted that, as such, it is conducive to parallel processing and higher calculation speed.

It can also be understood that, assuming that the component to-be-predicted (namely, the first colour component) is a chroma component and the first reference colour component (namely, the second colour component) is a luma component, considering inconsistency in resolution, in the embodiment of the disclosure, the method may further include the following. Downsampling is performed on a first reference colour component of the reference sample and a first reference colour component of the sample to-be-predicted in the current block, so that the first reference colour component has the same resolution as the component to-be-predicted.

That is, for the case where the resolution of the luma component is different from the resolution of the chroma component, downsampling can be performed on the luma component to make the resolution of the luma component be consistent with the resolution of the chroma component. The method for downsampling can be a traditional filter coefficient or a neural network, which is not specifically limited in embodiments of the disclosure.

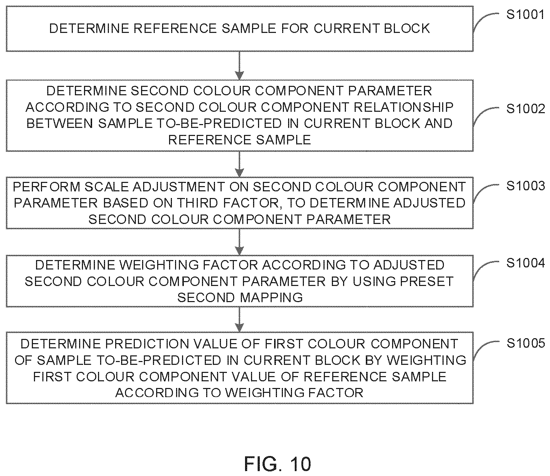

Further, in some embodiments, FIG. 10 is schematic flowchart II of an encoding method provided in embodiments of the disclosure. As illustrated in FIG. 10, the method may include the following.

S1001, a reference sample(s) for a current block is determined.

It should be noted that, in the embodiment of the disclosure, the reference sample may refer to a reference sample neighbouring the current block. In this way, according to the schematic distribution of the neighbouring areas illustrated in FIG. 1, in the embodiment of the disclosure, the reference sample can be determined from samples in a left neighbouring area, a bottom-left neighbouring area, a top neighbouring area, and a top-right neighbouring area that are available for the current block, and then colour component prediction of the current block is performed according to the reference sample.

S1002, a second colour component parameter is determined according to a second colour component relationship between a sample to-be-predicted in the current block and the reference sample.

It should be noted that, for the determination of the second colour component parameter, in a possible implementation, the second colour component parameter can be determined according to the second colour component relationship between the sample to-be-predicted in the current block and the reference sample as follows. A difference between a second colour component value of the reference sample and a second colour component value of the sample to-be-predicted is determined. The second colour component parameter is set to be equal to an absolute value of the difference.

Exemplarily, assuming that the first colour component is a chroma component and the second colour component is a luma component, the second colour component parameter can also be referred to as luma information. In terms of obtaining the luma information, after the reference sample for the current block is determined, an absolute value of a difference between a luma component of the reference sample and a luma component of a sample (i, j) to-be-predicted in the current block is taken as the second colour component parameter (namely, an absolute luma difference $|\Delta Y_{kij}|$), where k represents a $k$th reference sample. For calculation of $|\Delta Y_{kij}|$, reference can be made to the foregoing formula (14).

In another possible implementation, the second colour component parameter can be determined according to the second colour component relationship between the sample to-be-predicted in the current block and the reference sample as follows. The second colour component value of the reference sample and the second colour component value of the sample to-be-predicted are input into a preset neural network, and the second colour component parameter is output at the preset neural network.

In yet another possible implementation, the second colour component parameter can be determined according to the second colour component relationship between the sample to-be-predicted in the current block and the reference sample as follows. Similarity between the second colour component value of the reference sample and the second colour component value of the sample to-be-predicted is determined, and the second colour component parameter is determined according to a comparison result.

Still taking obtaining the luma information as an example, for the case where the resolution of the Y component is different from the resolution of the U or V component, downsampling can be performed on the Y component to make the resolution of the Y component be consistent with the resolution of the U or V component. The method for downsampling herein can be a traditional filter coefficient or a neural network.

In addition, when obtaining the luma information, other than using directly the absolute value of the difference between the luma component value of the reference sample and the luma component value of the sample to-be-predicted in the current block as the luma information obtained, the luma component value of the reference sample and the luma component value of the sample to-be-predicted in the current block can also be taken as an input of the preset neural network, and an output of the preset neural network is taken as the luma information obtained.

Alternatively, when the obtaining luma information, other than using directly the absolute value of the difference between luminance of the reference sample and luminance of the sample to-be-predicted in the current block as the luma information obtained, similarity between a luma component value of a $k^{th}$ reference sample and the luma component value of the sample to-be-predicted in the current block can be determined, that is, whether the $k^{th}$ reference sample is the most similar reference sample to the sample to-be-predicted in the current block in terms of luma component value is determined and the determination result is taken as the luma information obtained. For example, if the $k^{th}$ reference sample is the most similar, the luma information of the $k^{th}$ reference sample is set to 1; otherwise, the luma information of the $k^{th}$ reference sample is set to 0.

S1003, scale adjustment is performed on the second colour component parameter based on a third factor, to determine the adjusted second colour component parameter.

It should be noted that, after the luma information is obtained, scale adjustment can be performed. Here, $|\triangle Y_{kij}|$ is taken as an example of the luma information, and then scale adjustment can be performed on N pieces of $|\triangle Y_{kij}|$ based on the third factor.

In a possible implementation, for an absolute luma difference $|\triangle Y_{kij}|$ corresponding to a sample to-be-predicted in current blocks with different size parameters, scale adjustment can be performed based on different third factors. Specifically, in some embodiments, the method may further include the following. The size parameter of the current block is determined. The third factor is determined according to the size parameter of the current block, where the size parameter of the current block includes at least one of: a width of the current block or a height of the current block.

In an embodiment, the third factor can be determined according to the size parameter of the current block as follows. If the minimum value between the height and the width of the current block is less than or equal to 4, the third factor is determined to be 8. If the minimum value between the height and width of the current block is greater than 4 and less than or equal to 16, the third factor is determined to be 12. If the minimum value between the height and the width of the current block is greater than 16, the third factor is determined to be 16.

It should be noted that, in the embodiment of the disclosure, a value of the third factor (represented by $\vartheta$) can be set by means of classification. In addition, the height of the current block is represented by H, and the width of the current block is represented by W. For a correspondence between the third factor $\vartheta$ and the size parameter of the current block, reference can be made to Table 4.

In another embodiment, during scale adjustment, fine adjustment can be performed on the foregoing correspondence between the third factor $\vartheta$ and the size parameter of the current block. For the correspondence between the third factor $\vartheta$ and the size parameter of the current block after fine adjustment, reference can be made to Table 5.

In another embodiment, during scale adjustment, fine adjustment can also be performed on the value of the third factor $\vartheta$. In some embodiments, the third factor can be determined according to the size parameter of the current block as follows. If the minimum value between the height and the width of the current block is less than or equal to 4, the third factor is determined to be 7. If the minimum value between the height and the width of the current block is greater than 4 and less than or equal to 16, the third factor is determined to be 11. If the minimum value between the height and the width of the current block is greater than 16, the third factor is determined to be 15.

That is, for the correspondence between the third factor $\vartheta$ and the size parameter of the current block after fine adjustment of the value of the third factor $\vartheta$, reference can be made to Table 6.

In another possible implementation, during scale adjustment, the third factor can also be classified according to the number of reference samples for the current block. Here, N represents the number of reference samples, and in some embodiments, the method may further include the following. If the value of $N$ is less than 16, the third factor is determined to be 8. If the value of $N$ is greater than or equal to 16 and less than 32, the third factor is determined to be 12. If the value of $N$ is greater than or equal to 32, the third factor is determined to be 16.

That is, classification is performed according to the number of reference samples of the current block. In this case, a correspondence between the third factor $\vartheta$ and the number of neighbouring reference samples is that illustrated in Table 7.

In another possible implementation, during scale adjustment, the third factor can also be calculated in another manner. In some embodiments, the method may further include the following. A first model parameter for the current block is determined. Scaling is performed on the first model parameter to obtain a scaled first model parameter. A reciprocal of the scaled first model parameter is calculated to obtain the third factor.

That is, in embodiments of the disclosure, a prediction model is constructed according to the luminance and the chrominance of the reference sample for the current block (the prediction model can be constructed by using a CCLM linear model construction scheme in the related art, or can be constructed by means of a least squares method or a weighted least squares method), so as to calculate the first model parameter (namely, a slope parameter, which is represented by $\alpha$) for the prediction model. The parameter $\alpha$ is scaled and then a reciprocal of the scaled parameter $\alpha$ is taken as the third factor $\vartheta$ for the current block. For example, $\alpha/4$ is scaled and then a reciprocal thereof is taken as the value of the third factor $\vartheta$.

It should be further noted that, during scale adjustment, the number of categories of the third factor $\vartheta$ can be adjusted according to performance requirements. For example, classification of $\vartheta$ can be finer to increase the number of categories of $\vartheta$, so as to improve prediction accuracy. Alternatively, the number of categories of $\vartheta$ can be decreased; or even the same $\vartheta$ can be used for any current block or $\vartheta$ can be an average value of the foregoing multiple categories of $\vartheta$ and no classification is needed. As such, operations can be simplified, but prediction accuracy is degraded.

S1004, a weighting factor is determined according to the adjusted second colour component parameter by using a preset second mapping.

It should be noted that, after the luma information is obtained and scale adjustment is performed, the weighting factor can be calculated according to in the preset second mapping, where the preset second mapping is a non-linear mapping. Assuming that the number of reference samples for the current block is $N$, then $N$ second colour component parameters can be obtained; and after scale adjustment, $N$ adjusted second colour component parameters can be obtained; in this way, the number of weighting factors calculated through non-linear mapping is $N$ accordingly.

Specifically, in the embodiment of the disclosure, a function model (namely, the preset second mapping, represented by $f$) for weighting factor calculation can be constructed according to the tendency that higher similarity between the luma information of the reference sample and the luma information of the sample (i,j) to-be-predicted in the current block leads to higher importance of the chrominance of the reference sample to the sample (i,j) to-be-predicted. Here, the Softmax function is used as the $f$ model, and after scale adjustment is performed on the absolute luma difference, the absolute luma difference subject to scale adjustment is mapped to a weighting factor for the chrominance through the Softmax function. Specifically, scale adjustment is performed on the $N$ absolute luma differences $|\triangle Y_{kij}|$ corresponding to the sample (i,j) to-be-predicted, and then take the negative number values thereof. In this way, the negative values of the $N$ absolute luma differences $|\triangle Y_{kij}|$ subject to scale adjustment are mapped to weighting factors $w_{kij}$ corresponding to the $N$ reference samples respectively through the Softmax function, and details of the calculation are illustrated in the foregoing formula (15).

It should also be noted that, in the embodiment of the disclosure, for the $f$ model, other function models for weighting factor calculation can also be used, where the function model can be constructed by fitting the tendency that higher similarity between the luma information of reference sample and the luma information of the sample to-be-predicted in the current block leads to higher importance of the chrominance of the reference sample to the sample to-be-predicted in the current block. Exemplarily, for the $f$ model, formula (15) can be used, or the Softmax function of formula (15) can be replaced with formula (16) or formula (17), which is not limited herein.

In addition, in some embodiments, no matter whether a preset first mapping or the preset second mapping is used, operations can be simplified, for example, it is possible to eliminate some calculation operations by means of an array element look-up table. For the first mapping, an array element value can be determined according to a preset mapping look-up table between a first-reference-colour-component parameter, a first factor, and an array element; a value corresponding to the array element value in a preset function relationship of the first mapping can be determined; and then the weighting factor can be set to be equal to the value.

For the second mapping, an array element value can be determined according to a preset mapping look-up table between the second colour component parameter, the third factor, and an array element; a value corresponding to the array element value in a preset function relationship of the second mapping can be determined; and then the weighting factor can be set to be equal to the value.

Specifically, taking the second mapping as an example, the $f$ model for weighting factor calculation can be implemented through simplified operations, for example, by means of a look-up table. The weighting factor is calculated with the $f$ model, i. e. $w_{kij} = f(|\Delta Y_{rij}|)$. Here, a numerator in the $f$ model can be stored by taking the independent variable $|\Delta Y_{rij}|$ and the number of categories of $\vartheta$ as an array index(es). Subsequent operations that are the same as calculation of the numerator in the $f$ model are implemented by means of the look-up table, so as to eliminate calculation operations on the numerator and a denominator.

It should be noted that, in the embodiment of the disclosure, the storage can be full storage or partial storage.

In an embodiment, the full storage means storing all numerators corresponding to the range of $|\Delta Y_{rij}|$ and the

number of categories of $\vartheta$, and an array space with a size of the range of $|\Delta Y_{rij}|$ multiplied by the number of categories of $\vartheta$ is required for full storage. The size of the array that needs to be stored is the size of the range of $|\Delta Y_{rij}|$, and in this case, the performance remains unchanged.

Exemplarily, taking a 10-bit sample and formula (15) as an example, the range of the variable $|\Delta Y_{rij}|$ is integers within 0~1023, the number of categories of $\vartheta$ is 3, and the numerators are fully stored by taking $|\Delta Y_{rij}|$ and the number of categories of $\vartheta$ as indexes for a two-dimensional array storMole. For details thereof, reference can be made to the foregoing formula (18) and formula (19). In this way, elements in the two-dimensional array storMole[index 1][index 2] are those illustrated in Table 8.

Further, for full storage, a corresponding array offset can also be set according to the categories of $\vartheta$, and then the numerators are fully stored by taking $|\Delta Y_{rij}|$ plus offset as an index for a one-dimensional array ostorMole. For details thereof, reference can be made to the foregoing formula (20) and formula (21). In this way, elements in the one-dimensional array ostorMole ostorMole[index] are those illustrated in Table 9.

In another embodiment, partial storage refers to storing part of numerator values for weighting factor calculation. Numerator values corresponding to part of the range of $|\Delta Y_{rij}|$ and/or part of the categories of $\vartheta$ can be stored, the value of the $f$ model which is not chosen for storage can be 0 by default, and the size of the array that needs to be stored is the size of the selected range of $|\Delta Y_{rij}|$ multiplied by the number of the selected categories of $\vartheta$.

Exemplarily, taking a 10-bit sample and formula (15) as an example, assuming that numerator values corresponding to integers within the range of 0-99 for $|\Delta Y_{rij}|$ and three categories of $\vartheta$ are selected for partial storage, then the range of $|\Delta Y_{rij}|$ is integers within 0-99, the number of categories of $\vartheta$ is 3, and the numerators are stored by taking such $|\Delta Y_{rij}|$ and such number of categories of $\vartheta$ as indexes for a two-dimensional array partstorMole. For details thereof, reference can be made to the foregoing formula (22) and formula (23). As such, elements in the two-dimensional array partstorMole[index 1][index 2] are those illustrated in Table 10.

That is, the storage range of partial storage can be determined according to actual needs, and is not limited to integers within 100 for $|\Delta Y_{rij}|$ and 3 categories of $\vartheta$ in the example. Likewise, for partial storage, a corresponding offset can also be set for the selected categories of $\vartheta$, so as to open up a one-dimensional storage space for storage, and embodiments of the disclosure are not limited in this regard.

S1005, a prediction value of the first colour component of the sample to-be-predicted in the current block is determined by weighting a first colour component value of the reference sample according to the weighting factor.

It should be noted that, after obtaining the luma information, performing scale adjustment, and calculating the weighting factor through non-linear mapping, the chroma prediction value of the sample to-be-predicted can be calculated. Specifically, chroma component values $C_k$ of $N$ reference samples can be weighted according to the weighting factors obtained in the foregoing steps, so as to obtain a chroma prediction value $C_{ij}^{pred}$ of the sample (i,j) to-be-predicted in the current block. Details thereof are illustrated the foregoing formula (24).

It should be further noted that, $w_{kij}$ needs to be satisfy $w_{1ij} + w_{2ij} + ... + w_{Nij} = 1$ and $0 \leq w_{kij} \leq 1$, and $w_{kij}$ can be determined according to an absolute luma difference and have non-linear characteristics. In this way, it is possible to fully take into consideration not only difference between different sizes of blocks in terms of luma information and chroma information, but also the tendency that higher similarity between the luma information of the reference sample and the luma information of the sample to-be-predicted in the current block leads to higher importance of the chrominance of the reference sample to the sample to-be-predicted, thereby improving accuracy of chroma prediction.

In addition, in embodiments of the disclosure, a weight can be allocated to the sample in the neighbouring area according to luma information of the sample in the neighbouring area and luma information of the current block, and CCLM prediction can be performed based on a first model parameter and a second model parameter derived by performing weighted LMS on the reference sample(s) having weight characteristics, thereby improving accuracy of chroma prediction. Therefore, in some embodiments, the method may further include the following. A difference between the second colour component value of the reference sample and the second colour component value of the sample to-be-predicted in the current block is determined. A weighting value(s) of the reference sample(s) to the sample to-be-predicted in the current block is determined according to the difference by using the preset second mapping. A target weighting value of the reference sample to the current block is determined according to the weighting value of the reference sample to the sample to-be-predicted in the current block. A first model parameter and a second model parameter are determined by performing weighted least squares calculation on the first colour component value of the reference sample and the first-reference-colour-component value of the reference sample according to the target weighting value. A prediction model is constructed according to the first model parameter and the second model parameter. The prediction value of the first colour component of the sample to-be-predicted in the current block is determined by predicting the first colour component of the sample to-be-predicted in the current block with the prediction model.

In an embodiment, the target weighting value of the reference sample to the current block can be determined according to the weighting value of the reference sample to the sample to-be-predicted in the current block as follows. The target weighting value of the reference sample to the current block is determined by performing averaging calculation on the weighting value of the reference sample to the sample to-be-predicted in the current block. Alternatively, the target weighting value of the reference sample to the current block is determined by performing summing calculation on the weighting value of the reference sample to the sample to-be-predicted in the current block.

In another embodiment, in terms of determining the target weighting value, the method may further include the following. The number of minimum values among absolute values of the differences is determined based on the difference between the first-reference-colour-component value of the reference sample and the first-reference-colour-component value of the sample to-be-predicted in the current block. The number of minimum values is taken as the target weighting value of the reference sample to the current block.

That is, regarding the importance weight (namely, the "target weighting value", which can be represented by $w_r$) for the current block, other than averaging calculation illustrated in formula (27), the importance weight $w_r$ for the current block can also be a sum obtained through summing calculation, such as formula (32) mentioned above. In addition, regarding the importance weight $w_r$ of each reference sample to the current block, the number of minimum differences between the luma component value of each reference sample for the current block and the luma component value of the sample to-be-predicted can be calculated and taken as the importance weight $w_r$ for the current block, such as the foregoing formula (33) and formula (34), which is not limited in embodiments of the disclosure.

It should be noted that, in the embodiment of the disclosure, the first model parameter is represented by $\alpha$, and the second model parameter is represented by $\beta$. In a possible implementation, for derivation of $\alpha$ and $\beta$, before constructing the prediction model according to the first model parameter and the second model parameter, the method may further include the following. Second colour component values of the $N$ reference samples are compared. According to a comparison result, a first reference sample sub-set with greater second colour component values and a second reference sample sub-set with smaller second colour component values are determined. A first fitting sample is obtained by performing averaging calculation on the first reference sample sub-set, and a second fitting sample is obtained by performing averaging calculation on the second reference sample sub-set. The first model parameter and the second model parameter are obtained by performing model parameter calculation according to the first fitting sample and the second fitting sample.

That is, in the current CCLM technology, two reference sample sub-sets, i. e. a reference sample sub-set with greater luma component values and a reference sample sub-set with smaller luma component values, can be determined by means of comparison, two average reference samples (namely, two fitting samples) are obtained by performing averaging calculation on each of the two reference sample sub-sets, and the model parameters $\alpha$ and $\beta$ can also be derived according to the two fitting samples.

In another possible implementation, for derivation of $\alpha$ and $\beta$, the first model parameter and the second model parameter can be obtained by performing model parameter calculation according to the first fitting sample and the second fitting sample as follows. After the target weighting value of each of $N$ reference samples to the current block is determined, a target weighting value set corresponding to the first reference sample sub-set and a target weighting value set corresponding to the second reference sample sub-set are determined. A first weighting average value is obtained by performing normalization on the target weighting value set corresponding to the first reference sample sub-set, and a second weighting average value is obtained by performing normalization on the target weighting value set corresponding to the second reference sample sub-set. The first model parameter and the second model parameter are obtained by performing weighted least squares calculation on the first fitting sample and the second fitting sample according to the first weighting average value and the second weighting average value.

That is, the importance weight $w_r$ of each reference sample to the current block is calculated according to the foregoing steps, and the importance weights of the reference samples are also classified into two importance weight sub-sets by means of the classification scheme in the current CCLM technology. Weights corresponding to reference samples in each reference sample sub-set are obtained by performing normalization on weights in each importance weight sub-set. Then two weighted average reference samples are obtained by performing weighted average calculation on each of the two reference sample sub-sets according to normalized weights in the corresponding importance weight sub-set. $\alpha$ and $\beta$ are derived from the two weighted average reference samples.

It should also be noted that, in embodiments of the disclosure, the CCLM technology has experienced many times of evolution, from deriving $\alpha$ and $\beta$ by means of LMS according to luminance and chrominance of the reference sample in the neighbouring area, such as top, top-right, left, and bottom-left at an early stage, to selecting only reference samples at four locations in the neighbouring area to obtain $\alpha$ and $\beta$ by means of the maximum-minimum method at present. In addition, the weight calculation method described in the foregoing embodiments can be applied to derivation of the model parameters $\alpha$ and $\beta$ in any version of CCLM technology.

In addition, after the first model parameter and the second model parameter are obtained, the method may further include the following. The first model parameter and the second model parameter are encoded, and encoded bits obtained are signalled into a bitstream.

That is, an encoder may determine the model parameters $\alpha$ and $\beta$ according to the foregoing scheme, and signal the model parameters $\alpha$ and $\beta$ into the bitstream. In this way, for the decoder, the model parameters $\alpha$ and $\beta$ can be

obtained directly by decoding without performing model parameter calculation.

Further, in some embodiments, the method further include the following. An original value of the first colour component of the sample to-be-predicted in the current block is determined. A residual value of the first colour component of the sample to-be-predicted in the current block is determined according to the original value of the first colour component and the prediction value of the first colour component. The residual value of the first colour component of the sample to-be-predicted in the current block is encoded, and encoded bits obtained are signalled into the bitstream.

It should be noted that, after the prediction value of the first colour component of the sample to-be-predicted in the current block is determined, the residual value of the first colour component of the sample to-be-predicted in the current block can be determined according to the original value of the first colour component and the prediction value of the first colour component. Specifically, the residual value of the first colour component of the sample to-be-predicted in the current block can be determined by performing subtraction calculation on the original value of the first colour component and the prediction value of the first colour component. In this way, after the residual value of the first colour component is signalled into the bitstream, at the decoding end, the residual value of the first colour component can be obtained by decoding, so as to restore a reconstructed value of the first colour component of the sample to-be-predicted in the current block.

As can be seen, embodiments of the disclosure provide a chroma prediction technology, which is specifically a chroma intra prediction technology. The principle is to calculate the weighting factor according to the luma information of the reference sample and the luma information of the current block that are known, and to perform chroma prediction of the current block by using the weighting factor. Here, a chroma component value of the reference sample is weighted for prediction to obtain a prediction value of a chroma component of the sample to-be-predicted in the current block, where a weighting factor corresponding to the chroma component value of the reference sample can be obtained by performing scale adjustment and non-linear mapping on the luma information of the sample to-be-predicted in the current block and the luma information of the reference sample. In this way, in embodiments of the disclosure, on one hand, the weighting factor corresponding to the chroma component value of the reference sample can be calculated according to the luma information of the reference sample and the luma information of the current block; on the other hand, considering difference in luma information and chroma information of different sizes of blocks, scale adjustment is performed on the luma information according to the size parameter of the current block, which is more conducive to validity of the weighting factor; in addition, considering the tendency that higher similarity between the luma information of the reference sample and the luma information of the sample to-be-predicted in the current block leads to higher importance of the chrominance of the reference sample to the sample to-be-predicted, a valid and accurate mapping model $f$ is constructed, and as such, different weighting factors corresponding to chrominance of the reference sample can be designed for different samples to-be-predicted, thereby improving accuracy of chroma prediction.

The embodiment provides an encoding method. The reference sample for the current block is determined. The weighting factor is determined according to the reference sample. The prediction value of the first colour component of the sample to-be-predicted in the current block is determined by weighting the first colour component value of the reference sample according to the weighting factor. In this way, according to colour component information of the reference sample and colour component information of the sample to-be-predicted in the current block, the weighting factor corresponding to the sample to-be-predicted in the current block can be calculated. In addition, different samples to-be-predicted may correspond to different weighting factors, and the weighting factor is used for chroma prediction of the sample to-be-predicted in the current block. Furthermore, the correlation between the current block and the neighbouring area in terms of luma information is fully utilized for chroma prediction of the current block. As such, it is possible to improve accuracy of chroma prediction, save bit rate, and improve coding performance.

In still another embodiment of the disclosure, the embodiment of the disclosure further provides a bitstream. The bitstream is generated by performing bit encoding according to information to-be-encoded. The information to-be-encoded at least includes a residual value of a first colour component of a sample to-be-predicted in a current block.

In the embodiment of the disclosure, after the residual value of the first colour component of the sample to-be-predicted in the current block is transmitted to a decoder by an encoder, the decoder obtains the residual value of the first colour component by decoding, and then can restore a reconstructed value of the first colour component of the sample to-be-predicted in the current block according to a prediction value of the first colour component of the sample to-be-predicted in the current block. In this way, according to colour component information of a neighbouring reference sample and colour component information of the sample to-be-predicted, a weighting factor corresponding to the sample to-be-predicted can be calculated, which can improve accuracy of chroma prediction, save bit rate, and improve coding performance.

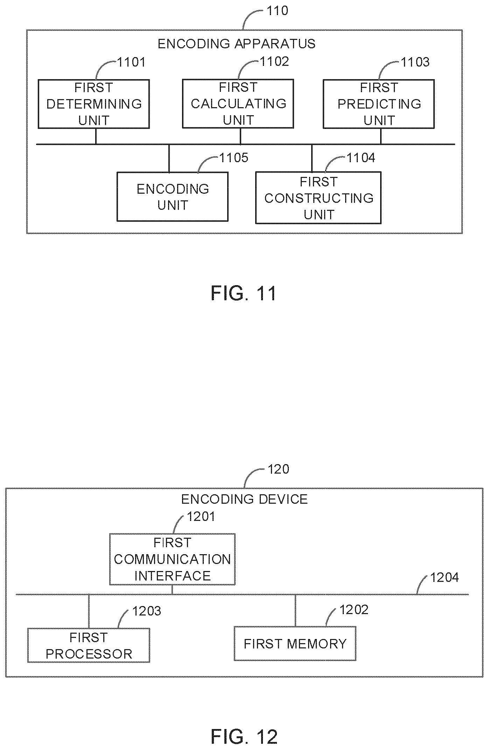

In still another embodiment of the disclosure, referring to FIG. 11, FIG. 11 is a schematic structural diagram of an encoding apparatus provided in embodiments of the disclosure. As illustrated in FIG. 11, the encoding apparatus 110 may include a first determining unit 1101, a first calculating unit 1102, and a first predicting unit 1103. The first determining unit 1101 is configured to determine a reference sample for a current block. The first calculating unit 1102 is configured to determine a weighting factor according to the reference sample. The first predicting unit 1103 is configured to determine a prediction value of a first colour component of a sample to-be-predicted in the current block by weighting a first colour component value of the reference sample according to the weighting factor.

In some embodiments, the first determining unit 1101 is further configured to determine a weighted value of the first colour component value of the reference sample multiplied by the corresponding weighting factor. The first predicting unit 1103 is further configured to set the prediction value of the first colour component of the sample to-be-predicted in the current block to be equal to a sum of N weighted values, where N represents the number of the reference samples, and N is a positive integer.

In some embodiments, the first determining unit 1101 is further configured to determine the reference sample from samples in a neighbouring area of the current block, where the neighbouring area includes at least one of: a top neighbouring area, a top-right neighbouring area, a left neighbouring area, or a bottom-left neighbouring area.

In some embodiments, the first determining unit 1101 is further configured to determine the reference sample by selecting from the samples in the neighbouring area.

In some embodiments, the first determining unit 1101 is further configured to determine a sample location to-be-selected according to a location and/or a colour component intensity of the sample in the neighbouring area; and determine the reference sample from the samples in the neighbouring area according to the sample location to-be-selected.

In some embodiments, the first determining unit 1101 is further configured to determine a first-reference-colour-component parameter according to a first-reference-colour-component relationship between the sample to-be-predicted in the current block and the reference sample. The first calculating unit 1102 is further configured to determine the weighting factor according to the first-reference-colour-component parameter by using a preset first mapping.

In some embodiments, the first mapping is a mapping look-up table between the first-reference-colour-component parameter and a value of the weighting factor.

In some embodiments, the first determining unit 1101 is further configured to determine a value corresponding to the first-reference-colour-component parameter in a preset function relationship of the first mapping; and set the weighting factor to be equal to the value.

In some embodiments, the first determining unit 1101 is further configured to determine a first factor. The first calculating unit 1102 is further configured to determine a first product value according to the first factor and the first-reference-colour-component parameter; and determine a value corresponding to the first product value in the preset function relationship of the first mapping.

In some embodiments, the first determining unit 1101 is further configured to determine an array element value according to a preset mapping look-up table between the first-reference-colour-component parameter, the first factor, and an array element; and determine a value corresponding to the array element value in the preset function relationship of the first mapping.

In some embodiments, the first factor is a preset constant value.

In some embodiments, the first determining unit 1101 is further configured to determine a value of the first factor according to a size parameter of the current block, where the size parameter of the current block includes at least one of: a width of the current block or a height of the current block.

In some embodiments, the first determining unit 1101 is further configured to determine the value of the first factor according to a preset mapping look-up table between the size parameter of the current block and the value of the first factor.

In some embodiments, the first determining unit 1101 is further configured to determine a value of the first factor according to the number of reference samples for the current block.

In some embodiments, the first determining unit 1101 is further configured to determine the value of the first factor according to a preset mapping look-up table between the number of reference samples for the current block and the value of the first factor.

In some embodiments, the first calculating unit 1102 is further configured to set the first product value to be equal to a product of the first factor and the first-reference-colour-component parameter.

In some embodiments, the first calculating unit 1102 is further configured to set the first product value to be equal to a numerical value obtained by right-shifting the first-reference-colour-component parameter, where the number of bits right shifted is equal to the first factor.

In some embodiments, the first calculating unit 1102 is further configured to determine the first product value by performing addition and bit shift on the first-reference-colour-component parameter according to the first factor.

In some embodiments, the first determining unit 1101 is further configured to determine a second factor according to the first colour component value of the reference sample and a first-reference-colour-component value of the reference sample. The first calculating unit 1102 is further configured to set the first product value to a product of the first factor, the first-reference-colour-component parameter, and the second factor.

In some embodiments, the first determining unit 1101 is further configured to determine the second factor by performing least squares calculation on the first colour component value of the reference sample and the first-reference-colour-component value of the reference sample.

In some embodiments, the preset function relationship of the first mapping is a Softmax function.

In some embodiments, the preset function relationship of the first mapping is a weighting function that is in inverse proportion with the first-reference-colour-component parameter.

In some embodiments, the first reference colour component is the first colour component.

In some embodiments, the first reference colour component is a second colour component, where the second colour component is different from the first colour component.

In some embodiments, the first determining unit 1101 is further configured to determine a difference between a first-reference-colour-component value of the reference sample and a first-reference-colour-component value of the sample to-be-predicted; and determine the first-reference-colour-component parameter according to the difference.

In some embodiments, the first determining unit 1101 is further configured to set the first-reference-colour-component parameter to be equal to an absolute value of the difference.

In some embodiments, the first determining unit 1101 is further configured to determine the first-reference-colour-component parameter by using a first neural network model.

In some embodiments, the first determining unit 1101 is further configured to operate as follows. An input of the first neural network model includes a first-reference-colour-component value of the reference sample and a first-reference-colour-component value of the sample to-be-predicted; and an output of the first neural network model includes the first-reference-colour-component parameter.

In some embodiments, referring to FIG. 11, the encoding apparatus 110 may further include a first constructing unit 1104. The first determining unit 1101 is further configured to determine a difference between a first-reference-colour-component value of the reference sample and a first-reference-colour-component value of the sample to-be-predicted in the current block; determine a weighting value of the reference sample to the sample to-be-predicted in the current block according to the difference by using a preset second mapping; and determine a target weighting value of the reference sample to the current block according to the weighting value of the reference sample to the sample to-be-predicted in the current block. The first calculating unit 1102 is further configured to determine a first model parameter and a second model parameter by performing weighted least squares calculation on the first colour component value of the reference sample and the first-reference-colour-component value of the reference sample according to the target weighting value. The first constructing unit 1104 is configured to construct a prediction model according to the first model parameter and the second model parameter. The first predicting unit 1103 is further configured to determine the prediction value of the first colour component of the sample to-be-predicted in the current block by predicting the first colour component of the sample to-be-predicted in the current block with the prediction model.

In some embodiments, the first calculating unit 1102 is further configured to determine the target weighting value of the reference sample to the current block by performing averaging calculation on the weighting value of the reference sample to the sample to-be-predicted in the current block; or determine the target weighting value of the reference sample to the current block by performing summing calculation on the weighting value of the reference sample to the sample to-be-predicted in the current block.

In some embodiments, the first determining unit 1101 is further configured to determine the number of minimum values among absolute values of the differences, based on the difference between the first-reference-colour-component value of the reference sample and the first-reference-colour-component value of the sample to-be-predicted in the current block; and take the number of minimum values as the target weighting value of the reference sample to the current block.

In some embodiments, referring to FIG. 11, the encoding apparatus 110 may further include an encoding unit 1105. The first determining unit 1101 is further configured to determine an original value of the first colour component of the sample to-be-predicted in a current block; and determine a residual value of the first colour component of the sample to-be-predicted in the current block according to the original value of the first colour component and the prediction value of the first colour component. The encoding unit 1105 is configured to encode the residual value of the first colour component of the sample to-be-predicted in the current block, and signal encoded bits obtained into a bitstream.

It can be understood that, in the embodiments of the disclosure, the "unit" can be part of a circuit, part of a processor, part of a program or software, etc., or can be a module, or can be non-modular. In addition, various components in the embodiment can be integrated into one processing unit or can be present as a number of physically separated units, and two or more units can be integrated into one. The integrated unit can be implemented in a form of hardware, or can be implemented in a form of software functional module.

If the integrated units are implemented as software functional modules and sold or used as standalone products, they can be stored in a computer-readable storage medium. Based on such an understanding, the essential technical solution, or the portion that contributes to the related art, or some or all of the technical solution of the disclosure can be embodied as software products. The computer software products can be stored in a storage medium and may include multiple instructions that, when executed, can cause a computer device, e.g., a personal computer, a server, a network device, etc., or a processor to execute some or all operations of the methods described in various embodiments of the disclosure. The above storage medium may include various kinds of media that can store program codes, such as a universal serial bus (USB) flash disk, a mobile hard drive, a read-only memory (ROM), a random access memory (RAM), a magnetic disk, or an optical disk.

Therefore, embodiments of the disclosure provide a computer-readable storage medium. The computer-readable storage medium stores computer programs which, when executed by a first processor, are operable with the first processor to implement the method according to any one of the foregoing embodiments of the disclosure.

Based on the structure of the encoding apparatus 110 and the computer-readable storage medium, referring to FIG. 12, FIG. 12 is a schematic structural diagram illustrating hardware of an encoding device provided in embodiments of the disclosure. As illustrated in FIG. 12, the encoding device 120 may include a first communication interface 1201, a first memory 1202, and a first processor 1203. These components are coupled together via a first bus system 1204. It is understandable that, the first bus system 1204 is configured for connection and communication between these components. In addition to a data bus, the first bus system 1204 further includes a power bus, a control bus, and a status signal bus. However, for the sake of illustration, various buses are marked as the first bus system 1204 in FIG. 12. The first communication interface 1201 is configured for signal reception and transmission during information reception and transmission with other external network elements. The first memory 1202 is configured to store computer programs executable by the first processor 1203. The first processor 1203 is configured to execute the computer programs to implement the following steps: determining a reference sample for a current block; determining a weighting factor according to the reference sample; and determining a prediction value of a first colour component of a sample to-be-predicted in the current block by weighting a first colour component value of the reference sample according to the weighting factor.

It can be understood that, the first memory 1202 in the embodiment of the disclosure can be a volatile memory or a non-volatile memory, or may include both the volatile memory and the non-volatile memory. The non-volatile memory can be a ROM, a programmable ROM (PROM), an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the first memory 1202 of the systems and methods described in the disclosure is intended to include, but is not limited to, these and any other suitable types of memory.

The first processor 1203 can be an integrated circuit chip with signal processing capabilities. During implementation, each step of the foregoing method can be completed by an integrated logic circuit in hardware in the first processor 1203 or an instruction in the form of software. The first processor 1203 can be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor can be a microprocessor, or the processor can be any conventional processor or the like. The steps of the method disclosed in embodiments of the disclosure can be directly implemented by a hardware decoding processor, or can be performed by hardware and software modules in the decoding processor. The software module can be located in a storage medium such as a RAM, a flash memory, a ROM, a PROM, or an electrically erasable programmable memory, registers, and the like. The storage medium is located in the first memory 1202, and the first processor 1203 reads information in the first memory 1202 and completes the steps of the foregoing with the hardware thereof.

It will be appreciated that the embodiments described herein can be implemented in hardware, software, firmware, middleware, microcode, or a combination thereof. For hardware implementation, the processing unit can be implemented in one or more application ASICs, DSPs, DSP devices (DSPDs), programmable logic devices (PLDs), FPGAs, general-purpose processors, controllers, micro-controllers, microprocessors, other electronic units for performing the functionality in the disclosure, or a combination thereof. For software implementation, the techniques described in the disclosure can be implemented by modules (e. g., procedures, functions, etc.) for performing the functionality in the disclosure. The software codes can be stored in the memory and executed by the processor. The memory can be implemented inside or external to the processor.

Optionally, as another embodiment, the first processor 1203 is further configured to execute the computer programs to implement the method described in any of the foregoing embodiments.

The embodiment provides the encoding apparatus. The encoding apparatus may includes the first determining unit, the first calculating unit, and the first predicting unit. In this way, according to colour component information of the neighbouring reference sample and colour component information of the sample to-be-predicted in the current block, the weighting factor corresponding to the sample to-be-predicted can be calculated. In addition, different samples to-be-predicted may correspond to different weighting factors. By using the weighting factor for chroma prediction of the sample to-be-predicted in the current block, it is possible to improve accuracy of chroma prediction, save bit rate, and improve coding performance.

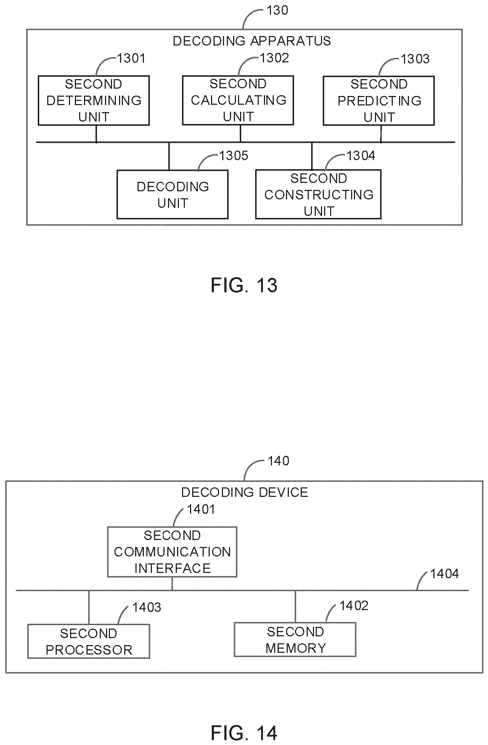

In still another embodiment of the disclosure, based on the same concept as that of the foregoing embodiments, referring to In still another embodiment of the disclosure, based on the same inventive concept as that of the foregoing embodiment, referring to FIG. 13, FIG. 13 is a schematic structural diagram of a decoding apparatus provided in embodiments of the disclosure. As illustrated in FIG. 13, the decoding apparatus 130 may include a second determining unit 1301, a second calculating unit 1302, and a second predicting unit 1303. The second determining unit 1301 is configured to determine a reference sample for a current block. The second calculating unit 1302 is configured to determine a weighting factor according to the reference sample. The second predicting unit 1303 is configured to determine a prediction value of a first colour component of a sample to-be-predicted in the current block by weighting a first colour component value of the reference sample according to the weighting factor.

In some embodiments, the second determining unit 1301 is further configured to determine a weighted value of the first colour component value of the reference sample multiplied by the corresponding weighting factor; and set the prediction value of the first colour component of the sample to-be-predicted in the current block to be equal to a sum of $N$ weighted values, wherein $N$ represents the number of the reference samples, and $N$ is a positive integer.

In some embodiments, the second determining unit 1301 is further configured to determine the reference sample from samples in a neighbouring area of the current block, where the neighbouring area includes at least one of: a top neighbouring area, a top-right neighbouring area, a left neighbouring area, or a bottom-left neighbouring area.

In some embodiments, the second determining unit 1301 is further configured to determine the reference sample by selecting from the samples in the neighbouring area.

In some embodiments, the second determining unit 1301 is further configured to determine a sample location to-be-selected according to a location and/or a colour component intensity of the sample in the neighbouring area; and determine the reference sample from the samples in the neighbouring area according to the sample location to-be-selected.

In some embodiments, the second determining unit 1301 is further configured to determine a first-reference-colour-component parameter according to a first-reference-colour-component relationship between the sample to-be-predicted in the current block and the reference sample. The second calculating unit 1302 is further configured to determine the weighting factor according to the first-reference-colour-component parameter by using a preset first mapping.

In some embodiments, the first mapping is a mapping look-up table between the first-reference-colour-component parameter and a value of the weighting factor.

In some embodiments, the second determining unit 1301 is further configured to determine a value corresponding to the first-reference-colour-component parameter in a preset function relationship of the first mapping; and set the weighting factor to be equal to the value.

In some embodiments, the second determining unit 1301 is further configured to determine a first factor. The second calculating unit 1302 is further configured to determine a first product value according to the first factor and the first-reference-colour-component parameter; and determine a value corresponding to the first product value in the preset function relationship of the first mapping.

In some embodiments, the second determining unit 1301 is further configured to determine an array element value according to a preset mapping look-up table between the first-reference-colour-component parameter, the first factor, and an array element; and determine a value corresponding to the array element value in the preset function relationship of the first mapping.

In some embodiments, the first factor is a preset constant value.

In some embodiments, the second determining unit 1301 is further configured to determine a value of the first factor according to a size parameter of the current block, where the size parameter of the current block includes at least one of: a width of the current block or a height of the current block.

In some embodiments, the second determining unit 1301 is further configured to determine the value of the first factor according to a preset mapping look-up table between the size parameter of the current block and the value of the first factor.

In some embodiments, the second determining unit 1301 is further configured to determine a value of the first factor according to the number of reference samples for the current block.

In some embodiments, the second determining unit 1301 is further configured to determine the value of the first factor according to a preset mapping look-up table between the number of reference samples for the current block and the value of the first factor.

In some embodiments, the second calculating unit 1302 is further configured to set the first product value to be equal to a product of the first factor and the first-reference-colour-component parameter.

In some embodiments, the second calculating unit 1302 is further configured to set the first product value to be equal to a numerical value obtained by right-shifting the first-reference-colour-component parameter, wherein the number of bits right shifted is equal to the first factor.

In some embodiments, the second calculating unit 1302 is further configured to determine the first product value by performing addition and bit shift on the first-reference-colour-component parameter according to the first factor.

In some embodiments, the second determining unit 1301 is further configured to determine a second factor according to the first colour component value of the reference sample and a first-reference-colour-component value of the reference sample. The second calculating unit 1302 is further configured to set the first product value to a product of the first factor, the first-reference-colour-component parameter, and the second factor.

In some embodiments, the second determining unit 1301 is further configured to determine the second factor by performing least squares calculation on the first colour component value of the reference sample and the first-reference-colour-component value of the reference sample.

In some embodiments, the preset function relationship of the first mapping is a Softmax function.

In some embodiments, the preset function relationship of the first mapping is a weighting function that is in inverse proportion with the first-reference-colour-component parameter.

In some embodiments, the first reference colour component is the first colour component.

In some embodiments, the first reference colour component is a second colour component, where the second colour component is different from the first colour component.

In some embodiments, the second determining unit 1301 is further configured to determine a difference between a first-reference-colour-component value of the reference sample and a first-reference-colour-component value of the sample to-be-predicted; and determine the first-reference-colour-component parameter according to the difference.

In some embodiments, the second determining unit 1301 is further configured to set the first-reference-colour-component parameter to be equal to an absolute value of the difference.

In some embodiments, the second determining unit 1301 is further configured to determine the first-reference-colour-component parameter by using a first neural network model.

In some embodiments, the second determining unit 1301 is further configured to operate as follows. An input of the first neural network model input includes a first-reference-colour-component value of the reference sample and a first-reference-colour-component value of the sample to-be-predicted. An output of the first neural network model includes first-reference-colour-component parameter.

In some embodiments, referring to FIG. 13, the decoding apparatus 130 may further include a second constructing unit 1304. The second determining unit 1301 is further configured to determine a difference between a first-reference-colour-component value of the reference sample and a first-reference-colour-component value of the sample to-be-predicted in the current block; determine a weighting value of the reference sample to the sample to-be-predicted in the current block according to the difference by using a preset second mapping; and determine a target weighting value of the reference sample to the current block according to the weighting value of the reference sample to the sample to-be-predicted in the current block. The second calculating unit 1302 is further configured to determine a first model parameter and a second model parameter by performing weighted least squares calculation on the first colour component value of the reference sample and the first-reference-colour-component value of the reference sample according to the target weighting value. The second constructing unit 1304 is configured to construct a prediction model according to the first model parameter and the second model parameter. The second predicting unit 1303 is further configured to determine the prediction value of the first colour component of the sample to-be-predicted in the current block by predicting the first colour component of the sample to-be-predicted in the current block with the prediction model.

In some embodiments, the second calculating unit 1302 is further configured to determine the target weighting value of the reference sample to the current block by performing averaging calculation on the weighting value of the reference sample to the sample to-be-predicted in the current block; or determine the target weighting value of the reference sample to the current block by performing summing calculation on the weighting value of the reference sample to the sample to-be-predicted in the current block.

In some embodiments, the second determining unit 1301 is further configured to determine the number of minimum values among absolute values of the differences, based on the difference between the first-reference-colour-component value of the reference sample and the first-reference-colour-component value of the sample to-be-predicted in the current block; and take the number of minimum values as the target weighting value of the reference sample to the current block.

In some embodiments, referring to FIG. 13, the decoding apparatus 130 may further include a decoding unit 1305. The decoding unit 1305 is configured to parse a bitstream to determine a residual value of the first colour component of the sample to-be-predicted in the current block. The second determining unit 1301 is further configured to determine a reconstructed value of the first colour component of the sample to-be-predicted in the current block according to the residual value of the first colour component and the prediction value of the first colour component.

It can be understood that, in the embodiments of the disclosure, the "unit" can be part of a circuit, part of a processor, part of a program or software, etc., or can be a module, or can be non-modular. In addition, various components in the embodiment can be integrated into one processing unit or can be present as a number of physically separated units, and two or more units can be integrated into one. The integrated unit can be implemented in a form of hardware, or can be implemented in a form of software functional module.

If the integrated units are implemented as software functional modules and sold or used as standalone products, they can be stored in a computer-readable storage medium. Based on such an understanding, embodiments provide a computer-readable storage medium. The computer-readable storage medium stores computer programs which, when executed by a second processor, are operable with the second processor to implement the method according to any one of the foregoing embodiments.

Based on the structure of the foregoing decoding apparatus 130 and the computer-readable storage medium, referring to FIG. 14, FIG. 14 is a schematic structural diagram illustrating hardware of a decoding device provided in embodiments of the disclosure. As illustrated in FIG. 14, the decoding device 140 may include a second communication interface 1401, a second memory 1402, and a second processor 1403. These components are coupled together via a second bus system 1404. It should be understood that, the second bus system 1404 is configured for connection and communication between these components. In addition to a data bus, the second bus system 1404 further includes a power bus, a control bus, and a status signal bus. However, for the sake of illustration, various buses are marked as the second bus system 1404 in FIG. 14. The second communication interface 1401 is configured for signal reception and transmission during information reception and transmission with other external network elements. The second memory 1402 is configured to store computer programs executable by the second processor 1403. The second processor 1403 is configured to execute the computer programs to implement the following steps: determining a reference sample for a current block; determining a weighting factor according to the reference sample; and determining a prediction value of a first colour component of a sample to-be-predicted in the current block by weighting a first colour component value of the reference sample according to the weighting factor.

Optionally, as another embodiment, the second processor 1403 is further configured to execute the computer programs to implement the method described in any of the foregoing embodiments.

It can be understood that the second memory 1402 has a hardware function similar to that of the first memory 1202, and the second processor 1403 has a hardware function similar to that of the first processor 1203, which are not described again herein.

The embodiment provides the decoding apparatus. The decoding apparatus may include a second determining unit, a second calculating unit and a second predicting unit. In this way, according to colour component information of the neighbouring reference sample and colour component information of the sample to-be-predicted in the current block, the weighting factor corresponding to the sample to-be-predicted can be calculated. In addition, different samples to-be-predicted may correspond to different weighting factors. By using the weighting factor for chroma prediction of the sample to-be-predicted in the current block, it is possible to improve accuracy of chroma prediction, save bit rate, and improve coding performance.

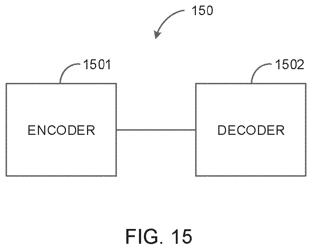

In still another embodiment of the disclosure, referring to FIG. 15, FIG. 15 is a schematic structural diagram of a coding system provided in embodiments of the disclosure. As illustrated in FIG. 15, the coding system 150 may include an encoder 1501 and a decoder 1502. The encoder 1501 can be a device integrating the encoding apparatus 110 in the foregoing embodiment, or can be the encoding device 120 in the foregoing embodiment. The decoder 1502 can be a device integrating the decoding apparatus 130 described in the foregoing embodiment, or can be the decoding device 140 described in the foregoing embodiment.

In the embodiment of the disclosure, in the coding system 150, at the encoder 1501 or the decoder 1502, the weighting factor corresponding to the sample to-be-predicted can be calculated according to colour component information of the neighbouring reference sample and colour component information of the sample to-be-predicted in the current block. In addition, different samples to-be-predicted may correspond to different weighting factors. By using the weighting factor for chroma prediction of the sample to-be-predicted in the current block, it is possible to improve accuracy of chroma prediction, save bit rate, and improve coding performance.

It should be noted that, in the disclosure, the terms "include", "comprise", and "have" as well as variations thereof are intended to cover non-exclusive inclusion, so that a process, method, article, or apparatus that includes a series of elements not only includes those elements, but also includes other elements that are not explicitly listed, or further includes elements inherent to the process, method, article, or apparatus. Unless there are other limitations, an element limited by "including a..." does not exclude the case where there are other same elements in the process, method, article, or apparatus that includes the element.

The sequential numbers in the embodiments of the disclosure are only for illustration, and do not indicate the preference of the embodiments.

The methods disclosed in the method embodiments of the disclosure can be combined arbitrarily without conflicts to obtain new method embodiments.

The features disclosed in the product embodiments of the disclosure can be combined arbitrarily without conflicts to obtain new product embodiments.

The features disclosed in the several method embodiments or device embodiments of the disclosure can be arbitrarily combined without conflicts to obtain new method embodiments or device embodiments.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

Industrial Applicability

In embodiments of the disclosure, at an encoding end or at a decoding end, a reference sample for a current block is determined. A weighting factor is determined according to the reference sample. A prediction value of a first colour component of a sample to-be-predicted in the current block is determined by weighting a first colour component value of the reference sample according to the weighting factor. In this way, according to colour component information of the reference sample for the current block and colour component information of the sample to-be-predicted in the current block, the weighting factor corresponding to the sample to-be-predicted in the current block can be calculated. In addition, different samples to-be-predicted may correspond to different weighting factors. By using the weighting factor for chroma prediction of the sample to-be-predicted in the current block, it is possible to improve accuracy of chroma prediction, save bit rate, and improve coding performance.

**Claims**

1.  A decoding method, comprising:

    determining a reference sample for a current block;
    determining a weighting factor according to the reference sample; and
    determining a prediction value of a first colour component of a sample to-be-predicted in the current block by weighting a first colour component value of the reference sample according to the weighting factor.

2.  The method of claim 1, wherein determining the prediction value of the first colour component of the sample to-be-predicted in the current block by weighting the first colour component value of the reference sample according to the weighting factor comprises:

    determining a weighted value of the first colour component value of the reference sample multiplied by the corresponding weighting factor; and
    setting the prediction value of the first colour component of the sample to-be-predicted in the current block to be equal to a sum of $N$ weighted values, wherein $N$ represents the number of the reference samples, and $N$ is a positive integer.

3.  The method of claim 1, wherein determining the reference sample for the current block comprises:
    determining the reference sample from samples in a neighbouring area of the current block, wherein the neighbouring area comprises at least one of: a top neighbouring area, a top-right neighbouring area, a left neighbouring area, or a bottom-left neighbouring area.

4.  The method of claim 3, further comprising:
    determining the reference sample by selecting from the samples in the neighbouring area.

5.  The method of claim 4, wherein determining the reference sample by selecting from the samples in the neighbouring area comprises:

    determining a sample location to-be-selected according to a location and/or a colour component intensity of the sample in the neighbouring area; and
    determining the reference sample from the samples in the neighbouring area according to the sample location to-be-selected.

6.  The method of claim 1, wherein determining the weighting factor according to the reference sample comprises:

    determining a first-reference-colour-component parameter according to a first-reference-colour-component relationship between the sample to-be-predicted in the current block and the reference sample; and
    determining the weighting factor according to the first-reference-colour-component parameter by using a preset first mapping.

7.  The method of claim 6, wherein determining the weighting factor according to the first-reference-colour-component parameter by using the preset first mapping comprises:
    the first mapping being a mapping look-up table between the first-reference-colour-component parameter and a value of the weighting factor.

8. The method of claim 6, wherein determining the weighting factor according to the first-reference-colour-component parameter by using the preset first mapping comprises:

    determining a value corresponding to the first-reference-colour-component parameter in a preset function relationship of the first mapping; and
    setting the weighting factor to be equal to the value.

9. The method of claim 8, wherein determining the value corresponding to the first-reference-colour-component parameter in the preset function relationship of the first mapping comprises:

    determining a first factor;
    determining a first product value according to the first factor and the first-reference-colour-component parameter; and
    determining a value corresponding to the first product value in the preset function relationship of the first mapping.

10. The method of claim 9, further comprising:

    determining an array element value according to a preset mapping look-up table between the first-reference-colour-component parameter, the first factor, and an array element; and
    determining a value corresponding to the array element value in the preset function relationship of the first mapping.

11. The method of claim 9, wherein determining the first factor comprises:
    the first factor being a preset constant value.

12. The method of claim 9, wherein determining the first factor comprises:
    determining a value of the first factor according to a size parameter of the current block, wherein the size parameter of the current block comprises at least one of: a width of the current block or a height of the current block.

13. The method of claim 12, further comprising:
    determining the value of the first factor according to a preset mapping look-up table between the size parameter of the current block and the value of the first factor.

14. The method of claim 9, wherein determining the first factor comprises:
    determining a value of the first factor according to the number of reference samples for the current block.

15. The method of claim 14, further comprising:
    determining the value of the first factor according to a preset mapping look-up table between the number of reference samples for the current block and the value of the first factor.

16. The method of claim 9, wherein determining the first product value according to the first factor and the first-reference-colour-component parameter comprises:
    setting the first product value to be equal to a product of the first factor and the first-reference-colour-component parameter.

17. The method of claim 9, wherein determining the first product value according to the first factor and the first-reference-colour-component parameter comprises:
    setting the first product value to be equal to a numerical value obtained by right-shifting the first-reference-colour-component parameter, wherein the number of bits right shifted is equal to the first factor.

18. The method of claim 9, wherein determining the first product value according to the first factor and the first-reference-colour-component parameter comprises:
    determining the first product value by performing addition and bit shift on the first-reference-colour-component parameter according to the first factor.

19. The method of claim 9, wherein determining the first product value according to the first factor and the first-reference-colour-component parameter comprises:

> determining a second factor according to the first colour component value of the reference sample and a first-reference-colour-component value of the reference sample; and
> setting the first product value to a product of the first factor, the first-reference-colour-component parameter, and the second factor.

20. The method of claim 19, wherein determining the second factor according to the first colour component value of the reference sample and the first-reference-colour-component value of the reference sample comprises:
determining the second factor by performing least squares calculation on the first colour component value of the reference sample and the first-reference-colour-component value of the reference sample.

21. The method of claim 8, wherein determining the value corresponding to the first-reference-colour-component parameter in the preset function relationship of the first mapping comprises:
the preset function relationship of the first mapping being a Softmax function.

22. The method of claim 8, wherein determining the value corresponding to the first-reference-colour-component parameter in the preset function relationship of the first mapping comprises:
the preset function relationship of the first mapping being a weighting function that is in inverse proportion with the first-reference-colour-component parameter.

23. The method of claim 6, further comprising:
the first reference colour component being the first colour component.

24. The method of claim 6, further comprising:
the first reference colour component being a second colour component, wherein the second colour component is different from the first colour component.

25. The method of claim 6, wherein determining the first-reference-colour-component parameter according to the first-reference-colour-component relationship between the reference sample and the sample to-be-predicted in the current block comprises:

> determining a difference between a first-reference-colour-component value of the reference sample and a first-reference-colour-component value of the sample to-be-predicted; and
> determining the first-reference-colour-component parameter according to the difference.

26. The method of claim 25, wherein determining the first-reference-colour-component parameter according to the difference comprises:
setting the first-reference-colour-component parameter to be equal to an absolute value of the difference.

27. The method of claim 6, wherein determining the first-reference-colour-component parameter according to the first-reference-colour-component relationship between the reference sample and the sample to-be-predicted in the current block comprises:
determining the first-reference-colour-component parameter by using a first neural network model.

28. The method of claim 27, wherein determining the first-reference-colour-component parameter by using the first neural network model comprises:

> an input of the first neural network model comprising a first-reference-colour-component value of the reference sample and a first-reference-colour-component value of the sample to-be-predicted; and
> an output of the first neural network model comprising the first-reference-colour-component parameter.

29. The method of claim 1, further comprising:

> determining a difference between a first-reference-colour-component value of the reference sample and a first-reference-colour-component value of the sample to-be-predicted in the current block;
> determining a weighting value of the reference sample to the sample to-be-predicted in the current block according to the difference by using a preset second mapping;

determining a target weighting value of the reference sample to the current block according to the weighting value of the reference sample to the sample to-be-predicted in the current block;

determining a first model parameter and a second model parameter by performing weighted least squares calculation on the first colour component value of the reference sample and the first-reference-colour-component value of the reference sample according to the target weighting value;

constructing a prediction model according to the first model parameter and the second model parameter; and

determining the prediction value of the first colour component of the sample to-be-predicted in the current block by predicting the first colour component of the sample to-be-predicted in the current block with the prediction model.

30. The method of claim 29, wherein determining the target weighting value of the reference sample to the current block according to the weighting value of the reference sample to the sample to-be-predicted in the current block comprises:

determining the target weighting value of the reference sample to the current block by performing averaging calculation on the weighting value of the reference sample to the sample to-be-predicted in the current block; or

determining the target weighting value of the reference sample to the current block by performing summing calculation on the weighting value of the reference sample to the sample to-be-predicted in the current block.

31. The method of claim 29, further comprising:

determining the number of minimum values among absolute values of the differences, based on the difference between the first-reference-colour-component value of the reference sample and the first-reference-colour-component value of the sample to-be-predicted in the current block; and

taking the number of minimum values as the target weighting value of the reference sample to the current block.

32. The method of claim 1, further comprising:

parsing a bitstream to determine a residual value of the first colour component of the sample to-be-predicted in the current block; and

determining a reconstructed value of the first colour component of the sample to-be-predicted in the current block according to the residual value of the first colour component and the prediction value of the first colour component.

33. An encoding method, comprising:

determining a reference sample for a current block;

determining a weighting factor according to the reference sample; and

determining a prediction value of a first colour component of a sample to-be-predicted in the current block by weighting a first colour component value of the reference sample according to the weighting factor.

34. The method of claim 33, wherein determining the prediction value of the first colour component of the sample to-be-predicted in the current block by weighting the first colour component value of the reference sample according to the weighting factor comprises:

determining a weighted value of the first colour component value of the reference sample multiplied by the corresponding weighting factor; and

setting the prediction value of the first colour component of the sample to-be-predicted in the current block to be equal to a sum of N weighted values, wherein $N$ represents the number of the reference samples, and N is a positive integer.

35. The method of claim 33, wherein determining the reference sample for the current block comprises:
determining the reference sample from samples in a neighbouring area of the current block, wherein the neighbouring area comprises at least one of: a top neighbouring area, a top-right neighbouring area, a left neighbouring area, or a bottom-left neighbouring area.

36. The method of claim 35, further comprising:
determining the reference sample by selecting from the samples in the neighbouring area.

37. The method of claim 36, wherein determining the reference sample by selecting from the samples in the neighbouring area comprises:

determining a sample location to-be-selected according to a location and/or a colour component intensity of the sample in the neighbouring area; and

determining the reference sample from the samples in the neighbouring area according to the sample location to-be-selected.

**38.** The method of claim 33, wherein determining the weighting factor according to the reference sample comprises:

determining a first-reference-colour-component parameter according to a first-reference-colour-component relationship between the sample to-be-predicted in the current block and the reference sample; and

determining the weighting factor according to the first-reference-colour-component parameter by using a preset first mapping.

**39.** The method of claim 38, wherein determining the weighting factor according to the first-reference-colour-component parameter by using the preset first mapping comprises:

the first mapping being a mapping look-up table between the first-reference-colour-component parameter and a value of the weighting factor.

**40.** The method of claim 38, wherein determining the weighting factor according to the first-reference-colour-component parameter by using the preset first mapping comprises:

determining a value corresponding to the first-reference-colour-component parameter in a preset function relationship of the first mapping; and

setting the weighting factor to be equal to the value.

**41.** The method of claim 40, wherein determining the value corresponding to the first-reference-colour-component parameter in the preset function relationship of the first mapping comprises:

determining a first factor;

determining a first product value according to the first factor and the first-reference-colour-component parameter; and

determining a value corresponding to the first product value in the preset function relationship of the first mapping.

**42.** The method of claim 41, wherein further comprising:

determining an array element value according to a preset mapping look-up table between the first-reference-colour-component parameter, the first factor, and an array element; and

determining a value corresponding to the array element value in the preset function relationship of the first mapping.

**43.** The method of claim 41, wherein determining the first factor comprises:

the first factor being a preset constant value.

**44.** The method of claim 41, wherein determining the first factor comprises:

determining a value of the first factor according to a size parameter of the current block, wherein the size parameter of the current block comprises at least one of: a width of the current block or a height of the current block.

**45.** The method of claim 44, further comprising:

determining the value of the first factor according to a preset mapping look-up table between the size parameter of the current block and the value of the first factor.

**46.** The method of claim 41, wherein determining the first factor comprises:

determining a value of the first factor according to the number of reference samples for the current block.

**47.** The method of claim 46, further comprising:

determining the value of the first factor according to a preset mapping look-up table between the number of reference samples for the current block and the value of the first factor.

**48.** The method of claim 41, wherein determining the first product value according to the first factor and the first-reference-colour-component parameter comprises:
setting the first product value to be equal to a product of the first factor and the first-reference-colour-component parameter.

49. The method of claim 41, wherein determining the first product value according to the first factor and the first-reference-colour-component parameter comprises:
setting the first product value to be equal to a numerical value obtained by right-shifting the first-reference-colour-component parameter, wherein the number of bits right shifted is equal to the first factor.

50. The method of claim 41, wherein determining the first product value according to the first factor and the first-reference-colour-component parameter comprises:
determining the first product value by performing addition and bit shift on the first-reference-colour-component parameter according to the first factor.

51. The method of claim 41, wherein determining the first product value according to the first factor and the first-reference-colour-component parameter comprises:

   determining a second factor according to the first colour component value of the reference sample and a first-reference-colour-component value of the reference sample; and
   setting the first product value to a product of the first factor, the first-reference-colour-component parameter, and the second factor.

52. The method of claim 51, wherein determining the second factor according to the first colour component value of the reference sample and the first-reference-colour-component value of the reference sample comprises:
determining the second factor by performing least squares calculation on the first colour component value of the reference sample and the first-reference-colour-component value of the reference sample.

53. The method of claim 40, wherein determining the value corresponding to the first-reference-colour-component parameter in the preset function relationship of the first mapping comprises:
the preset function relationship of the first mapping being a Softmax function.

54. The method of claim 40, wherein determining the value corresponding to the first-reference-colour-component parameter in the preset function relationship of the first mapping comprises:
the preset function relationship of the first mapping being a weighting function that is in inverse proportion with the first-reference-colour-component parameter.

55. The method of claim 38, further comprising:
the first reference colour component being the first colour component.

56. The method of claim 38, further comprising:
the first reference colour component being a second colour component, wherein the second colour component is different from the first colour component.

57. The method of claim 38, wherein determining the first-reference-colour-component parameter according to the first-reference-colour-component relationship between the reference sample and the sample to-be-predicted in the current block comprises:

   determining a difference between a first-reference-colour-component value of the reference sample and a first-reference-colour-component value of the sample to-be-predicted; and
   determining the first-reference-colour-component parameter according to the difference.

58. The method of claim 57, wherein determining the first-reference-colour-component parameter according to the difference comprises:
setting the first-reference-colour-component parameter to be equal to an absolute value of the difference.

59. The method of claim 38, wherein determining the first-reference-colour-component parameter according to the first-reference-colour-component relationship between the reference sample and the sample to-be-predicted in the current block comprises:

determining the first-reference-colour-component parameter by using a first neural network model.

60. The method of claim 59, wherein determining the first-reference-colour-component parameter by using the first neural network model comprises:

an input of the first neural network model comprising a first-reference-colour-component value of the reference sample and a first-reference-colour-component value of the sample to-be-predicted; and
an output of the first neural network model comprising the first-reference-colour-component parameter.

61. The method of claim 33, further comprising:

determining a difference between a first-reference-colour-component value of the reference sample and a first-reference-colour-component value of the sample to-be-predicted in the current block;
determining a weighting value of the reference sample to the sample to-be-predicted in the current block according to the difference by using a preset second mapping;
determining a target weighting value of the reference sample to the current block according to the weighting value of the reference sample to the sample to-be-predicted in the current block;
determining a first model parameter and a second model parameter by performing weighted least squares calculation on the first colour component value of the reference sample and the first-reference-colour-component value of the reference sample according to the target weighting value;
constructing a prediction model according to the first model parameter and the second model parameter; and
determining the prediction value of the first colour component of the sample to-be-predicted in the current block by predicting the first colour component of the sample to-be-predicted in the current block with the prediction model.

62. The method of claim 61, wherein determining the target weighting value of the reference sample to the current block according to the weighting value of the reference sample to the sample to-be-predicted in the current block comprises:

determining the target weighting value of the reference sample to the current block by performing averaging calculation on the weighting value of the reference sample to the sample to-be-predicted in the current block; or
determining the target weighting value of the reference sample to the current block by performing summing calculation on the weighting value of the reference sample to the sample to-be-predicted in the current block.

63. The method of claim 61, further comprising:

determining the number of minimum values among absolute values of the differences, based on the difference between the first-reference-colour-component value of the reference sample and the first-reference-colour-component value of the sample to-be-predicted in the current block; and
taking the number of minimum values as the target weighting value of the reference sample to the current block.

64. The method of claim 33, further comprising:

determining an original value of the first colour component of the sample to-be-predicted in the current block;
determining a residual value of the first colour component of the sample to-be-predicted in the current block according to the original value of the first colour component and the prediction value of the first colour component; and
encoding the residual value of the first colour component of the sample to-be-predicted in the current block, and signalling encoded bits obtained into a bitstream.

65. An encoding apparatus, comprising:

a first determining unit configured to determine a reference sample for a current block;
a first calculating unit configured to determine a weighting factor according to the reference sample; and
a first predicting unit configured to determine a prediction value of a first colour component of a sample to-be-predicted in the current block by weighting a first colour component value of the reference sample according to the weighting factor.

66. An encoding device, comprising a first memory and a first processor, wherein

the first memory is configured to store computer programs executable by the first processor; and
the first processor is configured to execute the computer programs to perform the method any of claims 33 to 64.

67. A decoding apparatus, comprising:

a second determining unit configured to determine a reference sample for a current block;
a second calculating unit is configured to determine a weighting factor according to the reference sample; and
a second predicting unit is configured to determine a prediction value of a first colour component of a sample to-be-predicted in the current block by weighting a first colour component value of the reference sample according to the weighting factor.

68. A decoding device, comprising a second memory and a second processor, wherein

the second memory is configured to store computer programs executable by the second processor; and
the second processor is configured to execute the computer programs to perform the method of any of claims 1 to 32.

69. A computer-readable storage medium, configured to store computer programs which, when executed, are operable to implement the method of any of claims 1 to 32 or implement the method of any of claims 33 to 64.

| TOP NEIGHBOURING AREA | TOP-RIGHT NEIGHBOURING AREA |
|---|---|

| LEFT NEIGHBOURING AREA | CODING BLOCK |
|---|---|
| BOTTOM-LEFT NEIGHBOURING AREA | |

FIG. 1

(a)                         (b)                         (c)

FIG. 2

301
DETERMINE REFERENCE SAMPLES FROM SELECTION AREA

302
DETERMINE THE NUMBER OF VALID REFERENCE SAMPLES

THE NUMBER OF VALID REFERENCE SAMPLES IS 0

303
SET MODEL PARAMETER α TO 0, AND SET β TO DEFAULT VALUE

304
SET CHROMA PREDICTION VALUE TO DEFAULT VALUE

THE NUMBER OF VALID REFERENCE SAMPLES IS 4

305
DETERMINE TWO REFERENCE SAMPLES WITH GREATER LUMA COMPONENT VALUES AND TWO REFERENCE SAMPLES WITH SMALLER LUMA COMPONENT VALUES THROUGH 4 COMPARISONS

306
CALCULATE MEAN POINT CORRESPONDING TO GREATER VALUES AND MEAN POINT CORRESPONDING TO SMALLER VALUES

307
DERIVE MODEL PARAMETERS α AND β ACCORDING TO TWO MEAN POINTS

308
PERFORM CHROMA PREDICTION BY USING PREDICTION MODEL CONSTRUCTED WITH α AND β

FIG. 3

FIG. 4A

FIG. 4B

DETERMINE REFERENCE SAMPLE FOR CURRENT BLOCK — S501

↓

DETERMINE WEIGHTING FACTOR ACCORDING TO REFERENCE SAMPLE — S502

↓

DETERMINE PREDICTION VALUE OF FIRST COLOUR COMPONENT OF SAMPLE TO-BE-PREDICTED IN CURRENT BLOCK BY WEIGHTING FIRST COLOUR COMPONENT VALUE OF REFERENCE SAMPLE ACCORDING TO WEIGHTING FACTOR — S503

FIG. 5

FIG. 6

DETERMINE REFERENCE SAMPLE FOR CURRENT BLOCK — S701

DETERMINE SECOND COLOUR COMPONENT PARAMETER ACCORDING TO SECOND COLOUR COMPONENT RELATIONSHIP BETWEEN SAMPLE TO-BE-PREDICTED IN CURRENT BLOCK AND REFERENCE SAMPLE — S702

PERFORM SCALE ADJUSTMENT ON SECOND COLOUR COMPONENT PARAMETER BASED ON THIRD FACTOR, TO DETERMINE ADJUSTED SECOND COLOUR COMPONENT PARAMETER — S703

DETERMINE WEIGHTING FACTOR ACCORDING TO ADJUSTED SECOND COLOUR COMPONENT PARAMETER BY USING PRESET SECOND MAPPING — S704

DETERMINE PREDICTION VALUE OF FIRST COLOUR COMPONENT OF SAMPLE TO-BE-PREDICTED IN CURRENT BLOCK BY WEIGHTING FIRST COLOUR COMPONENT VALUE OF REFERENCE SAMPLE ACCORDING TO WEIGHTING FACTOR — S705

FIG. 7

DETERMINE REFERENCE SAMPLE FOR CURRENT BLOCK — S701

DETERMINE DIFFERENCE BETWEEN SECOND COLOUR COMPONENT VALUE OF REFERENCE SAMPLE AND SECOND COLOUR COMPONENT VALUE OF SAMPLE TO-BE-PREDICTED IN CURRENT BLOCK — S801

DETERMINE WEIGHTING VALUE OF REFERENCE SAMPLE TO SAMPLE TO-BE-PREDICTED IN CURRENT BLOCK ACCORDING TO DIFFERENCE BY MEANS OF PRESET SECOND MAPPING — S802

DETERMINE TARGET WEIGHTING VALUE OF REFERENCE SAMPLE TO CURRENT BLOCK ACCORDING TO WEIGHTING VALUE OF REFERENCE SAMPLE TO SAMPLE TO-BE-PREDICTED IN CURRENT BLOCK — S803

DETERMINE FIRST MODEL PARAMETER AND SECOND MODEL PARAMETER BY PERFORMING WEIGHTED LEAST SQUARES CALCULATION ON FIRST COLOUR COMPONENT VALUE OF REFERENCE SAMPLE AND FIRST-REFERENCE-COLOUR-COMPONENT VALUE OF REFERENCE SAMPLE ACCORDING TO TARGET WEIGHTING VALUE — S804

CONSTRUCT PREDICTION MODEL ACCORDING TO FIRST MODEL PARAMETER AND SECOND MODEL PARAMETER — S805

DETERMINE PREDICTION VALUE OF FIRST COLOUR COMPONENT OF SAMPLE TO-BE-PREDICTED IN CURRENT BLOCK BY PREDICTING FIRST COLOUR COMPONENT OF SAMPLE TO-BE-PREDICTED IN CURRENT BLOCK BY USING PREDICTION MODEL — S806

FIG. 8

DETERMINE REFERENCE SAMPLE FOR CURRENT BLOCK ⟶ S901

↓

DETERMINE WEIGHTING FACTOR ACCORDING TO REFERENCE SAMPLE ⟶ S902

↓

DETERMINE PREDICTION VALUE OF FIRST COLOUR COMPONENT OF SAMPLE TO-BE-PREDICTED IN CURRENT BLOCK BY WEIGHTING FIRST COLOUR COMPONENT VALUE OF REFERENCE SAMPLE ACCORDING TO WEIGHTING FACTOR ⟶ S903

FIG. 9

DETERMINE REFERENCE SAMPLE FOR CURRENT BLOCK — S1001

DETERMINE SECOND COLOUR COMPONENT PARAMETER ACCORDING TO SECOND COLOUR COMPONENT RELATIONSHIP BETWEEN SAMPLE TO-BE-PREDICTED IN CURRENT BLOCK AND REFERENCE SAMPLE — S1002

PERFORM SCALE ADJUSTMENT ON SECOND COLOUR COMPONENT PARAMETER BASED ON THIRD FACTOR, TO DETERMINE ADJUSTED SECOND COLOUR COMPONENT PARAMETER — S1003

DETERMINE WEIGHTING FACTOR ACCORDING TO ADJUSTED SECOND COLOUR COMPONENT PARAMETER BY USING PRESET SECOND MAPPING — S1004

DETERMINE PREDICTION VALUE OF FIRST COLOUR COMPONENT OF SAMPLE TO-BE-PREDICTED IN CURRENT BLOCK BY WEIGHTING FIRST COLOUR COMPONENT VALUE OF REFERENCE SAMPLE ACCORDING TO WEIGHTING FACTOR — S1005

FIG. 10

FIG. 11

FIG. 12

130

DECODING APPARATUS

1301
SECOND
DETERMINING
UNIT

1302
SECOND
CALCULATING
UNIT

1303
SECOND
PREDICTING
UNIT

1305
DECODING
UNIT

1304
SECOND
CONSTRUCTING
UNIT

FIG. 13

140

DECODING DEVICE

1401
SECOND
COMMUNICATION
INTERFACE

1404

1403
SECOND
PROCESSOR

1402
SECOND
MEMORY

FIG. 14

150

1501

1502

ENCODER

DECODER

FIG. 15

## INTERNATIONAL SEARCH REPORT

| International application No. |
|---|
| **PCT/CN2022/073876** |

| **A.** | **CLASSIFICATION OF SUBJECT MATTER** |
|---|---|

H04N 19/186(2014.01)i;  H04N 19/50(2014.01)i;  H04N 19/159(2014.01)n

According to International Patent Classification (IPC) or to both national classification and IPC

| **B.** | **FIELDS SEARCHED** |
|---|---|

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNTXT; ENTXTC; JVET; CNKI; IEEE; VCN; VEN; ENTXT: 预测, 权重, CCIP, CCLM, 加权, 颜色, 分量, 跨分量, 亮度, 色度, 缩放因子, 映射, predict+, weight, color, component, cross-component, luma, chroma, scaling factor, mapping

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | US 2021160505 A1 (GUANGDONG OPPO MOBILE TELECOMMUNICATIONS CORP., LTD.) 27 May 2021 (2021-05-27) description, paragraphs 0003-0167 | 1-18, 21-28, 32-50, 53-60, 64-69 |
| A | CN 109691102 A (QUALCOMM INC.) 26 April 2019 (2019-04-26) entire document | 1-69 |
| A | Sri Nitchith Akula et al. "Description of SDR, HDR and 360° video coding technology proposal considering mobile application scenario by Samsung, Huawei, GoPro, and HiSilicon(JVET-J0024_v2)" *Joint Video Exploration Team (JVET) 10th Meeting*, 13 April 2018 (2018-04-13), entire document | 1-69 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 October 2022** | **26 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/073876**

| Patent document cited in search report | | | Publication date (day/month/year) | Patent family member(s) | | | Publication date (day/month/year) |
|---|---|---|---|---|---|---|---|
| US | 2021160505 | A1 | 27 May 2021 | RU | 2771350 | C1 | 04 May 2022 |
| | | | | KR | 20210041603 | A | 15 April 2021 |
| | | | | PH | 12021550291 | A1 | 11 October 2021 |
| | | | | SG | 11202101310 P | A | 30 March 2021 |
| | | | | ZA | 202101046 | B | 27 July 2022 |
| | | | | BR | 112021002310 | A2 | 04 May 2021 |
| | | | | US | 2022038699 | A1 | 03 February 2022 |
| | | | | AU | 2018436324 | A1 | 11 March 2021 |
| | | | | IL | 280695 | A | 25 March 2021 |
| | | | | WO | 2020029202 | A1 | 13 February 2020 |
| | | | | CA | 3109014 | A1 | 13 February 2020 |
| | | | | JP | 2022501863 | A | 06 January 2022 |
| | | | | EP | 3823284 | A1 | 19 May 2021 |
| CN | 109691102 | A | 26 April 2019 | JP | 2019525679 | A | 05 September 2019 |
| | | | | WO | 2018045207 | A1 | 08 March 2018 |
| | | | | KR | 20190042579 | A | 24 April 2019 |
| | | | | BR | 112019003603 | A2 | 21 May 2019 |
| | | | | EP | 3507984 | A1 | 10 July 2019 |
| | | | | US | 2018063527 | A1 | 01 March 2018 |

Form PCT/ISA/210 (patent family annex) (January 2015)